# EUROPEAN PATENT APPLICATION

(11) **EP 4 851 794 A1**
(43) Date of publication of application: **09.12.2026**
(21) Application number: 25902942.9
(22) Date of filing: 16.09.2025
(51) Int. Cl.: G06F 9/451

(54) **DISPLAY METHOD AND RELATED APPARATUS**

(30) Priority: 09.12.2024 CN 202411803573
(71) Applicant: Huawei Technologies Co., Ltd., Shenzhen, Guangdong 518129 (CN)
(72) Inventor: ZHU, Pei, Shenzhen, Guangdong 518129 (CN); HUANG, Decai, Shenzhen, Guangdong 518129 (CN)
(74) Representative: Goddar, Heinz J.
(86) International application number: PCT/CN2025/121685
(87) International publication number: WO 2026/123863

(57) **Abstract**

This application provides a display method and a related apparatus. The method is applied to an electronic device including a foldable display. The display includes a first display area and a second display area that do not overlap. When the electronic device is in a bent state, an angle between a plane on which the first display area is located and a plane on which the second display area is located is less than 180 degrees, an intersection line between the two planes is a central axis of the display, and the first display area and the second display area are respectively located on different sides of the central axis. The method includes: when the electronic device is in an unfolded state, displaying a first application interface in a third display area that crosses the central axis of the display; and displaying the first application interface in the first display area or the second display area in response to the electronic device changing from the unfolded state to the bent state. The electronic device may intelligently choose, based on a physical state, whether to display an application interface across the central axis, to intelligently avoid displaying in a bent area.

## Description

This application claims priority to Chinese Patent Application No. 202411803573.8, filed with the China National Intellectual Property Administration on December 9, 2024 and entitled "DISPLAY METHOD AND RELATED APPARATUS", which is incorporated herein by reference in its entirety.

### TECHNICAL FIELD

This application relates to the field of computer technologies, and in particular, to a display method and a related apparatus.

### BACKGROUND

Many manufacturers have launched foldable electronic devices (for example, foldable computers). In a foldable electronic device, an entire flexible display may serve as a display device, and the flexible display is foldable. The flexible display may be in the following physical states: an unfolded state, a bent state, and a folded state. For example, when the foldable electronic device is in the unfolded state, the foldable electronic device may serve as a large tablet computer; and when the foldable electronic device is in the bent state or the folded state, the foldable electronic device may serve as a notebook computer. However, when the foldable electronic device is in the bent state or the folded state, the foldable electronic device does not avoid displaying in a bent area of the flexible display when displaying a user interface on the flexible display, and it is difficult for a user to perform an operation on a control displayed in the bent area. This leads to inconvenience for a user operation, and this manner of displaying also causes damage to the bent area.

### SUMMARY

This application discloses a display method and a related apparatus, to enable a foldable electronic device to intelligently avoid displaying in a bent area of a foldable display, to address user operational inconvenience and damage to the bent area.

According to a first aspect, this application provides a display method, applied to an electronic device. The electronic device includes a foldable display. The display includes a first display area and a second display area. When the electronic device is in an unfolded state, the first display area and the second display area are on a same plane. When the electronic device is in a bent state, an angle between a plane on which the first display area is located and a plane on which the second display area is located is less than 180 degrees. When the electronic device is in the bent state, an intersection line between the plane on which the first display area is located and the plane on which the second display area is located is a central axis of the display. The first display area and the second display area are respectively located on different sides of the central axis, and the first display area does not overlap the second display area. The method includes: when the electronic device is in the unfolded state, displaying a first application interface in a third display area of the display, where the third display area includes two display areas that are respectively located on different sides of the central axis; and displaying the first application interface in the first display area or the second display area in response to the electronic device changing from the unfolded state to the bent state.

In some examples, the display includes a bent area, the bent area is located in a bending part of the display, the central axis of the display is located in the bending part of the display, and the bent area includes display areas respectively located on different sides of the central axis of the display, in other words, the bent area is a display area crossing the central axis of the display. The first display area is a display area located on a first side of the central axis of the display. The second display area is a display area located on a second side of the central axis of the display. The first side is different from the second side. Neither the first display area nor the second display area crosses the central axis of the display.

In the foregoing method, when the electronic device is in the unfolded state, the electronic device displays the first application interface across the central axis; and when the electronic device is in the bent state, the electronic device does not display the first application interface across the central axis, but displays the first application interface in a display area on one side of the central axis. This can avoid a case that the electronic device displays an application interface across the central axis in the bent state, without affecting normal display in a display area on the other side of the central axis. Therefore, the electronic device may intelligently choose, based on a change in a physical state, whether to display an application interface across the central axis, to intelligently avoid displaying in the bent area of the display, to address user operational inconvenience and damage to the bent area.

In a possible implementation, the first application interface is a first application window displayed in a window form in a first application; or the first application interface is a maximized application interface displayed in a maximized form in the first application; or the first application interface is a first split-screen interface, the first split-screen interface includes a plurality of split-screen windows, and the plurality of split-screen windows on the first split-screen interface include a split-screen window of the first application.

In some examples, a size of an application window is less than a size of the maximized application interface, and a size of a split-screen window is less than the size of the maximized application interface. For example, when the first application displays the first application interface in the first display area, if the first application interface is the maximized application interface, a size of the first application interface is the same as a size of the first display area; or if the first application interface is the first application window or a split-screen window on the first split-screen interface, a size of the first application interface is less than a size of the first display area.

In some examples, when the electronic device displays a plurality of application windows, any two of the plurality of application windows partially or fully overlap, or do not overlap. In some examples, when the electronic device displays the first split-screen interface, any two split-screen windows on the first split-screen interface do not overlap.

In the foregoing method, the first application interface may be displayed in a plurality of modes. Regardless of a display mode of the first application interface, after the electronic device changes from the unfolded state to the bent state, the first application interface may be displayed in a display area on one side of the central axis, without changing the display mode of the first application interface. This provides consistent display effect of the first application interface in different physical states, and improves user experience.

In a possible implementation, the display further includes a fourth display area (for example, the bent area), the fourth display area is located in the bending part of the display, the fourth display area includes a fifth display area and a sixth display area that are respectively located on different sides of the central axis, an intersection line between the fifth display area and the sixth display area is the central axis, the fourth display area does not overlap the first display area, and the fourth display area does not overlap the second display area.

In the foregoing method, after the electronic device changes from the unfolded state to the bent state, the first display area or the second display area in which the first application interface is displayed does not overlap the fourth display area (namely, the bent area), to be specific, none of content of an application interface is displayed in the bent area. This further avoids inconvenience for a user operation and damage to the bent area.

In a possible implementation, the display further includes a fourth display area (for example, the bent area), the fourth display area is located in the bending part of the display, the fourth display area includes a fifth display area and a sixth display area that are respectively located on different sides of the central axis, an intersection line between the fifth display area and the sixth display area is the central axis, the fifth display area partially overlaps the first display area, and the sixth display area partially overlaps the second display area.

In some examples, an intersection line between the first display area and the second display area is the central axis. In some other examples, the first display area and the second display area do not intersect.

In the foregoing method, after the electronic device changes from the unfolded state to the bent state, the first display area or the second display area in which the first application interface is displayed partially overlaps the fourth display area (namely, the bent area), but neither the first display area nor the second display area crosses the central axis. This avoids inconvenience for a user operation and damage to the bent area, and also improves utilization of a display area, so that display effect is more harmonious.

In a possible implementation, the fifth display area partially overlaps the first display area, and the sixth display area partially overlaps the second display area. In response to the electronic device changing from the unfolded state to the bent state, the electronic device displays the first application interface in the first display area (the first display area is used as an example for description), where the first display area includes a seventh display area and an eighth display area, the seventh display area does not overlap the fifth display area, the eighth display area overlaps the fifth display area (for example, the eighth display area is the fifth display area), and a title bar of the first application interface is displayed in the seventh display area.

In some examples, the title bar on the first application interface is used to implement at least one of the following: moving the first application interface, maximizing the first application interface (to be specific, controlling the first application interface to be displayed as the maximized application interface), controlling the first application interface to be displayed in a form of an application window, minimizing the first application interface (for example, controlling the first application interface not to be displayed), and closing the first application interface.

In the foregoing method, after the electronic device changes from the unfolded state to the bent state, when displaying the first application interface in the first display area, the electronic device displays key content (the title bar is used as an example for description) of the first application interface in the seventh display area that is in the first display area and that does not overlap the fourth display area (namely, the bent area), and does not display the key content of the first application interface in the fourth display area. Therefore, the electronic device intelligently avoids displaying key content of an application interface in the bent area of the display, to avoid a case that it is quite difficult for a user to perform an operation on the key content of the first application interface, and ensure both operation experience of the user and display effect.

In a possible implementation, the fourth display area does not overlap the first display area, the fourth display area does not overlap the second display area, and the first application interface is the first application window displayed in the window form in the first application. The method further includes: when the electronic device is in the bent state and displays the first application window in the first display area, receiving a first input of moving the first application window by the user; and when all content of a predicted first application window obtained through movement in response to the first input is located in the first display area, displaying the first application window obtained through movement at a first display position in the first display area, where the first display position is a display position of the predicted first application window obtained through movement in response to the first input; or when a predicted first application window obtained through movement in response to the first input exceeds the first display area, displaying the first application window obtained through movement in the second display area.

In the foregoing method, when the electronic device moves the first application window in the bent state, if the predicted first application window obtained through movement is still in the first display area in which the first application window is previously located, a display position of the first application window obtained through movement is not additionally modified; or if a part or all content of the predicted first application window obtained through movement exceeds the first display area, for example, a part of content is located in the fourth display area, a display position of the first application window obtained through movement is additionally modified, to make the first application window be displayed in the second display area on the other side of the central axis. Therefore, the electronic device may intelligently choose, based on movement of an application window, to display the application window in the first display area or the second display area, to avoid displaying in the bent area of the display in a movement scenario, to further address user operational inconvenience and damage to the bent area.

In a possible implementation, the fifth display area partially overlaps the first display area, the sixth display area partially overlaps the second display area, and the first application interface is the first application window displayed in the window form in the first application. The method further includes: when the electronic device is in the bent state and displays the first application window in the first display area, receiving a second input of moving the first application window by the user; and when a predicted first application window obtained through movement in response to the second input is located in the first display area and a title bar of the predicted first application window obtained through movement in response to the second input does not overlap the fourth display area, displaying the first application window obtained through movement at a second display position in the first display area, where the second display position is a display position of the predicted first application window obtained through movement in response to the second input; or when a predicted first application window obtained through movement in response to the second input exceeds the first display area and/or a title bar of the predicted first application window obtained through movement in response to the second input overlaps the fourth display area, displaying the first application window obtained through movement in the second display area.

In some examples, the second display area includes a display area that does not overlap the sixth display area, and a display area that overlaps the sixth display area. When displaying the first application window obtained through movement in the second display area, the electronic device displays key content (the title bar is used as an example for description) of the first application window in the display area that does not overlap the sixth display area. Therefore, in a movement scenario, the electronic device may also intelligently avoid displaying key content of an application interface in the bent area of the display, to avoid a case that it is quite difficult for the user to perform an operation on the key content of the first application interface, and ensure both operation experience of the user and display effect.

In the foregoing method, when choosing whether to additionally modify a display position of the first application window obtained through movement, the electronic device may comprehensively consider whether the predicted first application window obtained through movement exceeds the first display area in which the first application window is previously located, and whether the key content (the title bar is used as an example for description) of the predicted first application window obtained through movement is displayed in the bent area. Therefore, the electronic device may intelligently choose, based on movement of an application window, to display the application window in the first display area or the second display area, to further address user operational inconvenience and damage to the bent area.

In a possible implementation, the method further includes: when the electronic device is in the bent state and displays the first application interface in the first display area, receiving a fourth input of accessing a second application interface by the user; and displaying the second application interface in the first display area in response to the fourth input.

In some examples, the fourth input is an input performed on a control in the first display area. In some examples, the fourth input is an input performed on a control on the first application interface. In some examples, the first application interface and the second application interface belong to different application interfaces of a same application. Therefore, the second application interface may be understood as a sub-interface of the first application interface.

In the foregoing method, when the electronic device displays the first application interface in the first display area, if receiving a fourth input related to the current first display area, for example, a fourth input related to the first application interface displayed in the current first display area, the electronic device displays the second application interface corresponding to the fourth input in the current first display area, instead of displaying the second application interface in the middle of the display across the central axis according to a default rule, to further address user operational inconvenience and damage to the bent area. In this application, display is not performed in the second display area, and displaying of displayed content in the second display area is not affected, so that user experience is improved.

In a possible implementation, the first application interface is the first application window displayed in the window form in the first application, or the first application interface is a first maximized application interface displayed in a maximized form in the first application. The method further includes: when the electronic device is in the bent state and displays the first application interface in the first display area, receiving a fifth input of controlling, by the user, the first application interface to be displayed in a split-screen form; and displaying a second split-screen interface in the first display area in response to the fifth input, where the second split-screen interface includes a plurality of split-screen windows, and the plurality of split-screen windows on the second split-screen interface include a split-screen window obtained by displaying the first application interface in the split-screen form.

In some examples, the plurality of split-screen windows on the second split-screen interface further include a split-screen window of a second application, and the split-screen window obtained by displaying the first application interface in the split-screen form does not overlap the split-screen window of the second application.

In the foregoing method, when the electronic device displays the first application interface in the first display area, if receiving the fifth input of controlling the first application interface to be displayed in the split-screen form, the electronic device displays the corresponding second split-screen interface in the current first display area, instead of displaying the second split-screen interface on the entire display according to a default rule, for example, displaying each of the plurality of split-screen windows across the central axis. This further avoids inconvenience for a user operation and damage to the bent area, without affecting displaying of displayed content in the second display area, and better meets a user requirement.

In a possible implementation, the first application interface is the first application window displayed in the window form in the first application; or the first application interface is the first split-screen interface, the first split-screen interface includes the plurality of split-screen windows, and the plurality of split-screen windows on the first split-screen interface include the split-screen window of the first application. The method further includes: when the electronic device is in the bent state and displays the first application interface in the first display area, receiving a sixth input of controlling, by the user, the first application window or the split-screen window of the first application to be displayed in a maximized form; and displaying a second maximized application interface of the first application in the first display area in response to the sixth input, where the second maximized application interface is obtained by displaying the first application window or the split-screen window of the first application in the maximized form.

In the foregoing method, when the electronic device displays the first application interface in the first display area, if receiving the sixth input of controlling the first application window or a split-screen window on the first application interface to be displayed in the maximized form, the electronic device displays the corresponding second maximized application interface in the current first display area, instead of displaying the second maximized application interface on the entire display according to a default rule. This further avoids inconvenience for a user operation and damage to the bent area, without affecting displaying of displayed content in the second display area, and better meets a user requirement.

In a possible implementation, the method further includes: when the electronic device is in the bent state, displaying a desktop of the electronic device in the first display area and the second display area, where any control on the desktop is located in a display area on one side of the central axis, for example, located in the first display area or the second display area.

In the foregoing method, the electronic device in the bent state may display the desktop of the electronic device on the entire display, and each control on the desktop is not displayed across the central axis. This resolves a problem that an operable control on the desktop is displayed in the bent area of the display. Therefore, when the electronic device is in the bent state, the user can conveniently perform a touch operation on the operable control on the desktop, so that operation experience of the user is improved. In addition, poor display effect such as visual reflection is avoided, so that user experience is further improved. In this application, damage to the bent area is further reduced.

In a possible implementation, when the first application interface has a historical display area in the bent state, the electronic device displays the first application interface in the historical display area in response to the electronic device changing from the unfolded state to the bent state, where the historical display area is the first display area or the second display area; or when the first application interface has no historical display area in the bent state, the electronic device displays the first application interface in a preset default display area in response to the electronic device changing from the unfolded state to the bent state, where the default display area is the first display area or the second display area.

In some examples, before the electronic device changes from the unfolded state to the bent state, the first application interface is displayed in a specific display area when the electronic device is in the bent state. In this case, the first application interface has a historical display area in the bent state, and the display area is the historical display area.

In the foregoing method, when the electronic device changes from the unfolded state to the bent state, a display area for displaying the first application interface may be determined based on a historical use scenario of the user. This better conforms to a historical use habit of the user, and improves user experience.

In a possible implementation, the electronic device is in the unfolded state and displays the first application interface in the third display area of the display, where the title bar of the first application interface is displayed in a ninth display area in the third display area. In response to the electronic device changing from the unfolded state to the bent state, when the ninth display area is located on the first side of the central axis, the electronic device displays the first application interface in the first display area on the first side of the central axis; or when the ninth display area is located on the second side of the central axis, the electronic device displays the first application interface in the second display area on the second side of the central axis.

In the foregoing method, the electronic device may determine a display area of the first application interface in the bent state based on a display area in which key content (the title bar is used as an example for description) of the first application interface is located in the unfolded state, so that display effect in the bent state is closer to display effect in the unfolded state, to facilitate viewing by the user.

In a possible implementation, when the electronic device is in the unfolded state, a first display (display) maintained by the electronic device is used for the electronic device to display an application interface, a size of the first display is the same as a size of the display, and the first display is software display corresponding to the display. When the electronic device is in the bent state, a second display and a third display that are maintained by the electronic device are used for the electronic device to display an application interface, a sum of a size of the second display and a size of the third display is less than or equal to a size of the display, the second display and the third display are software displays corresponding to the display, the second display corresponds to the first display area, and the third display corresponds to the second display area.

In some examples, when the electronic device is in the unfolded state, a system (for example, a module for displaying the desktop) of the electronic device and an application of the electronic device sense the first display; and when the electronic device is in the bent state, the system of the electronic device senses the first display, and the application of the electronic device senses the second display and/or the third display.

In the foregoing method, the application of the electronic device senses different displays in different physical states. Therefore, in the unfolded state, an application interface may be displayed on the display corresponding to the first display; and in the bent state, an application interface may be displayed in the first display area corresponding to the second display or the second display area corresponding to the third display. In this way, "allocation" of display areas is implemented, to reduce an amount of application adaptation and achieve higher product availability.

According to a second aspect, this application provides an electronic device, including a transceiver, a processor, and a memory. The memory is configured to store a computer program. The processor invokes the computer program, to enable the electronic device to perform the display method according to any one of the first aspect or the implementations of the first aspect.

According to a third aspect, this application provides a computer storage medium, including a computer program. When the computer program is executed by a processor, the display method according to any one of the first aspect or the implementations of the first aspect is implemented.

According to a fourth aspect, this application provides a computer storage medium, including a computer program. When the computer program is executed by a processor, the display method according to any one of the first aspect or the implementations of the first aspect is implemented.

According to a fifth aspect, this application provides a chip system, including a processing circuit and an interface circuit. The interface circuit is configured to receive code instructions and transmit the code instructions to the processing circuit. The processing circuit is configured to run the code instructions to perform the display method according to any one of the first aspect or the implementations of the first aspect.

According to a sixth aspect, this application provides an electronic device. The electronic device includes the method or the apparatus for performing any aspect or any implementation of this application. The electronic device is, for example, a chip.

It should be understood that descriptions of technical features, technical solutions, beneficial effects, or similar languages in this application do not imply that all features and advantages can be implemented in any single implementation. On the contrary, it can be understood that descriptions of features or beneficial effects mean that at least one implementation includes specific technical features, technical solutions, or beneficial effects. Therefore, descriptions of technical features, technical solutions, or beneficial effects in this application do not necessarily belong to a same implementation. Further, the technical features, the technical solutions, and the beneficial effects described in this application may be combined in any appropriate manner. Persons skilled in the art are to understand that this application may be implemented without one or more specific technical features, technical solutions, or beneficial effects in a specific implementation. In another implementation, additional technical features and beneficial effects may be further identified in a specific implementation that does not indicate all implementations.

### BRIEF DESCRIPTION OF DRAWINGS

The following describes the accompanying drawings used in this application.
FIG. 1 is a diagram of a hardware structure of an electronic device 100 according to this application;
FIG. 2 is a diagram of a software architecture of an electronic device 100 according to this application;
FIG. 3A to FIG. 3E are diagrams of some physical states of an electronic device 100 according to this application;
FIG. 4A and FIG. 4B are diagrams of example user interfaces displayed when an electronic device 100 switches from an unfolded state to a bent state;
FIG. 5A to FIG. 5C are diagrams of user interfaces displayed when an electronic device 100 switches from an unfolded state to a bent state according to this application;
FIG. 5D to FIG. 5F are diagrams of other user interfaces displayed when an electronic device 100 switches from an unfolded state to a bent state according to this application;
FIG. 5G to FIG. 5I are diagrams of other user interfaces displayed when an electronic device 100 switches from an unfolded state to a bent state according to this application;
FIG. 6A and FIG. 6B are diagrams of other user interfaces displayed when an electronic device 100 switches from an unfolded state to a bent state according to this application;
FIG. 6C and FIG. 6D are diagrams of other user interfaces displayed when an electronic device 100 switches from an unfolded state to a bent state according to this application;
FIG. 7 is a diagram of a user interface on an electronic device 100 in a bent state according to this application;
FIG. 8A and FIG. 8B are diagrams of user interfaces on which a user moves/drags an application window according to this application;
FIG. 8C is a diagram of another user interface on which a user moves/drags an application window according to this application;
FIG. 9A to FIG. 9C are a schematic flowchart of a display method according to this application;
FIG. 10A is a diagram of a software architecture of an electronic device 100 in an unfolded state according to this application;
FIG. 10B is a diagram of a software architecture of an electronic device 100 in a bent state according to this application;
FIG. 11A to FIG. 11D are diagrams of display modes of some application interfaces in different physical states according to this application;
FIG. 12 is a schematic flowchart of another display method according to this application;
FIG. 13 is a schematic flowchart of another display method according to this application;
FIG. 14A and FIG. 14B are a schematic flowchart of another display method according to this application; and
FIG. 15A and FIG. 15B are a schematic flowchart of another display method according to this application.

### DESCRIPTION OF EMBODIMENTS

The following describes the technical solutions in embodiments of this application with reference to the accompanying drawings. Terms used in implementations of embodiments of this application are merely intended to describe specific embodiments of this application, but not to limit this application.

In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The terms "first" and "second" used below are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, "a plurality of" means two or more than two, unless otherwise specified.

In embodiments of this application, an electronic device 100 may be equipped with a foldable display (which may be referred to as a foldable screen), and the electronic device 100 may be referred to as a foldable electronic device 100. Folding of the foldable display may also be referred to as folding of the electronic device 100, and a physical state of the foldable display may also be referred to as a physical state of the electronic device 100. For ease of description, in the following embodiments, the foldable electronic device 100 is referred to as an electronic device 100 for description.

In embodiments of this application, the electronic device 100 may be a personal computer (personal computer, PC), for example, a tablet computer, a handheld computer, a desktop computer, a laptop computer, an ultra-mobile personal computer (ultra-mobile personal computer, UMPC), or a netbook. In addition, the electronic device 100 may alternatively be a mobile terminal such as a mobile phone, or the electronic device 100 may be a smart home appliance such as a smart television or a smart screen, or the electronic device 100 may be a vehicle-mounted device or a smart city device. A specific type of the electronic device 100 is not particularly limited in embodiments of this application.

It can be understood that a structure shown in embodiments of this application does not constitute a specific limitation on the electronic device 100. In some other embodiments of this application, the electronic device 100 may include more or fewer components than those shown in the figure, or some components may be combined, or some components may be split, or the components may be arranged differently. The components shown in the figure may be implemented by using hardware, software, or a combination of software and hardware.

The following describes an example electronic device 100 provided in embodiments of this application.

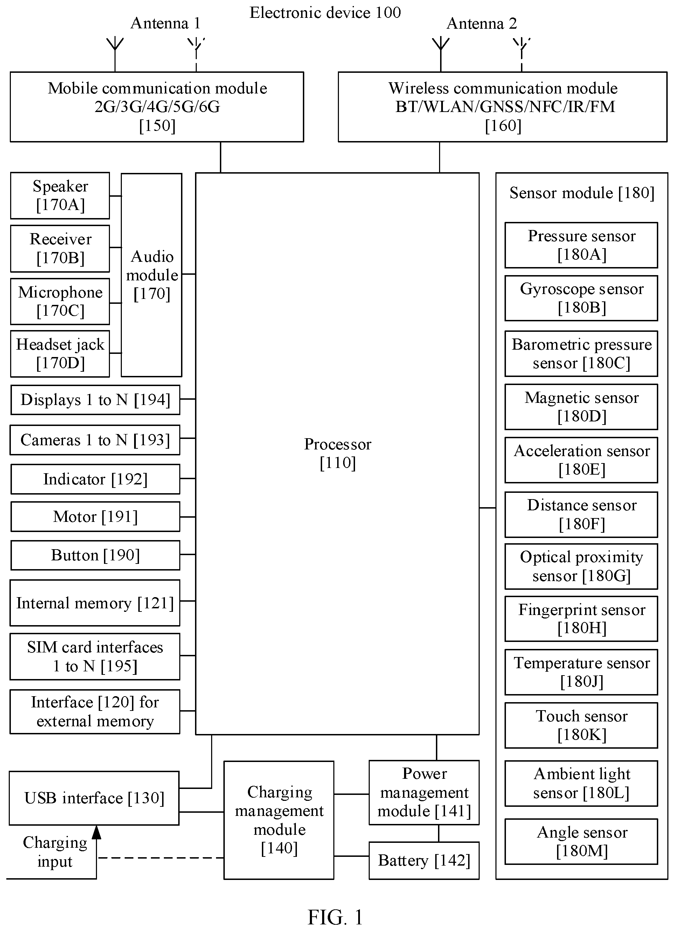

FIG. 1 is a diagram of an example hardware structure of an electronic device 100.

As shown in FIG. 1, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, an angle sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a timing signal, to control instruction fetching and instruction execution.

A memory may be further disposed in the processor 110 to store instructions and data. In an implementation, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In another implementation, the power management module 141 may alternatively be disposed in the processor 110. In another implementation, the power management module 141 and the charging management module 140 may alternatively be disposed in a same component.

A wireless communication function of the electronic device 100 may be implemented by the antenna 1, the antenna 2, the mobile communication module 150, the wireless communication module 160, the modem processor, the baseband processor, and the like. In an implementation, the electronic device 100 may be connected to and communicate with another electronic device through the wireless communication function, and display a dynamic ring on a display of the another electronic device. In some examples, the another electronic device may be a wearable device, including, for example, but not limited to, a smart band, a smartwatch, or smart glasses. The wearable device displays the dynamic ring, so that a user can obtain event progress more conveniently, to further improve efficiency of obtaining information by the user.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In another implementation, the antenna may be used in combination with a tuning switch.

The mobile communication module 150 may provide a solution applied to the electronic device 100 for wireless communication such as a second-generation (second-generation, 2G) mobile communication technology, a third-generation (third-generation, 3G) mobile communication technology, a fourth-generation (fourth-generation, 4G) mobile communication technology, a fifth-generation (fifth-generation, 5G) mobile communication technology, or a sixth-generation (sixth-generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In an implementation, at least some functional modules of the mobile communication module 150 may be disposed in the processor 110. In an implementation, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In an implementation, the modem processor may be an independent component. In another implementation, the modem processor may be independent of the processor 110, and is disposed in a same component as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In an implementation, in the electronic device 100, the antenna 1 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In an implementation, the electronic device 100 may include one or N displays 194, where N is a positive integer greater than 1.

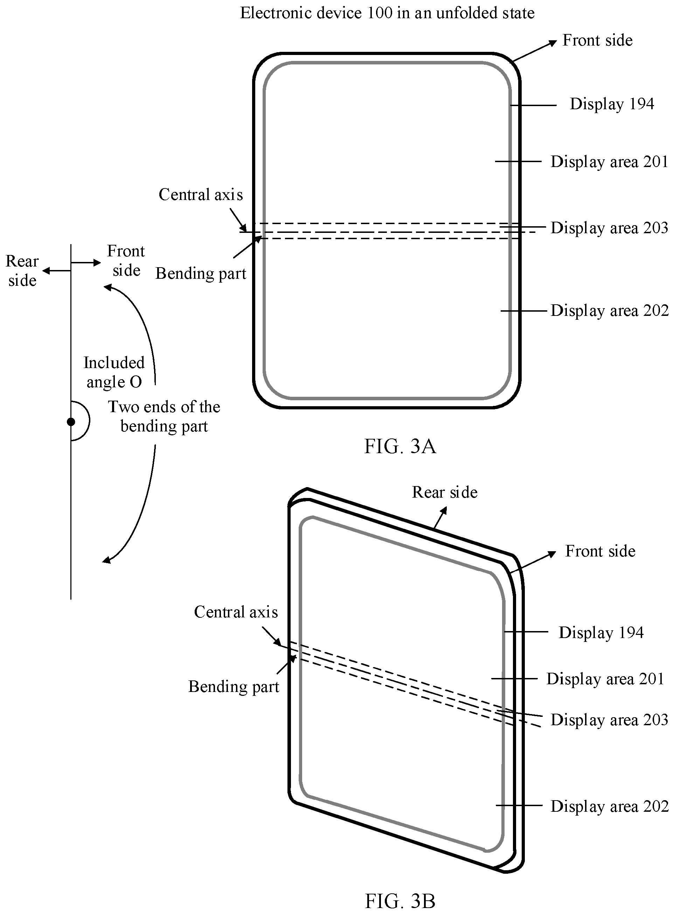

In an implementation, the display 194 of the electronic device 100 is a foldable display, and is configured to display a graphical user interface (graphical user interface, GUI). The GUI may also be referred to as a user interface. A physical state of the electronic device 100 may include an unfolded state, a bent state, and a folded state. When the electronic device 100 is in the unfolded state, the display 194 may be in an unfolded state. When the electronic device 100 is in the bent state or the folded state, the display 194 may be bent and divided into two display areas. Planes on which the two display areas are located intersect, and an intersection line is a central axis of the display 194. Therefore, the two display areas are located on different sides of the central axis of the display 194. For examples of the physical state of the electronic device 100, refer to FIG. 3A to FIG. 3E.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and the like of the image. The ISP may further optimize parameters such as exposure and color temperature of an image shooting scene. In an implementation, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV.

In an implementation, the electronic device 100 may include one camera 193. The camera 193 and the display 194 may be located on a same side of the electronic device 100, or may be located on different sides of the electronic device 100. In another implementation, the electronic device 100 may include N cameras 193, where N is a positive integer greater than 1. The N cameras 193 and the display 194 may be located on different sides of the electronic device 100, or at least one of the N cameras 193 and the display 194 may be located on a same side of the electronic device 100.

The interface 120 for external memory may be used for connecting an external memory card, for example, a microSD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing or recording, through the audio module 170, the speaker 170A, the receiver 170B, the microphone 170C, the headset jack 170D, the application processor, and the like. The audio module 170 is configured to convert digital audio information into an analog audio signal for output, and is also configured to convert an analog audio input into a digital audio signal. The audio module 170 may be further configured to encode and decode an audio signal. In an implementation, the audio module 170 may be disposed in the processor 110, or some functional modules of the audio module 170 are disposed in the processor 110. The speaker 170A, also referred to as a "loudspeaker", is configured to convert an audio electrical signal into a sound signal. The electronic device 100 may be used to listen to music or answer a call in a hands-free mode through the speaker 170A. The receiver 170B, also referred to as an "earpiece", is configured to convert an audio electrical signal into a sound signal. When a call is answered or a voice message is listened to through the electronic device 100, the receiver 170B may be put close to a human ear to listen to a voice. The microphone 170C, also referred to as a "mike" or a "mic", is configured to convert a sound signal into an electrical signal. When making a call or sending a voice message, the user may move the mouth of the user near the microphone 170C to make a sound, to input a sound signal to the microphone 170C. At least one microphone 170C may be disposed in the electronic device 100. In another implementation, two microphones 170C may be disposed in the electronic device 100, to capture a sound signal and implement a noise reduction function. In another implementation, three, four, or more microphones 170C may alternatively be disposed in the electronic device 100, to capture a sound signal, implement noise reduction, and recognize a sound source, to implement a directional recording function and the like. The headset jack 170D is used for connecting a wired headset.

The pressure sensor 180A is configured to sense a pressure signal, and may convert the pressure signal into an electrical signal. In an implementation, the pressure sensor 180A may be disposed in the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In an implementation, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The touch sensor 180K is also referred to as a "touch device". The touch sensor 180K may be disposed in the display 194. The touch sensor 180K and the display 194 constitute a touchscreen, which is also referred to as a "touchscreen". The touch sensor 180K is configured to detect a touch operation performed on or near the touch sensor. The touch sensor may transmit the detected touch operation to the application processor to determine a type of a touch event. The display 194 may provide a visual output related to the touch operation. In another implementation, the touch sensor 180K may alternatively be disposed on a surface of the electronic device 100 at a position different from a position of the display 194.

In this application, the pressure sensor 180A and/or the touch sensor 180K may be disposed in the display 194. When the display 194 displays a user interface of an application, the pressure sensor 180A and/or the touch sensor 180K may detect a user operation performed by the user on the user interface. In response to the user operation, the electronic device 100 may perform a corresponding task based on the application. For example, when the user taps a profile picture of a friend in a social application, the electronic device 100 may display, on the display 194, personal information published by the friend by using the social application.

The gyroscope sensor 180B may be configured to determine a motion attitude of the electronic device 100. In an implementation, an angular velocity of the electronic device 100 around three axes (that is, axes x, y, and z) may be determined by the gyroscope sensor 180B. In an implementation, the electronic device 100 may learn of, based on a detection signal of the gyroscope sensor 180B, whether a bending angle of the display 194 of the electronic device 100 changes, to determine whether the physical state of the electronic device 100 changes. The gyroscope sensor 180B may be further used in an image stabilization scenario, a navigation scenario, a somatic game scenario, and the like. Optionally, the gyroscope sensor 180B may be disposed on a circuit board of the electronic device 100.

The acceleration sensor 180E may detect accelerations of the electronic device 100 in various directions (usually on three axes). When the electronic device 100 is still, a magnitude and a direction of gravity may be detected. In an implementation, the electronic device 100 may learn of, based on a detection signal of the acceleration sensor 180E, whether a bending angle of the display 194 of the electronic device 100 changes, to determine whether the physical state of the electronic device 100 changes. In addition, the acceleration sensor 180E may be further used in landscape/portrait mode switching, a pedometer, or the like. Optionally, the acceleration sensor 180E may be disposed on a circuit board of the electronic device 100.

In an implementation, the electronic device 100 may include a plurality of acceleration sensors 180E and/or a plurality of gyroscope sensors 180B. The electronic device 100 includes a foldable display 194. When the electronic device 100 is in the bent state or the folded state, the display 194 may be bent and divided into two display areas located on different sides of the central axis. The plurality of acceleration sensors 180E and/or the plurality of gyroscope sensors 180B may be separately disposed on circuit boards on the sides of the two display areas. The electronic device 100 may learn of, based on detection signals of the plurality of acceleration sensors 180E and/or the plurality of gyroscope sensors 180B, whether a bending angle of the electronic device 100 changes, to determine whether the physical state of the electronic device 100 changes.

The barometric pressure sensor 180C is configured to measure barometric pressure. The magnetic sensor 180D includes a Hall effect sensor, and the electronic device 100 may detect opening and closing of a flip leather case through the magnetic sensor 180D. The distance sensor 180F is configured to measure a distance. The optical proximity sensor 180G may include, for example, a light-emitting diode (LED) and an optical detector, for example, a photodiode. The electronic device 100 emits infrared light through the light-emitting diode. The electronic device 100 detects infrared reflected light from a nearby object through the photodiode. When detecting sufficient reflected light, the electronic device 100 may determine that an object exists near the electronic device 100. When detecting insufficient reflected light, the electronic device 100 may determine that no object exists near the electronic device 100. The fingerprint sensor 180H is configured to collect a fingerprint. The temperature sensor 180J is configured to detect temperature. The ambient light sensor 180L is configured to sense luminance of ambient light.

The angle sensor 180M may obtain angle information, and convert the angle information into an available electrical signal for output. In an implementation, the angle sensor 180M may be disposed in the display 194, and is configured to detect a bending angle of the display 194. The processor 110 may determine, based on a detection signal of the angle sensor 180M, the physical state (for example, the unfolded state, the bent state, or the folded state) of the electronic device 100 and whether the physical state of the electronic device 100 changes.

The foregoing manners of determining the physical state of the electronic device 100 are merely examples. A specific type of a sensor for determining the physical state of the electronic device 100 is not limited in this embodiment of this application.

The button 190 includes a power button, a volume button, and the like. The button 190 may be a mechanical button or a touch button. The electronic device 100 may receive an input on the button, and generate a button signal input related to a user setting and function control of the electronic device 100. The motor 191 may generate a vibration prompt. The indicator 192 may be an indicator light, and may be configured to indicate a charging status and a battery level change, or may be configured to indicate a message, a missed call, a notification, and the like. The SIM card interface 195 is used for connecting a SIM card.

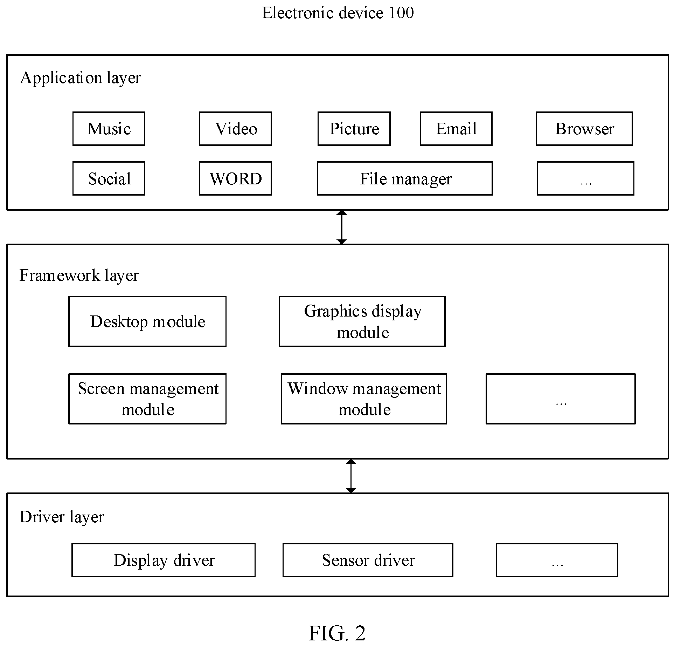

FIG. 2 is a diagram of an example software architecture of an electronic device 100.

In some implementations, a software system of the electronic device 100 may use a hierarchical architecture, an event-driven architecture, a microkernel architecture, a microservice architecture, or a cloud architecture. For example, a software system of the hierarchical architecture may be an Android (Android) system, a Harmony (Harmony) operating system (operating system, OS), or another software system. In FIG. 2, the software architecture of the electronic device 100 is described by using the Android system of the hierarchical architecture as an example.

In the hierarchical architecture, software is divided into several layers, and each layer has a clear role and task. The layers communicate with each other through a software interface. In an implementation, as shown in FIG. 2, the software system of the electronic device 100 is divided into three layers: an application layer, a framework layer, and a driver layer from top to bottom.

As shown in FIG. 2, the application layer may include one or more applications, for example, Music, Video, Picture, Email, Browser, Social, WORD, and File manager. The application in this embodiment of this application may alternatively be replaced with other application software such as a mini program or an atomic service.

As shown in FIG. 2, the framework layer provides an application programming interface (application programming interface, API) and a programming framework for the application at the application layer. The framework layer may include some predefined functions. The framework layer may include a desktop module, a graphics display module, a screen management module, a window management module, and the like.

The desktop module may be configured to display a desktop of the electronic device 100. The desktop of the electronic device 100 may include a control of application software, for example, an icon of an application/mini program/atomic service, a card of an application/mini program/atomic service, or a folder of the application software.

The graphics display module may be configured to display a GUI of the electronic device. In an implementation, the GUI of the electronic device 100 may include one or more views. For example, a GUI including an SMS message notification may include a view for displaying text and a view for displaying a picture. The graphics display module may be configured to construct and manage the view. In an implementation, the graphics display module may be configured to display a visual control. The visual control includes, for example, a control for displaying text and a control for displaying a picture.

The screen management module may be configured to manage a software screen (which may be referred to as a display) of the electronic device 100. In an implementation, the screen management module may maintain a corresponding display for a display 194 of the electronic device 100. A system (for example, the desktop module, the window management module, or the graphics display module) of the electronic device 100 may display content, for example, the desktop, based on the display corresponding to the display 194. The application at the application layer of the electronic device 100 may display an application interface based on the display corresponding to the display 194. The screen management module may be further configured to obtain a physical state of the electronic device 100 or the display 194, to notify another module at the framework layer and the application at the application layer of the physical state. The screen management module may be further configured to maintain a size of the display 194. The screen management module may be further configured to obtain a size of a bendable display area 203 on the display 194 when the electronic device 100 is in a bent state.

The window management module may be configured to manage displaying of a window (for example, a system window or an application window), for example, whether to display the window in a maximized form, or whether to restore displaying of the window in an original size. The window management may be further configured to determine a display mode of the window. The display mode of the window may include a display size of the window and a display position of the window. In an implementation, the window management module may obtain the physical state of the display 194 and/or the size of the display 194 from the screen management module, and determine the display mode of the window based on the physical state of the display 194 and/or the size of the display 194. In an implementation, the window management module may determine a display mode of the application window, and send the display mode of the application window to a corresponding application at the application layer, so that the application displays the application window in the display mode. The window management module may further record the display mode of the window.

As shown in FIG. 2, the driver layer may include a display driver, a sensor driver, and the like, but is not limited thereto, and may further include a camera driver, an audio driver, and the like.

The following describes an example operating process of software and hardware of the electronic device 100 with reference to a display scenario.

It is assumed that the display 194 is in an unfolded state and displays an application window 1. When the angle sensor 180M detects that a bending angle of the display 194 changes, a corresponding hardware interrupt is sent to the driver layer. The driver layer processes the hardware interrupt into a raw input event (including information such as a changed bending angle of the display 194 and a timestamp at which the bending angle changes), and the raw input event is stored at the driver layer. The framework layer obtains the raw input event from the driver layer, and the screen management module at the framework layer may determine, based on the raw input event, that the electronic device 100 has switched from the unfolded state to the bent state. The electronic device 100 invokes an interface at the framework layer, and determines, through the window management module at the framework layer, a display mode of the application window 1 in the bent state. Then the electronic device 100 invokes the driver layer to control the display driver to display the application window 1 on the display 194 based on the determined display mode of the application window 1.

The following describes example physical states of a foldable electronic device 100 with reference to FIG. 3A to FIG. 3E.

FIG. 3A and FIG. 3B are diagrams of an example unfolded state of an electronic device 100. FIG. 3A and FIG. 3B are diagrams of the unfolded state at different angles of view.

As shown in FIG. 3A and FIG. 3B, the electronic device 100 may include a display 194, and the display 194 may be located on a front side of the electronic device 100. The electronic device 100 may include a bending part. The electronic device 100 or the display 194 may be bent along the bending part. An included angle between two ends of the bending part may be referred to as a bending angle of the electronic device 100 or the display 194. In some examples, the display 194 may be bent toward the front side (which may also be referred to as being bent inward) along the bending part. For example, a value range of the included angle O between the two ends of the bending part shown in FIG. 3A and FIG. 3B is [0, 180 degrees]. In addition, in some other examples, the display 194 may be bent toward a rear side (which may also be referred to as being bent outward) along the bending part. For example, a value range of the included angle O between the two ends of the bending part shown in FIG. 3A and FIG. 3B is [180 degrees, 360 degrees].

As shown in FIG. 3A and FIG. 3B, the electronic device 100 may be in the unfolded state, and the included angle O between the two ends of the bending part of the electronic device 100 is approximately 180 degrees. In this case, the display 194 is in an unfolded state. In addition, in another implementation, the included angle O may alternatively be greater than or equal to 170 degrees and less than or equal to 180 degrees. A specific value of the included angle O between the two ends of the bending part of the electronic device 100 in the unfolded state is not limited in this embodiment of this application.

As shown in FIG. 3A and FIG. 3B, the display 194 may include a display area 201, a display area 202, and a display area 203. The display area 203 is bendable, and is located in the bending part of the electronic device 100. The two ends of the bending part of the electronic device 100 are respectively connected to the display area 201 and the display area 202. The included angle O between the two ends of the bending part of the electronic device 100 may be understood as an included angle between a plane on which the display area 201 is located and a plane on which the display area 202 is located. When the display 194 is in the unfolded state, the display area 201 and the display area 202 are equivalently located on a same plane. In this case, the display area 203 is also located on the plane.

As shown in FIG. 3A and FIG. 3B, the display 194 may include a central axis, the central axis is located in the display area 203, and the display area 203 includes two display areas located on different sides of the central axis. The display area 201 and the display area 202 are located on different sides of the central axis, and the display area 201 and the display area 202 are also located on different sides of the display area 203. Any two of the display area 201, the display area 202, and the display area 203 do not overlap. For example, the display area 201 and a part of the display area 203 are on an upper side of the central axis of the display 194, and the display area 202 and the other part of the display area 203 are on a lower side of the central axis of the display 194.

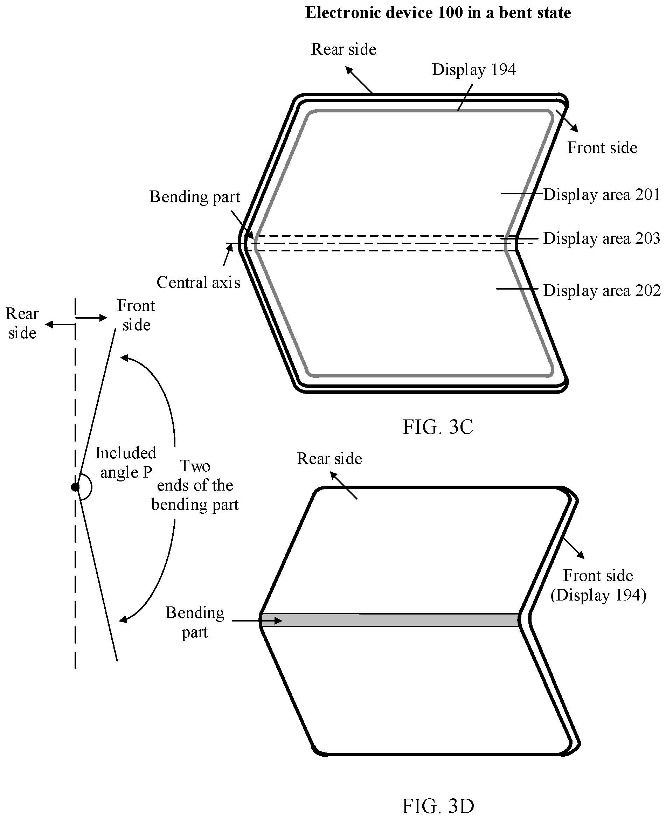

In an implementation, the electronic device 100 in the unfolded state shown in FIG. 3A and FIG. 3B may be partially folded, to obtain the electronic device 100 in a bent state. For specific examples, refer to FIG. 3C and FIG. 3D.

FIG. 3C and FIG. 3D are diagrams of an example bent state of an electronic device 100. FIG. 3C and FIG. 3D are diagrams of the bent state at different angles of view.

As shown in FIG. 3C and FIG. 3D, a display 194 may be bent toward a front side (which may also be referred to as being bent inward) along a bending part, the electronic device 100 is in the bent state, and an included angle P between two ends of the bending part of the electronic device 100 is approximately 120 degrees. In this case, a plane on which a display area 201 is located and a plane on which the display area 202 is located intersect, an intersection line is a central axis of the display 194, and a display area 203 located in the bending part of the electronic device 100 is bent. In addition, in another implementation, the included angle P may alternatively be greater than 0 degrees and less than 180 degrees, for example, but not limited to, 60 degrees, 90 degrees, 100 degrees, or 120 degrees. A specific value of the included angle P between the two ends of the bending part of the electronic device 100 in the bent state is not limited in this embodiment of this application.

A module on a rear side of the electronic device 100 is not limited in this embodiment of this application. For example, a camera or another display may be disposed on the rear side of the electronic device 100.

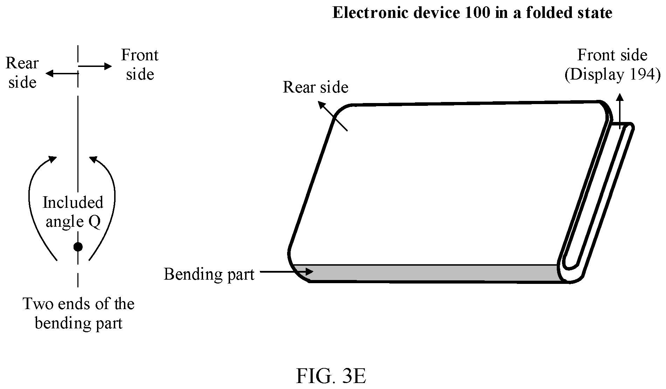

In an implementation, the electronic device 100 in the unfolded state shown in FIG. 3A and FIG. 3B may be folded, to obtain the electronic device 100 in a folded state. In another implementation, the electronic device 100 in the bent state shown in FIG. 3C and FIG. 3D may be folded, to obtain the electronic device 100 in a folded state. For an example of the electronic device 100 in the folded state, refer to FIG. 3E.

FIG. 3E is a diagram of an example folded state of an electronic device 100.

As shown in FIG. 3E, a display 194 may be bent toward a front side (which may also be referred to as being bent inward) along a bending part, the electronic device 100 is in the folded state, and an included angle Q between two ends of the bending part of the electronic device 100 is approximately 0 degrees. In this case, a light exit surface of a display area 201 is opposite to a light exit surface of a display area 202, a plane on which the display area 201 is located is parallel to a plane on which the display area 202 is located, and a display area 203 located in the bending part of the electronic device 100 is bent. In addition, in another implementation, the included angle Q may alternatively be greater than 0 degrees and less than or equal to 20 degrees. A specific value of the included angle Q between the two ends of the bending part of the electronic device 100 in the folded state is not limited in this embodiment of this application.

It can be understood that, when the electronic device 100 is in the folded state, the bent state, or the unfolded state, the included angle between the two ends of the bending part of the electronic device 100 varies, but a specific value of the included angle is not limited.

In an implementation, the display 194 shown in FIG. 3A to FIG. 3E may be a flexible display of the electronic device 100. Optionally, the display area 201, the display area 202, and the display area 203 are different areas on the flexible display, and all of the display areas are used to display a user interface. In another implementation, the display 194 shown in FIG. 3A to FIG. 3E may be a display formed by splicing a rigid display, a flexible display, and a connection assembly, for example, a hinge. In some examples, the display 194 may be formed by splicing two rigid displays and one flexible display. The display area 201 and the display area 202 may be areas on the two rigid displays respectively. The display area 203 may be an area on the flexible display. In addition, in some other examples, the display 194 may be formed by splicing two rigid displays and a hinge for connecting the two rigid displays. The display area 201 and a part of the display area 203 that are located on one side of the central axis are areas on one rigid display. The display area 202 and the other part of the display area 203 that are located on the other side of the central axis are areas on the other rigid display. All of the display areas are used to display a user interface. The central axis of the display 194 may be the hinge for connecting the two rigid displays.

For ease of description, in embodiments of this application, descriptions are provided by using an example in which a foldable electronic device is in a folded state when a bending angle of the foldable electronic device is less than a first angle threshold, the foldable electronic device is in an unfolded state when the bending angle of the foldable electronic device is greater than a second angle threshold, and the electronic device is in a bent state when the bending angle of the foldable electronic device is greater than or equal to the first angle threshold and less than or equal to the second angle threshold. For example, the first angle threshold is 10 degrees, and the second angle threshold is 170 degrees.

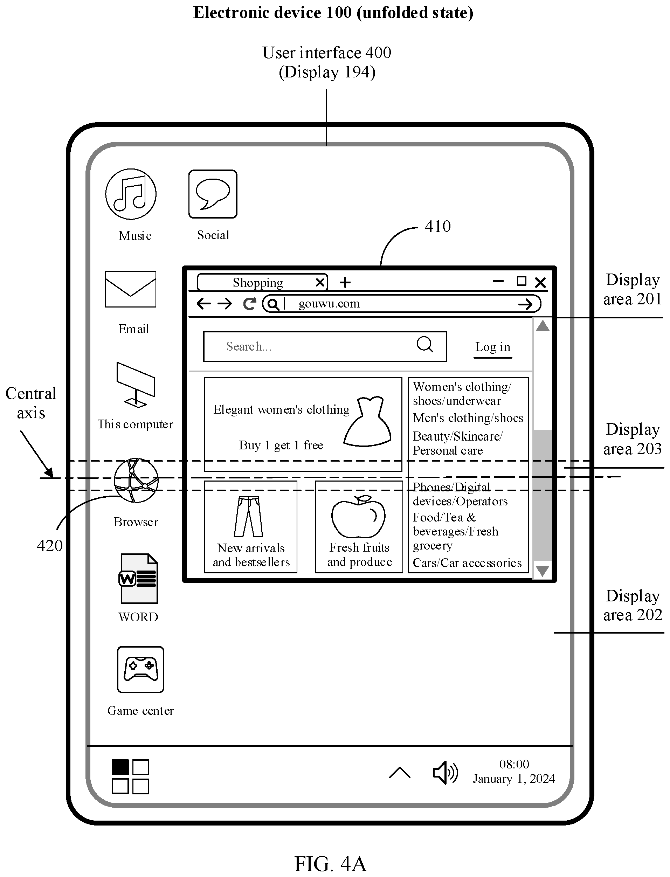

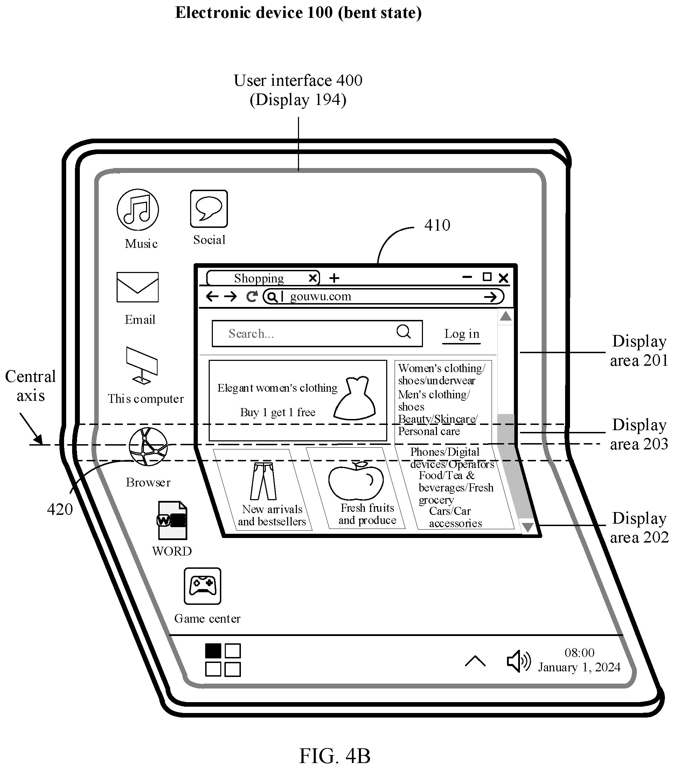

Currently, a screen management module of an electronic device 100 may maintain a display 1 for a display 194 of the electronic device 100. A size of the display 1 is the same as a size of the display 194. Regardless of a physical state of the electronic device 100, the display 1 remains unchanged. A system module, for example, a desktop module, of the electronic device 100 may sense the display 1, and arrange and display a desktop based on the display 1. An application at an application layer of the electronic device 100 may sense the display 1, and arrange and display an application interface based on the display 1. For a display example, refer to FIG. 4A and FIG. 4B. In FIG. 4A and FIG. 4B, an electronic device 100 of the structure shown in FIG. 3A to FIG. 3E is used as an example for description.

FIG. 4A and FIG. 4B are diagrams of example user interfaces displayed when an electronic device 100 switches from an unfolded state to a bent state.

As shown in FIG. 4A, the electronic device 100 is in an unfolded state, and the electronic device 100 displays a user interface 400 on a display 194. The user interface 400 may include a desktop and an application window 410 of a Browser application, and the application window 410 is displayed at an upper layer of the desktop. The desktop may include icons of a plurality of applications and a status bar at the bottom. The icons of the plurality of applications include, for example, an icon of a Music application, an icon of a Social application, an icon of an Email application, an icon of This computer, an icon 420 of the Browser application, an icon of a WORD application, and an icon of a Game center application.

In an implementation, the electronic device 100 may detect a folding operation of a user, and the folding operation may reduce an included angle between two ends of a bending part. Based on the folding operation, the included angle between the two ends of the bending part of the electronic device 100 may change from being greater than a second angle threshold to being greater than or equal to a first angle threshold and less than or equal to the second angle threshold, that is, the electronic device 100 changes from the unfolded state to the bent state. For an example in which the electronic device 100 is in the bent state, refer to FIG. 4B. As shown in FIG. 4B, the electronic device 100 is in the bent state, and the electronic device 100 displays a user interface 400 on the display 194. The user interface 400 shown in FIG. 4B is consistent with the user interface 400 shown in FIG. 4A.

It can be understood that, regardless of whether the electronic device 100 is in the unfolded state shown in FIG. 4A or switches to the bent state shown in FIG. 4B, the display 194 still corresponds to a display 1 whose size is the same as a size of the display 194, and the desktop and an application interface are still arranged and displayed based on the display 1. Therefore, on the user interface 400 shown in FIG. 4A and the user interface 400 shown in FIG. 4B, the application window 410 of the Browser application may be displayed in all display areas (to be specific, a display area 201, a display area 202, and a display area 203) of the display 194, the application window 410 may be displayed in the display area 201, the display area 202, and the display area 203 across a central axis, and the application window 410 is displayed without avoiding the bendable display area 203. When the electronic device 100 is in the bent state, it is difficult for the user to perform a touch operation on content, displayed in the display area 203, of the application window 410. The desktop may also be displayed in all the display areas (the display area 201, the display area 202, and the display area 203) of the display 194. An operable control, for example, an icon of an application, on the desktop may be displayed across the central axis. For example, the icon 420 of the Browser application is displayed across the central axis, and is displayed without avoiding the bendable display area 203. When the electronic device 100 is in the bent state, it is difficult for the user to perform a touch operation on the icon 420. In addition, display logic of the electronic device 100 in the bent state further causes poor display effect such as visual reflection, and consequently causes inconvenience to the user. The display logic may further cause damage to an area (for example, the display area 203) near the central axis, leading to low product availability.

Embodiments of this application provide a display method, applied to a foldable electronic device 100. The electronic device 100 includes a foldable display 194, and the display 194 may include a first display area and a second display area (which do not overlap) that are located on different sides of a central axis. When the electronic device 100 is in an unfolded state, an application interface of an application may be displayed in the first display area and the second display area. To be specific, the application interface is displayed on the display 194 across the central axis. In response to the electronic device 100 changing from the unfolded state to a bent state, the electronic device 100 may display the application interface in the first display area or the second display area. The application interface is not displayed on the display 194 across the central axis, but is displayed in a display area on one side of the central axis. In this way, the electronic device 100 can be prevented from displaying the application interface across the central axis in the bent state. This resolves a problem that the application interface is displayed in the bendable display area 203, so that a user can conveniently perform a touch operation on content on the application interface when the electronic device 100 is in the bent state. In addition, this avoids poor display effect such as visual reflection, to effectively improve user experience, and further avoids damage to an area near the central axis, to improve product availability.

In an implementation, the display 194 includes a bent area, the bent area is located in a bending part of the display, and the bent area includes display areas that are respectively located on different sides of the central axis of the display, for example, the display area 203 shown in FIG. 3A to FIG. 3E. The first display area does not overlap the bent area, and the second display area does not overlap the bent area. For example, the first display area and the second display area may be the display area 201 and the display area 202 shown in FIG. 3A to FIG. 3E respectively. That is, after changing from the unfolded state to the bent state, the electronic device 100 does not display the application interface in the bendable display area 203.

In addition, in another implementation, the first display area partially overlaps the bent area, and the second display area partially overlaps the bent area. For example, the first display area may be a display area on the upper side of the central axis of the display 194 shown in FIG. 3A to FIG. 3E, to be specific, the display area 201 and a partial display area, located on the upper side of the central axis, of the display area 203; and the second display area may be a display area on the lower side of the central axis of the display 194 shown in FIG. 3A to FIG. 3E, to be specific, the display area 201 and a partial display area, located on the lower side of the central axis, of the display area 203. That is, after changing from the unfolded state to the bent state, the electronic device 100 may display the application interface in a display area that is on one side of the central axis and that is in the bendable display area 203.

In an implementation, after the electronic device 100 changes from the unfolded state to the bent state, when displaying an operable control, for example, an icon of an application, on a desktop, the electronic device 100 does not display the operable control across the central axis. This resolves a problem that the operable control on the desktop is displayed in the bendable display area 203, so that the user can conveniently perform a touch operation on the operable control on the desktop when the electronic device 100 is in the bent state. In addition, this avoids poor display effect such as visual reflection, to further improve user experience, and further avoids damage to an area near the central axis, to improve product availability.

In embodiments of this application, an application interface of an application may be displayed in a plurality of forms, for example, a window form, a maximized form, and a split-screen form. The application interface may be referred to as an application window when being displayed in the window form. The application interface may be referred to as a maximized application interface when being displayed in the maximized form. The application interface may be referred to as a split-screen window when being displayed in the split-screen form. A size of the application window is less than a size of the maximized application interface, and a size of the split-screen window is less than the size of the maximized application interface. For example, when an application 1 displays an application interface based on the first display area, a size of a maximized application interface is the same as a size of the first display area, and both a size of an application window and a size of a split-screen window are less than the size of the first display area. The electronic device 100 may display one or more application windows, and when a plurality of application windows are displayed, any two of the plurality of application windows may or may not have an overlapping area. The electronic device 100 may display a split-screen interface including a plurality of split-screen windows, and the plurality of split-screen windows do not overlap.

The following describes application scenarios in embodiments of this application and diagrams of user interfaces in the scenarios. For ease of description, an electronic device 100 of the structure shown in FIG. 3A to FIG. 3E is used below as an example for description.

The following descriptions are provided by using an example in which a first display area is a display area on the upper side of the central axis of the display 194 shown in FIG. 3A to FIG. 3E (to be specific, the display area 201 and a partial display area, located on the upper side of the central axis, of the display area 203) and a second display area is a display area on the lower side of the central axis of the display 194 shown in FIG. 3A to FIG. 3E (to be specific, the display area 201 and a partial display area, located on the lower side of the central axis, of the display area 203).

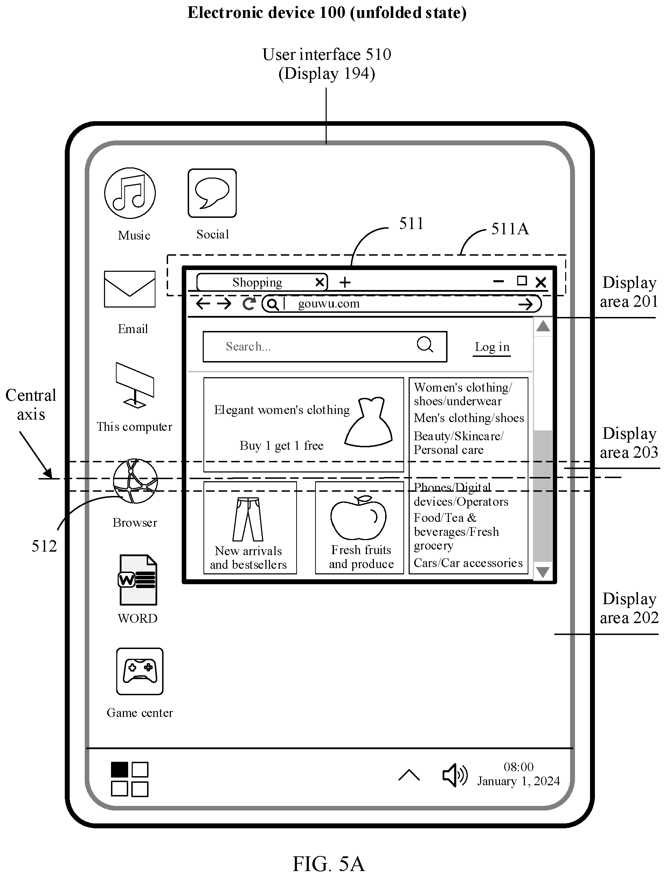

FIG. 5A to FIG. 5C are diagrams of user interfaces displayed when an electronic device 100 switches from an unfolded state to a bent state according to an embodiment of this application.

As shown in FIG. 5A, the electronic device 100 is in the unfolded state, and the electronic device 100 displays a user interface 510 on a display 194. The user interface 510 may include a desktop and an application window 511 of a Browser application, and the application window 511 is displayed at an upper layer of the desktop. The desktop may include icons of a plurality of applications and a status bar at the bottom. The icons of the plurality of applications include, for example, an icon of a Music application, an icon of a Social application, an icon of an Email application, an icon of This computer, an icon 512 of the Browser application, an icon of a WORD application, and an icon of a Game center application. The application window 511 may include a title bar 511A located at the top. The title bar 511A may include tab page information (for example, including a "Shopping" tab page) in the Browser application, a minimize control (used to display the application window 511 in a hidden mode), a maximize control (used to display the application window 511 in a maximized form), and a closed control (used to close the application window 511). The title bar 511A may be further used to trigger the application window 511 to be moved/dragged. Therefore, the title bar 511A may be understood as key content of the application window 511.

As shown in FIG. 5A, when the electronic device 100 is in the unfolded state, the desktop on the user interface 510 may be displayed in all display areas (a display area 201, a display area 202, and a display area 203) on the display 194, and an icon of an application on the desktop may be displayed across a central axis. For example, the icon 512 of the Browser application is displayed in the display area 201, the display area 202, and the display area 203 across the central axis. When the electronic device 100 is in the unfolded state, the application window 511 on the user interface 510 may be displayed in all of the display areas (to be specific, the display area 201, the display area 202, and the display area 203) on the display 194, and the application window 511 may be displayed in the display area 201, the display area 202, and the display area 203 across the central axis. The title bar 511A is located in the display area 201.

In an implementation, the electronic device 100 may detect a folding operation of a user, and the folding operation may reduce an included angle between two ends of a bending part. Based on the folding operation, the included angle between the two ends of the bending part of the electronic device 100 may change from being greater than a second angle threshold to being greater than or equal to a first angle threshold and less than or equal to the second angle threshold, that is, the electronic device 100 changes from the unfolded state to the bent state. In response to the electronic device 100 changing from the unfolded state to the bent state, the electronic device 100 may display the application window 511 in a first display area or a second display area of the display 194.

In an implementation, a default display area in the bent state may be preset on the electronic device 100, to determine a display area for displaying the application window 511 in the bent state. An example in which the default display area is the first display area on an upper side of the central axis is used below for description. In response to the electronic device 100 changing from the unfolded state to the bent state, if the application window 511 has a historical display area (for example, the first display area or the second display area) in the bent state, the electronic device 100 in the bent state may display the application window 511 in the historical display area; or if the application window 511 has no historical display area in the bent state, the electronic device 100 in the bent state may display the application window 511 in the default display area (namely, the first display area).

In another implementation, the electronic device 100 may recognize a display area in which the title bar 511A of the application window 511 is located in the unfolded state, to determine a display area for displaying the application window 511 in the bent state. In response to the electronic device 100 changing from the unfolded state to the bent state, if the display area in which the title bar 511A of the application window 511 is located in the unfolded state is the first display area, the electronic device 100 in the bent state may display the application window 511 in the first display area; or if the display area in which the title bar 511A of the application window 511 is located in the unfolded state is the second display area, the electronic device 100 in the bent state may display the application window 511 in the second display area.

The foregoing manners of determining, by the electronic device 100, the display area for displaying the application window 511 in the bent state are merely examples, and should not be construed as a limitation.

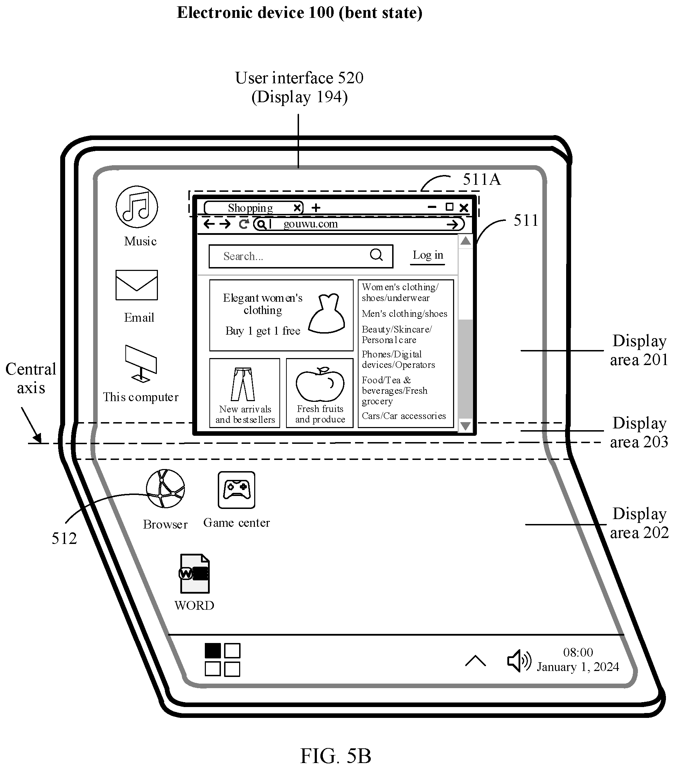

In an implementation, for an example in which the electronic device 100 displays the application window 511 in the first display area on the upper side of the central axis of the display 194 in response to the electronic device 100 changing from the unfolded state to the bent state, refer to FIG. 5B. As shown in FIG. 5B, the electronic device 100 is in the bent state, and the electronic device 100 may display a user interface 520 on the display 194. The user interface 520 may include a desktop and an application window 511, and the application window 511 is located at an upper layer of the desktop. The first display area includes the display area 201 and a partial display area, located on the upper side of the central axis, of the display area 203. The partial display area, located on the upper side of the central axis, of the display area 203 is located at the bottom of the first display area, and the title bar 511A serving as the key content of the application window 511 is located at the top of the application window 511. Therefore, the partial display area and the title bar 511A do not overlap (to avoid a case that it is difficult for the user to perform a touch operation on the title bar 511A). Only non-title-bar content (non-key content of the application window 511) at the bottom of the application window 511 may overlap the display area 203. Therefore, the application window 511 may be directly displayed in the first display area on the upper side of the central axis of the display 194, without avoiding the partial display area, located on the upper side of the central axis, of the display area 203, so that the user can conveniently view and perform an operation on the application window 511.

As shown in FIG. 5B, the desktop on the user interface 520 may be displayed in all of the display areas (the display area 201, the display area 202, and the display area 203) on the display 194. However, an icon of an application on the desktop is not displayed across the central axis, and is not displayed in the bendable display area 203. For example, all content of the icon 512 of the Browser application is displayed in the display area 202. This can address user operational inconvenience.

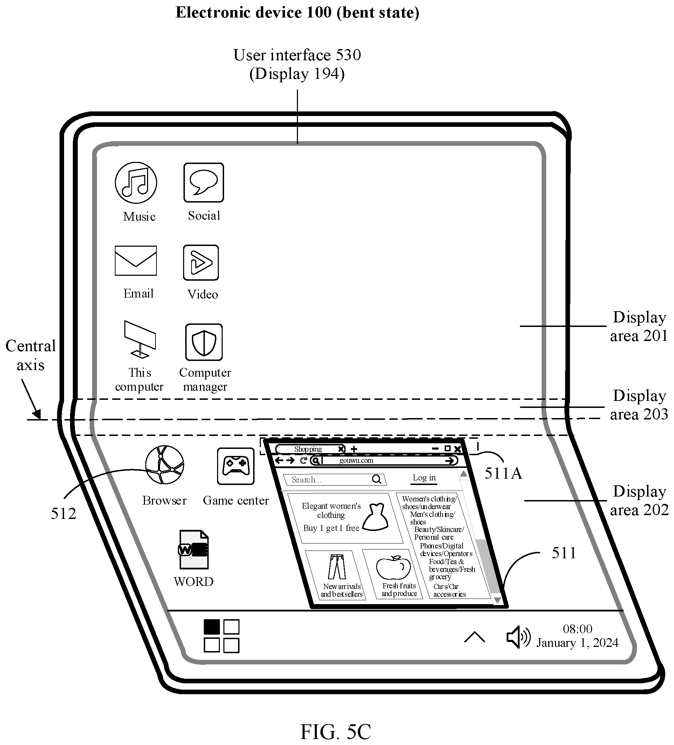

In an implementation, for an example in which the electronic device 100 displays the application window 511 in the second display area on a lower side of the central axis of the display 194 in response to the electronic device 100 changing from the unfolded state to the bent state, refer to FIG. 5C. As shown in FIG. 5C, the electronic device 100 is in the bent state, and the electronic device 100 may display a user interface 530 on the display 194. The user interface 530 may include a desktop and an application window 511, and the application window 511 is located at an upper layer of the desktop. The second display area includes the display area 202 and a partial display area, located on the lower side of the central axis, of the display area 203. The partial display area, located on the lower side of the central axis, of the display area 203 is located at the top of the second display area, and the title bar 511A serving as the key content of the application window 511 is located at the top of the application window 511. Therefore, the partial display area and the title bar 511A may overlap. Therefore, the application window 511 may be displayed in the display area 202 in the second display area on the lower side of the central axis of the display 194, and is not displayed in the partial display area, located on the lower side of the central axis, of the display area 203. This can avoid overlapping between the title bar 511A of the application window 511 and the display area 203, to avoid a case that it is difficult for the user to perform a touch operation on the title bar 511A. Descriptions of the desktop shown in FIG. 5C are similar to the descriptions of the desktop shown in FIG. 5B. Details are not described again.

In FIG. 5A to FIG. 5C, after the electronic device 100 changes from the unfolded state to the bent state, if determining to display the application window 511 in the first display area on the upper side of the central axis, the electronic device 100 may choose whether to avoid displaying in the display area 203 (which is actually the partial display area, located on the upper side of the central axis, of the display area 203) at the bottom of the first display area. Because only the non-title-bar content at the bottom of the application window 511 may overlap the display area 203, the application window 511 may be displayed in the display area 203 at the bottom of the first display area. If determining to display the application window 511 in the second display area on the lower side of the central axis, the electronic device 100 may choose whether to avoid displaying in the display area 203 (which is actually the partial display area, located on the lower side of the central axis, of the display area 203) at the top of the second display area. Because the title bar 511A at the top of the application window 511 may overlap the display area 203, the application window 511 may not be displayed in the display area 203 at the top of the second display area. That is, after the electronic device 100 changes from the unfolded state to the bent state, the application window 511 may be displayed in a display area on the upper side or the lower side of the central axis. The title bar 511A serving as the key content of the application window 511 does not overlap the bendable display area 203, to ensure user experience.

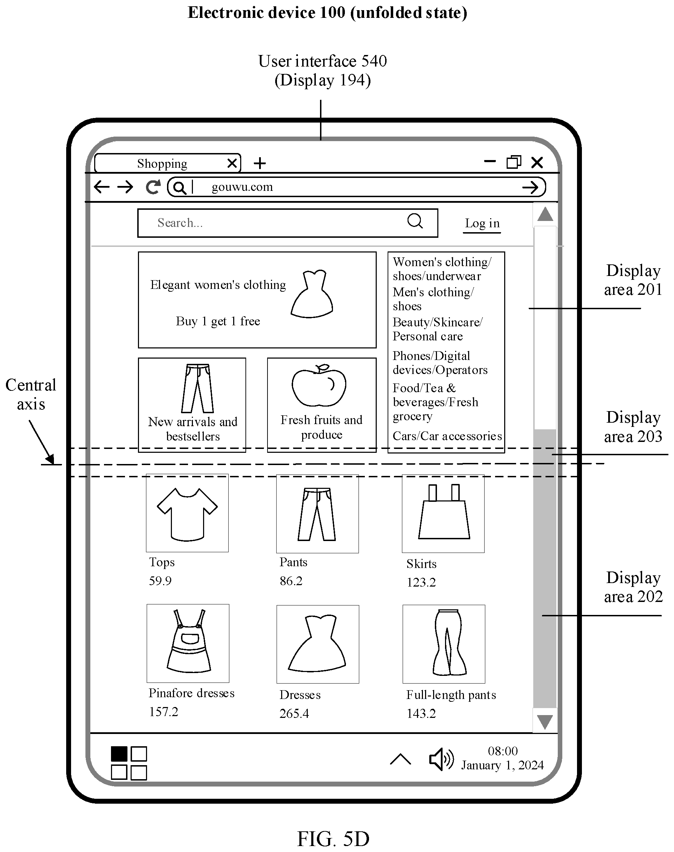

In FIG. 5A to FIG. 5C, an application window is used as an example for description. In some other embodiments, when the electronic device 100 is in the unfolded state, the electronic device 100 may display a maximized application interface of an application. For specific examples, refer to FIG. 5D to FIG. 5F.

FIG. 5D to FIG. 5F are diagrams of other user interfaces displayed when an electronic device 100 switches from an unfolded state to a bent state according to an embodiment of this application.

As shown in FIG. 5D, the electronic device 100 is in the unfolded state, and the electronic device 100 displays a user interface 540 on a display 194. The user interface 540 is a maximized application interface of a Browser application. The maximized application interface of the Browser application may be displayed in all display areas (a display area 201, a display area 202, and a display area 203) on the display 194. The maximized application interface of the Browser application may be displayed in the display area 201, the display area 202, and the display area 203 across a central axis. A title bar 511A is located in the display area 201.

In an implementation, the electronic device 100 may detect a folding operation of a user, and the folding operation may reduce an included angle between two ends of a bending part. In response to the electronic device 100 changing from the unfolded state to the bent state, the electronic device 100 may display the maximized application interface of the Browser application in a first display area or a second display area of the display 194.

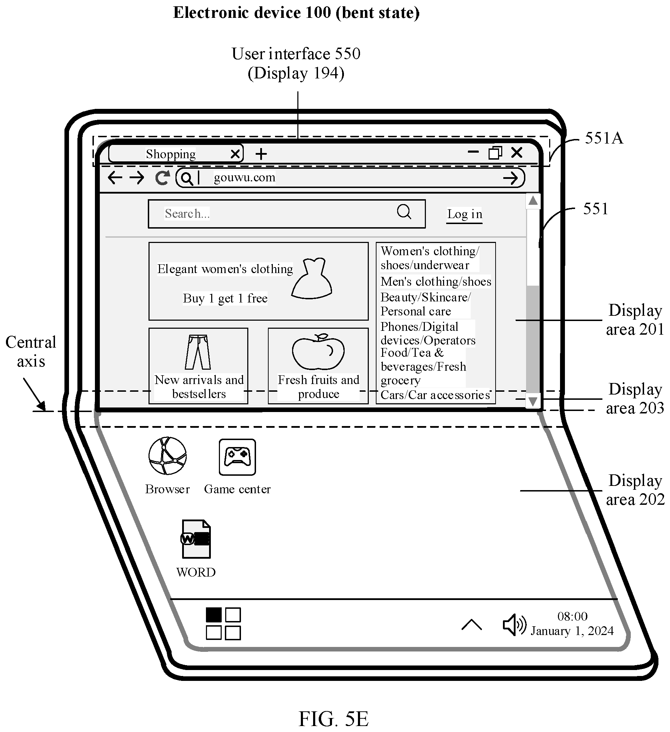

For an example in which the electronic device 100 displays the maximized application interface of the Browser application in the first display area on an upper side of the central axis of the display 194, refer to FIG. 5E. As shown in FIG. 5E, the electronic device 100 is in the bent state, and the electronic device 100 may display a user interface 550 on the display 194. The user interface 550 may include a desktop and a maximized application interface 551 of the Browser application. The maximized application interface 551 is located at an upper layer of the desktop, and the maximized application interface 551 includes a title bar 551A. Non-title-bar content at the bottom of the maximized application interface 551 may overlap the display area 203, and the title bar 551A does not overlap the display area 203. Therefore, the maximized application interface 551 may be directly displayed in the first display area on the upper side of the central axis of the display 194, without avoiding a partial display area, located on the upper side of the central axis, of the display area 203. Descriptions of the desktop shown in FIG. 5E are similar to the descriptions of the desktop shown in FIG. 5B. Details are not described again.

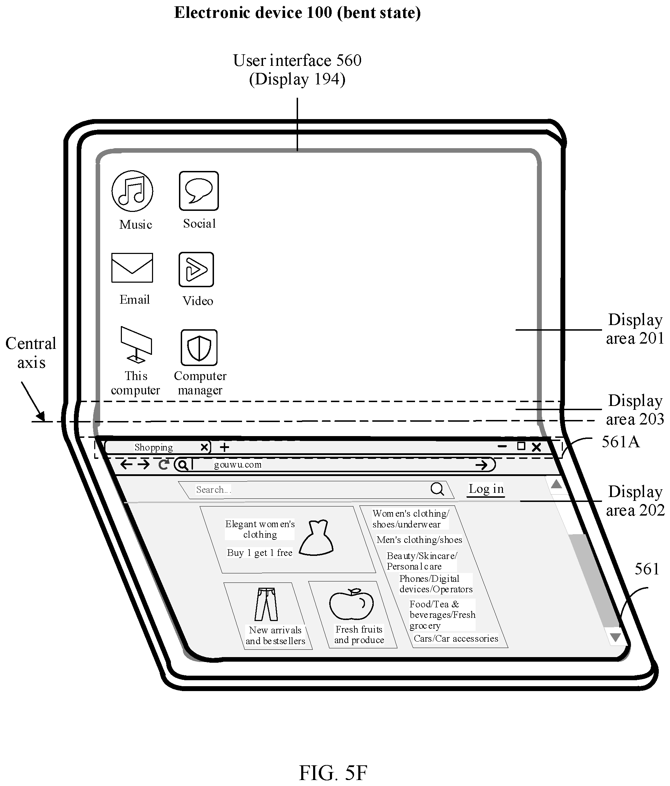

For an example in which the electronic device 100 displays the maximized application interface of the Browser application in the second display area on a lower side of the central axis of the display 194, refer to FIG. 5F. As shown in FIG. 5F, the electronic device 100 is in the bent state, and the electronic device 100 may display a user interface 560 on the display 194. The user interface 560 may include a desktop and a maximized application interface 561 of the Browser application. The maximized application interface 561 is located at an upper layer of the desktop. The title bar 561A at the top of the maximized application interface 561 may overlap the display area 203. Therefore, the maximized application interface 561 may be displayed in the display area 202 in the second display area on the lower side of the central axis of the display 194, and is not displayed in a partial display area, located on the lower side of the central axis, of the display area 203. Descriptions of the desktop shown in FIG. 5F are similar to the descriptions of the desktop shown in FIG. 5B. Details are not described again.

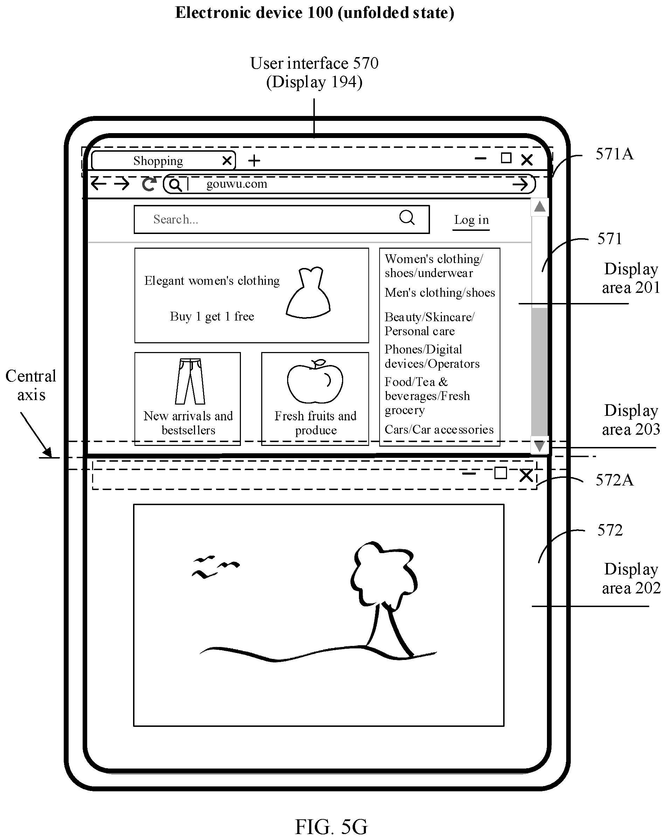

In some other embodiments, when the electronic device 100 is in the unfolded state, the electronic device 100 may display a split-screen interface. For specific examples, refer to FIG. 5G to FIG. 5I.

FIG. 5G to FIG. 5I are diagrams of other user interfaces displayed when an electronic device 100 switches from an unfolded state to a bent state according to an embodiment of this application.

As shown in FIG. 5G, the electronic device 100 is in the unfolded state, and the electronic device 100 displays a user interface 570 on a display 194. The user interface 570 may be a split-screen interface. The split-screen interface may be displayed in all display areas (a display area 201, a display area 202, and a display area 203) on the display 194. The split-screen interface may be displayed in the display area 201, the display area 202, and the display area 203 across a central axis.

The user interface 570 may include a split-screen window 571 of a Browser application and a split-screen window 572 of a Picture application, and the split-screen window 571 does not overlap the split-screen window 572. For example, a boundary line between the split-screen window 571 and the split-screen window 572 may be the central axis, the split-screen window 571 is displayed on an upper side of the central axis, and the split-screen window 572 is displayed on a lower side of the central axis. In addition, the boundary line between the split-screen window 571 and the split-screen window 572 may alternatively be on the upper side or the lower side of the central axis. The split-screen window 571 may include a title bar 571A. Descriptions of the title bar 571A are similar to the descriptions of the title bar 511A shown in FIG. 5A. The split-screen window 572 may include a title bar 572A. The title bar 572A may include a minimize control (used to display the split-screen window 572 in a hidden mode), a maximize control (used to display the split-screen window 572 in a maximized form), and a close control (used to close the split-screen window 572). The title bar 572A may be further used to trigger the split-screen window 572 to be moved/dragged.

In an implementation, the electronic device 100 may detect a folding operation of a user, and the folding operation may reduce an included angle between two ends of a bending part. In response to the electronic device 100 changing from the unfolded state to the bent state, the electronic device 100 may display a split-screen interface of the Browser application and the Picture application in a first display area or a second display area of the display 194.

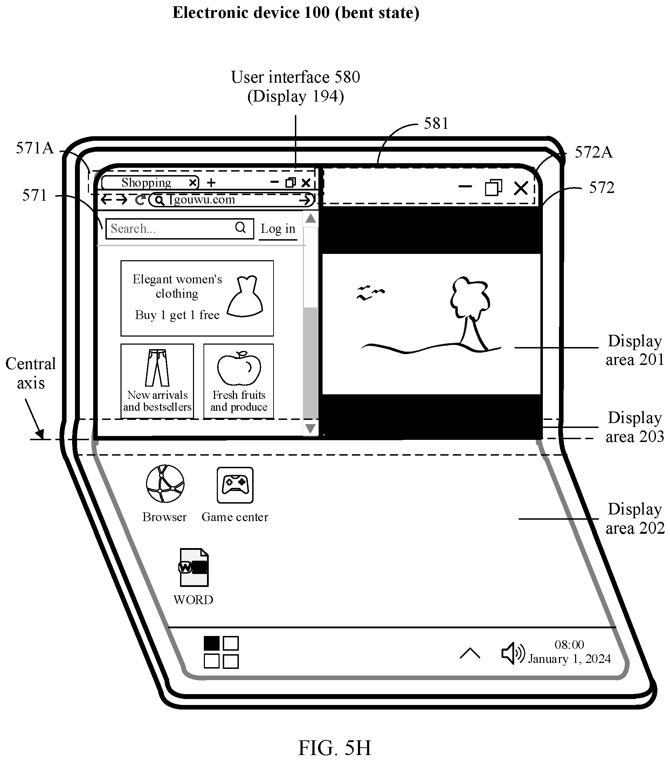

For an example in which the electronic device 100 displays the split-screen interface of the Browser application and the Picture application in the first display area on the upper side of the central axis of the display 194, refer to FIG. 5H. As shown in FIG. 5H, the electronic device 100 is in the bent state, and the electronic device 100 may display a user interface 580 on the display 194. The user interface 580 may include a desktop and a split-screen interface 581. The split-screen interface 581 is located at an upper layer of the desktop, and the split-screen interface 581 may include a split-screen window 571 of the Browser application and a split-screen window 572 of the Picture application. Non-title-bar content at the bottom of the split-screen interface 581 may overlap the display area 203, and a title bar 571A and a title bar 572A do not overlap the display area 203. Therefore, the split-screen interface 581 may be directly displayed in the first display area on the upper side of the central axis of the display 194, without avoiding a partial display area, located on the upper side of the central axis, of the display area 203. Descriptions of the desktop shown in FIG. 5H are similar to the descriptions of the desktop shown in FIG. 5B. Details are not described again.

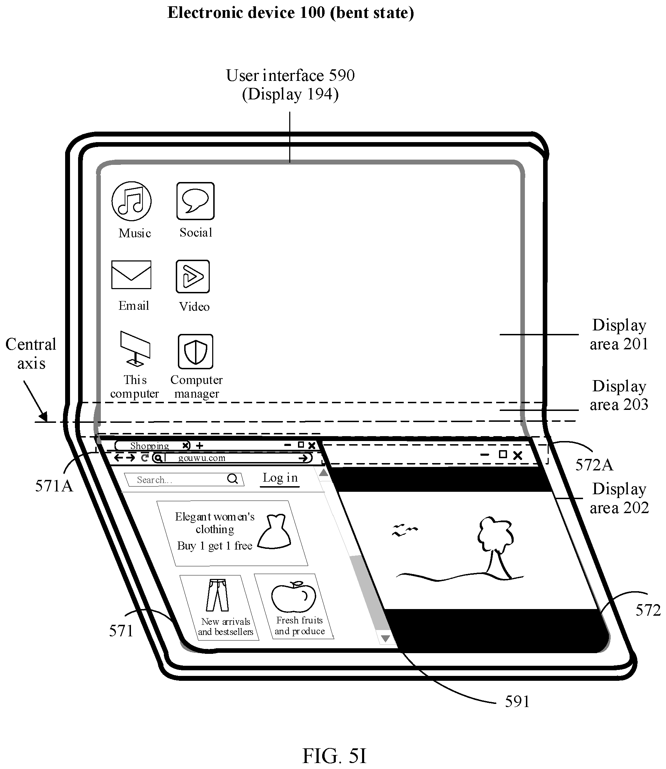

For an example in which the electronic device 100 displays the split-screen interface of the Browser application and the Picture application in the second display area on the lower side of the central axis of the display 194, refer to FIG. 5I. As shown in FIG. 5I, the electronic device 100 is in the bent state, and the electronic device 100 may display a user interface 590 on the display 194. The user interface 590 may include a desktop and a split-screen interface 591. The split-screen interface 591 is located at an upper layer of the desktop, and the split-screen interface 591 may include a split-screen window 571 of the Browser application and a split-screen window 572 of the Picture application. A title bar 571A and a title bar 572A at the top of the split-screen interface 591 may overlap the display area 203. Therefore, the split-screen interface 591 may be displayed in the display area 202 in the second display area on the lower side of the central axis of the display 194, and is not displayed in a partial display area, located on the lower side of the central axis, of the display area 203. Descriptions of the desktop shown in FIG. 5I are similar to the descriptions of the desktop shown in FIG. 5B. Details are not described again.

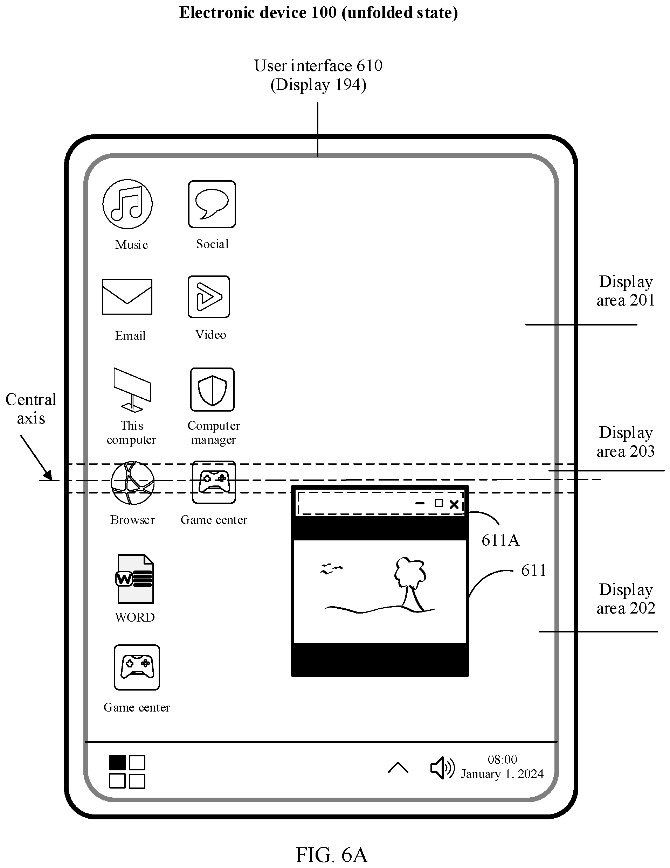

In FIG. 5A to FIG. 5I, an example in which an application interface is displayed across the central axis when the electronic device 100 is in the unfolded state is used for description. In some other embodiments, when the electronic device 100 is in the unfolded state, the electronic device 100 may display an application interface of an application in a display area on one side of the central axis. For specific examples, refer to FIG. 6A to FIG. 6D. In FIG. 6A to FIG. 6D, an example in which an application interface is an application window displayed in a window form is used for description.

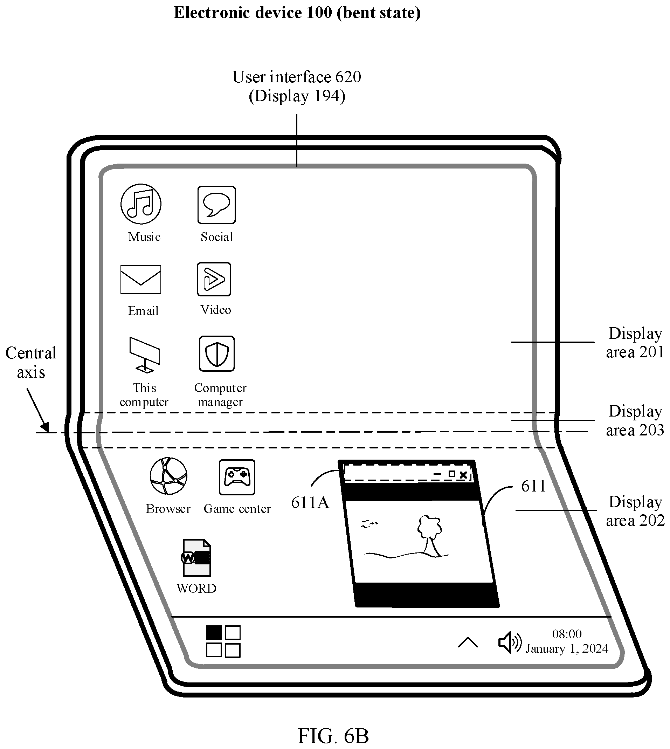

FIG. 6A and FIG. 6B are diagrams of other user interfaces displayed when an electronic device 100 switches from an unfolded state to a bent state according to an embodiment of this application.

As shown in FIG. 6A, the electronic device 100 is in the unfolded state, and the electronic device 100 displays a user interface 610 on a display 194. The user interface 610 includes a desktop and an application window 611 of a Picture application, and the application window 611 may include a title bar 611A. Descriptions of the desktop shown in FIG. 6A are similar to the descriptions of the desktop shown in FIG. 5A. Details are not described again. The application window 611 may be displayed in a second display area on a lower side of a central axis of the display 194. The title bar 611A located at the top of the application window 611 overlaps a display area 203.

In an implementation, the electronic device 100 may detect a folding operation of a user, and the folding operation may reduce an included angle between two ends of a bending part. In response to the electronic device 100 changing from the unfolded state to the bent state, the electronic device 100 may display the application window 611 in the current second display area (to be specific, the second display area in which the application window 611 is located in the unfolded state). For details, refer to FIG. 6B.

As shown in FIG. 6B, the electronic device 100 is in the bent state, and the electronic device 100 may display a user interface 620 on the display 194. The user interface 620 includes a desktop and an application window 611 of the Picture application. A title bar 611A at the top of the application window 611 may overlap the display area 203. Therefore, the application window 611 on the user interface 620 is not directly displayed in the second display area on the lower side of the central axis of the display 194, but is displayed in the display area 202 in the second display area and is not displayed in a partial display area, located on the lower side of the central axis, of the display area 203. Descriptions of the desktop shown in FIG. 6B are similar to the descriptions of the desktop shown in FIG. 5B. Details are not described again.

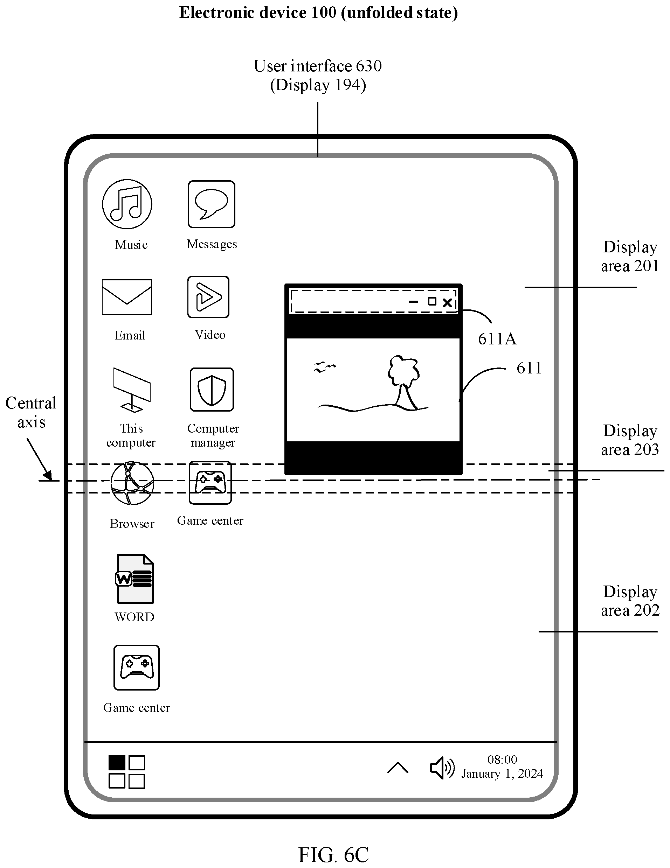

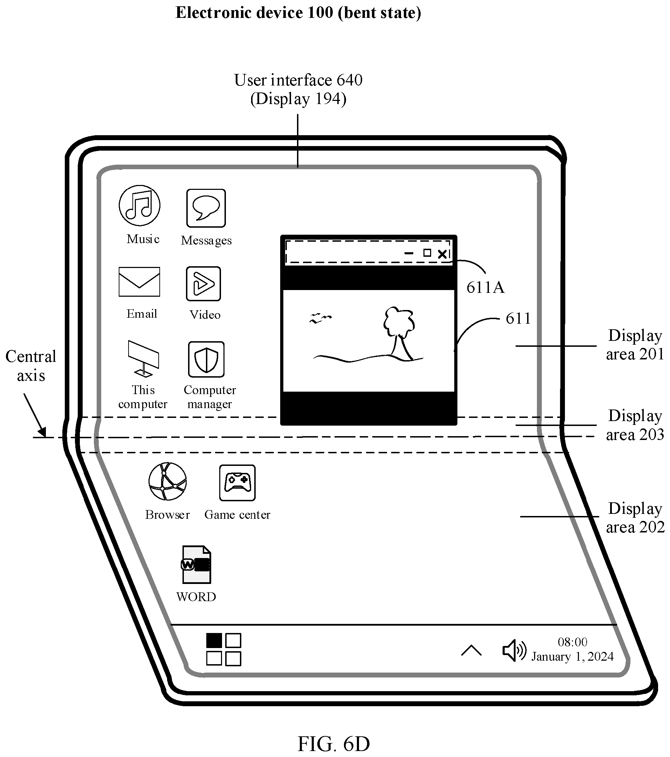

FIG. 6C and FIG. 6D are diagrams of other user interfaces displayed when an electronic device 100 switches from an unfolded state to a bent state according to an embodiment of this application.

As shown in FIG. 6C, the electronic device 100 is in the unfolded state, and the electronic device 100 displays a user interface 630 on a display 194. The user interface 630 includes a desktop and an application window 611 of a Picture application, and the application window 611 may include a title bar 611A. Descriptions of the desktop shown in FIG. 6C are similar to the descriptions of the desktop shown in FIG. 5A. Details are not described again. The application window 611 may be displayed in a first display area on an upper side of a central axis of the display 194. Non-title-bar content located at the bottom of the application window 611 overlaps a display area 203.

In an implementation, the electronic device 100 may detect a folding operation of a user, and the folding operation may reduce an included angle between two ends of a bending part. In response to the electronic device 100 changing from the unfolded state to the bent state, the electronic device 100 may display the application window 611 in the current first display area (to be specific, the first display area in which the application window 611 is located in the unfolded state). For details, refer to FIG. 6D.

As shown in FIG. 6D, the electronic device 100 is in the bent state, and the electronic device 100 may display a user interface 640 on the display 194. The user interface 640 includes a desktop and an application window 611 of the Picture application. Non-title-bar content at the bottom of the application window 611 may overlap the display area 203, and a title bar 611A does not overlap the display area 203. Therefore, the application window 611 on the user interface 640 may be directly displayed in the first display area on the upper side of the central axis of the display 194, without avoiding a partial display area, located on the upper side of the central axis, of the display area 203. Descriptions of the desktop shown in FIG. 6D are similar to the descriptions of the desktop shown in FIG. 5B. Details are not described again.

In some embodiments, when displaying an application interface 1 of an application 1 in a first display area or a second display area in a bent state, an electronic device 100 may receive an input of accessing an application interface 2 of the application 1 by a user. In response to the input, the electronic device 100 may display the application interface 2 in a current display area. For example, the application interface 2 is a sub-interface of the application interface 1.

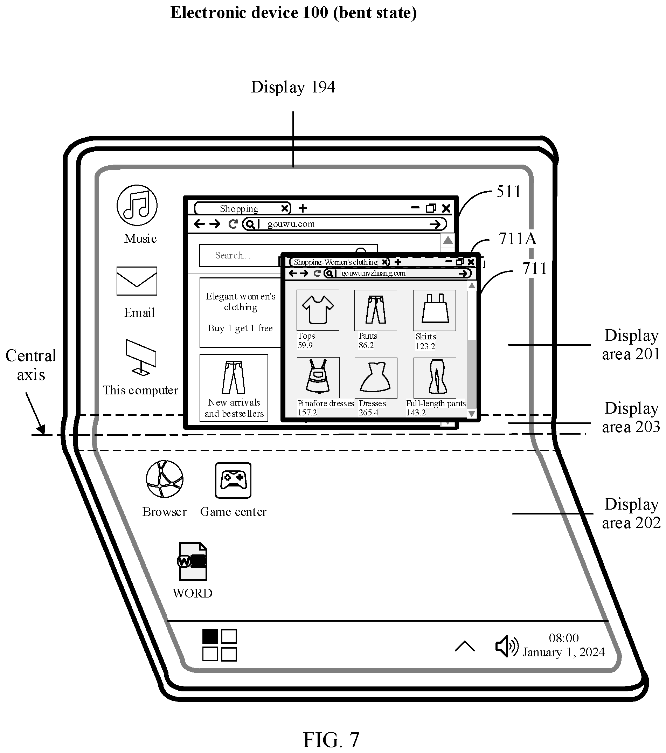

In some examples, after FIG. 5A and FIG. 5B, the electronic device 100 may receive a user operation performed on the application window 511 on the user interface 520 shown in FIG. 5B. The user operation is used to access another application window of the Browser application. As shown in FIG. 7, in response to the user operation, the electronic device 100 may display an application window 711 of the Browser application in a current first display area (to be specific, a first display area for displaying the application window 511), and the application window 711 is displayed at an upper layer of a desktop. Optionally, the application window 711 may be displayed at an upper layer of the application window 511. The application window 711 may be understood as a sub-window of the application window 511. Non-title-bar content at the bottom of the application window 711 may overlap a display area 203, and a title bar 711A does not overlap the display area 203. Therefore, the application window 711 may be directly displayed in the first display area on an upper side of a central axis of a display 194, without avoiding a partial display area, located on the upper side of the central axis, of the display area 203.

In some examples, after FIG. 5A and FIG. 5C, the electronic device 100 may receive a user operation performed on the application window 511 on the user interface 530 shown in FIG. 5C. The user operation is used to access another application window of the Browser application. In response to the user operation, the electronic device 100 may display another application window (for example, the application window 711) of the Browser application in a current second display area. A title bar at the top of the another application window may overlap a display area 203. Therefore, the another application window may be displayed in a display area 202 in the second display area on a lower side of a central axis of a display 194, and is not displayed in a partial display area, located on the lower side of the central axis, of the display area 203. In response to the user operation, the electronic device 100 may display the application window 711 of the Browser application in a current first display area (to be specific, a first display area for displaying the application window 511).

It can be understood that, when accessing a new application interface in the bent state, the electronic device 100 may display the application interface in the first display area or the second display area, instead of displaying the application interface at a center of the display 194 across the central axis (for example, the application window 410 shown in FIG. 4B is displayed across the central axis). In this way, the user can conveniently perform an operation on the application interface. This avoids poor display effect such as visual reflection, to further improve user experience, and further avoids damage to an area near the central axis, to improve product availability.

In some embodiments, when displaying an application window 1 of an application 1 in a first display area or a second display area in a bent state, an electronic device 100 may receive an input of controlling, by a user, the application window 1 to be displayed in a maximized form. In response to the input, the electronic device 100 may display, in a current display area, a maximized application interface corresponding to the application window 1.

In some examples, after FIG. 5A and FIG. 5B, the electronic device 100 may receive a user operation performed on the application window 511 on the user interface 520 shown in FIG. 5B. The user operation may be a touch operation (for example, a tap operation) performed on the maximize control in the title bar 511A. In response to the user operation, the electronic device 100 may display, in a current first display area, a maximized application interface corresponding to the application window 511. For a specific example, refer to the user interface 550 shown in FIG. 5E. The maximized application interface corresponding to the application window 511 is the maximized application interface 551 on the user interface 550.

In some examples, after FIG. 5A and FIG. 5C, the electronic device 100 may receive a user operation performed on the application window 511 on the user interface 530 shown in FIG. 5C. The user operation may be a touch operation (for example, a tap operation) performed on the maximize control in the title bar 511A. In response to the user operation, the electronic device 100 may display, in a current second display area, a maximized application interface corresponding to the application window 511. For a specific example, refer to the user interface 560 shown in FIG. 5F. The maximized application interface corresponding to the application window 511 is the maximized application interface 561 on the user interface 560.

It can be understood that, when the electronic device 100 controls, in the bent state, an application window to be displayed in a maximized form, the application window may be displayed in a maximized form in a current display area, instead of being displayed on the entire display 194 across the central axis. In this way, the user can conveniently perform an operation on the maximized application interface. This avoids poor display effect such as visual reflection, to further improve user experience, and further avoids damage to an area near the central axis, to improve product availability.

In some embodiments, when displaying an application interface 1 of an application 1 in a first display area or a second display area in a bent state, an electronic device 100 may receive an input of controlling, by a user, the application interface 1 to be displayed in a split-screen form. In response to the input, the electronic device 100 may display, in a current display area, a split-screen interface corresponding to the application interface 1. The split-screen interface may include a split-screen window corresponding to the application interface 1 and another split-screen window.

In some examples, after FIG. 5A and FIG. 5B, the electronic device 100 may receive a user operation performed on the user interface 520 shown in FIG. 5B. The user operation may be used to control the application window 511 of the Browser application and an application interface of a Picture application to be displayed in a split-screen form. In response to the user operation, the electronic device 100 may display, in a current first display area, a split-screen interface corresponding to the application window 511. For a specific example, refer to the user interface 580 shown in FIG. 5H. The split-screen interface corresponding to the application window 511 is the split-screen interface 581 on the user interface 580, and the split-screen window 571 on the split-screen interface 581 is a split-screen window obtained by displaying the application window 511 in a split-screen form.

In some examples, after FIG. 5A and FIG. 5C, the electronic device 100 may receive a user operation performed on the user interface 530 shown in FIG. 5C. The user operation may be used to control the application window 511 of the Browser application and an application interface of a Picture application to be displayed in a split-screen form. In response to the user operation, the electronic device 100 may display, in a current second display area, a split-screen interface corresponding to the application window 511. For a specific example, refer to the user interface 590 shown in FIG. 5I. The split-screen interface corresponding to the application window 511 is the split-screen interface 591 on the user interface 590, and the split-screen window 571 on the split-screen interface 591 is a split-screen window obtained by displaying the application window 511 in a split-screen form.

It can be understood that, when the electronic device 100 controls, in the bent state, an application window to be displayed in a maximized form, the application window may be displayed in a maximized form in a current display area, instead of being displayed on the entire display 194 across the central axis. In this way, the user can conveniently perform an operation on the maximized application interface. This avoids poor display effect such as visual reflection, to further improve user experience, and further avoids damage to an area near the central axis, to improve product availability.

In addition to the foregoing embodiments, in some other embodiments, an electronic device 100 in a bent state does not display an application interface of an application 1, and may receive an input of accessing an application interface 1 of the application 1 by a user. In response to the input, the electronic device 100 may also display the application interface 1 in a first display area or a second display area. In some examples, the application interface 1 in the bent state may be displayed in a window form. For specific examples, refer to the application window 511 shown in FIG. 5B and FIG. 5C. In some other examples, the application interface 1 in the bent state may alternatively be displayed in a maximized form. For specific examples, refer to the maximized application interface 551 shown in FIG. 5E and the maximized application interface 561 shown in FIG. 5F. In some other examples, the application interface 1 in the bent state may alternatively be displayed in a split-screen form. For specific examples, refer to the split-screen window 571 and the split-screen window 572 shown in FIG. 5H and FIG. 5I.

The following describes diagrams of example user interfaces on which a user moves/drags an application window when an electronic device 100 is in a bent state.

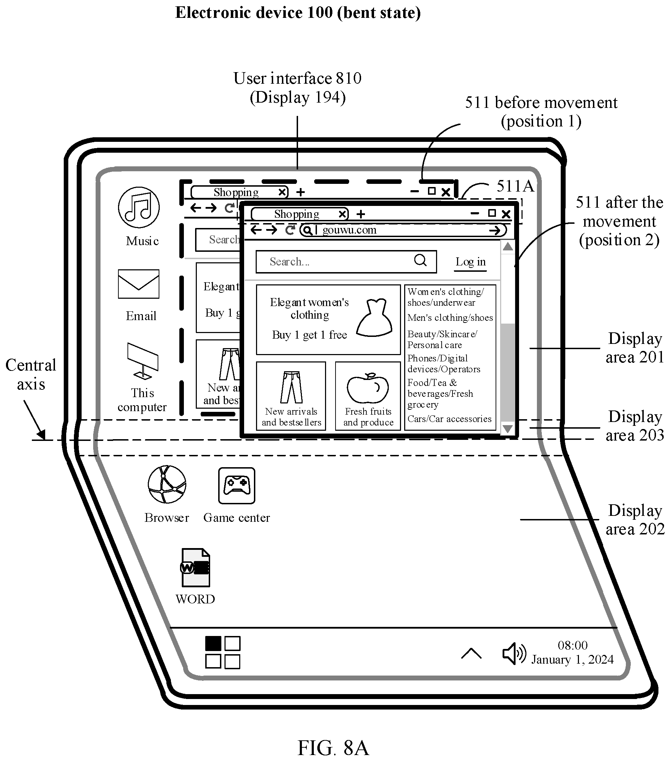

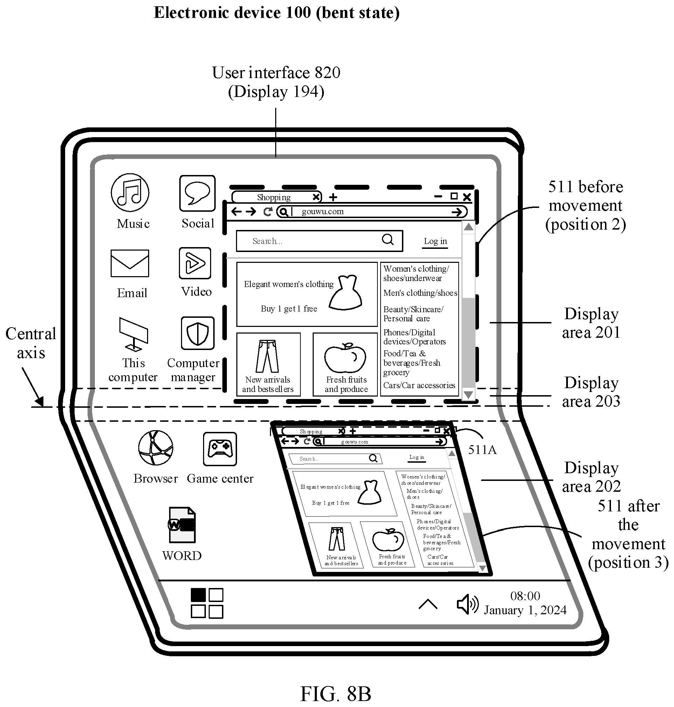

FIG. 8A and FIG. 8B are diagrams of user interfaces on which a user moves/drags an application window according to an embodiment of this application.

As shown in FIG. 8A, an electronic device 100 is in a bent state, and the electronic device 100 may display a user interface 810 on a display 194. The user interface 810 may include a desktop and an application window 511. The application window 511, displayed before movement, on the user interface 810 may be displayed in a first display area on an upper side of a central axis, and is specifically at a position 1 in a display area 201. The position 1 is a display position of the application window 511 on the user interface 520 shown in FIG. 5B. In an implementation, the electronic device 100 may receive a user operation performed on the application window 511 (at the position 1) displayed before the movement. The user operation may be used to move the application window 511. The user operation is, for example, a touch-and-slide operation. The touch-and-slide operation is, for example, sliding toward a lower right corner. It is assumed that a predicted application window 511 obtained through movement in response to the user operation is at a position 2. All content of the application window 511 at the position 2 is displayed in the first display area on the upper side of the central axis, the application window 511 at the position 2 is not displayed across the central axis, and content, in the application window 511 at the position 2, that overlaps a display area 203 is non-title-bar content. Therefore, in response to the user operation, the electronic device 100 may display, at the position 2 in the first display area, an application window 511 obtained through movement.

As shown in FIG. 8B, an electronic device 100 is in a bent state, and the electronic device 100 may display a user interface 820 on a display 194. The user interface 820 may include a desktop and an application window 511. The application window 511, displayed before movement, on the user interface 820 is at a position 2 on an upper side of a central axis. The position 2 is a display position of the application window 511 obtained through movement on the user interface 810 shown in FIG. 8A. In an implementation, the electronic device 100 may receive a user operation performed on the application window 511 (at the position 2) displayed before the movement. The user operation may be used to move the application window 511. The user operation is, for example, a touch-and-slide operation. The touch-and-slide operation is, for example, sliding down. It is assumed that a part of content of a predicted application window 511 obtained through movement in response to the user operation is located in a second display area on a lower side of the central axis, that is, the application window 511 may be displayed across the central axis. Therefore, in response to the user operation, the electronic device 100 may display, at a position 3 in the second display area on the lower side of the central axis, an application window 511 obtained through movement, instead of displaying the application window 511 across the central axis. The application window 511 at the position 3 is displayed in a display area 202 in the second display area, and is not displayed in a partial display area, located on the lower side of the central axis, of a display area 203. A title bar 511A of the application window 511 at the position 3 does not overlap the display area 203.

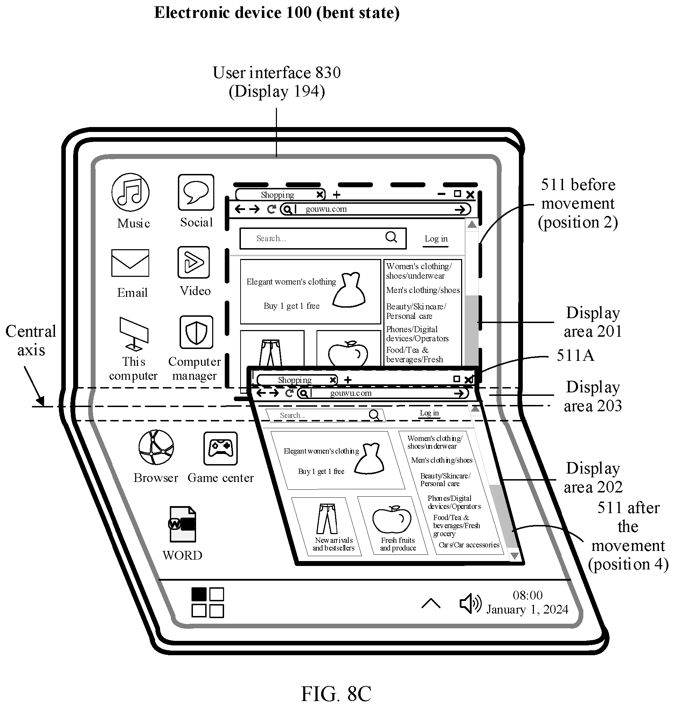

FIG. 8C is a diagram of another user interface on which a user moves/drags an application window according to an embodiment of this application.

As shown in FIG. 8C, an electronic device 100 is in a bent state, and the electronic device 100 may display a user interface 830 on a display 194. The user interface 830 may include a desktop and an application window 511. The application window 511, displayed before movement, on the user interface 830 is at a position 2 on an upper side of a central axis. In an implementation, the electronic device 100 may receive a user operation performed on the application window 511 (at the position 2) displayed before the movement. The user operation may be used to move the application window 511. The user operation is, for example, a touch-and-slide operation. The touch-and-slide operation is, for example, sliding down. It is assumed that a predicted application window 511 obtained through movement in response to the user operation is at a position 4. A title bar 511A of the application window 511 at the position 4 is still displayed in a display area 201, and the title bar 511A does not overlap a display area 203. In this case, in response to the user operation, the electronic device 100 may display, at the position 4, an application window 511 obtained through movement. The title bar 511A of the application window 511 at the position 4 is displayed in a display area 201. Content of the application window 511 at the position 4 other than the title bar 511A is displayed in the display area 203 and the display area 202. The application window 511 at the position 4 is displayed across the central axis.

In an implementation, the electronic device 100 may receive a user operation performed on the application window 511 at the position 4 on the user interface 830 shown in FIG. 8C. The user operation includes, for example, a touch-and-slide operation of sliding down. When a title bar 511A of a predicted application window 511 obtained through movement in response to the user operation overlaps the display area 203 or the title bar 511A is located in the display area 202, in response to the user operation, the electronic device 100 may display, in the display area 202 in a second display area on a lower side of the central axis, an application window 511 obtained through movement, for example, the application window 511 on the user interface 530 shown in FIG. 5C.

In FIG. 8A to FIG. 8C, an example in which the user moves the application window 511 displayed in the first display area on the upper side of the central axis toward the lower side of the central axis is used for description. In some other embodiments, the user may alternatively move an application window 511 displayed in the second display area on the lower side of the central axis toward the upper side of the central axis. For example, it is assumed that the application window 511 at the position 3 on the user interface 820 shown in FIG. 8B is an application window 511 displayed before movement. The electronic device 100 may receive a user operation performed on the application window 511 at the position 3. For example, the user operation includes a touch-and-slide operation of sliding up. When a title bar 511A of a predicted application window 511 obtained through movement in response to the user operation is still located in the display area 202 and does not overlap the display area 203, in response to the user operation, the electronic device 100 may display, in the display area 202, an application window 511 obtained through movement. When a title bar 511A of a predicted application window 511 obtained through movement in response to the user operation overlaps the display area 203 or the title bar 511A is located in the display area 201, in response to the user operation, the electronic device 100 may display, in the first display area on the upper side of the central axis, an application window 511 obtained through movement, for example, display, at the position 2 shown in FIG. 8B or the position 1 shown in FIG. 8A, the application window 511 obtained through movement, instead of displaying the application window 511 across the central axis.

In addition to the application scenarios and the diagrams of the user interfaces in the foregoing examples, in some other embodiments, the first display area may be the display area 201 on the upper side of the central axis of the display 194 shown in FIG. 3A to FIG. 3E, and the second display area may be the display area 202 on the lower side of the central axis of the display 194 shown in FIG. 3A to FIG. 3E. Therefore, when the electronic device 100 is in the bent state, an application interface displayed on the electronic device 100 does not overlap the bendable display area 203.

In some examples, the electronic device 100 is in the unfolded state shown in FIG. 5A, and displays the user interface 510 shown in FIG. 5A. In response to the electronic device 100 changing from the unfolded state to the bent state, the electronic device 100 may display the application window 511 in the display area 201, or display the application window 511 in the display area 203, without displaying the application window 511 in the bendable display area 203.

In some examples, the electronic device 100 is in the unfolded state shown in FIG. 5D, and displays the user interface 540 shown in FIG. 5D. In response to the electronic device 100 changing from the unfolded state to the bent state, the electronic device 100 may display the maximized application interface of the Browser application in the display area 201, or display the maximized application interface of the Browser application in the display area 203, without displaying the maximized application interface of the Browser application in the bendable display area 203. For an example of the maximized application interface of the Browser application, refer to the maximized application interface 551 shown in FIG. 5E and the maximized application interface 561 shown in FIG. 5F.

In some examples, the electronic device 100 is in the unfolded state shown in FIG. 5G, and displays the user interface 570 shown in FIG. 5G. In response to the electronic device 100 changing from the unfolded state to the bent state, the electronic device 100 may display the split-screen interface of the Browser application and the Picture application in the display area 201, or display the split-screen interface of the Browser application and the Picture application in the display area 203, without displaying the split-screen interface of the Browser application and the Picture application in the bendable display area 203. For an example of the split-screen interface of the Browser application and the Picture application, refer to the split-screen interface 581 shown in FIG. 5H and the split-screen interface 591 shown in FIG. 5I.

In some examples, the electronic device 100 is in the unfolded state shown in FIG. 6C, and displays the user interface 630 shown in FIG. 6C. In response to the electronic device 100 changing from the unfolded state to the bent state, the electronic device 100 may display the application window 611 in the display area 201, without displaying the application window 611 in the bendable display area 203.

In some examples, the electronic device 100 is in the bent state shown in FIG. 5B, and displays a user interface 520 similar to that shown in FIG. 5B. However, in this case, the application window 511 is displayed in the display area 201, and does not overlap the display area 203. The electronic device 100 may receive a user operation performed on the application window 511. The user operation is used to access another application window of the Browser application. In response to the user operation, the electronic device 100 may display the another application window of the Browser application in a current first display area (namely, the display area 201).

In some examples, after FIG. 5A and FIG. 5C, the electronic device 100 may receive a user operation performed on the application window 511 on the user interface 530 shown in FIG. 5C. The user operation is used to access another application window of the Browser application. In response to the user operation, the electronic device 100 may display the another application window of the Browser application in a current second display area (namely, the display area 202).

In some examples, the electronic device 100 is in the bent state shown in FIG. 8A, and displays the application window 511 (at the position 1), on the user interface 810 shown in FIG. 8B, that is displayed before movement. The electronic device 100 may receive a user operation performed on the application window 511 (at the position 1) displayed before the movement. The user operation may be used to move the application window 511. The user operation is, for example, a touch-and-slide operation. The touch-and-slide operation includes, for example, sliding down. It is assumed that a predicted application window 511 obtained through movement in response to the user operation is at a position 5. When all content of the application window 511 at the position 5 is located in the display area 201, in response to the user operation, the electronic device 100 may display, at the position 5 in the display area 201, the application window 511 obtained through movement. When a part of content of the application window 511 at the position 5 overlaps the display area 203 or all content of the application window 511 is located in the display area 202, in response to the user operation, the electronic device 100 may display, in the display area 202, the application window 511 obtained through movement, without displaying the application window 511 in the bendable display area 203. In addition to the foregoing examples in which an application window is moved toward the lower side of the central axis, when an application window is moved toward the upper side of the central axis, the application window may not be displayed in the bendable display area 203 either. Specific examples are similar. Details are not described again.

The following describes schematic flowcharts of display methods provided in embodiments of this application. The method may be applied to the electronic device 100 shown in FIG. 1. The method may also be applied to the electronic device 100 shown in FIG. 2. The method may also be applied to the electronic device 100 shown in FIG. 3A to FIG. 3E.

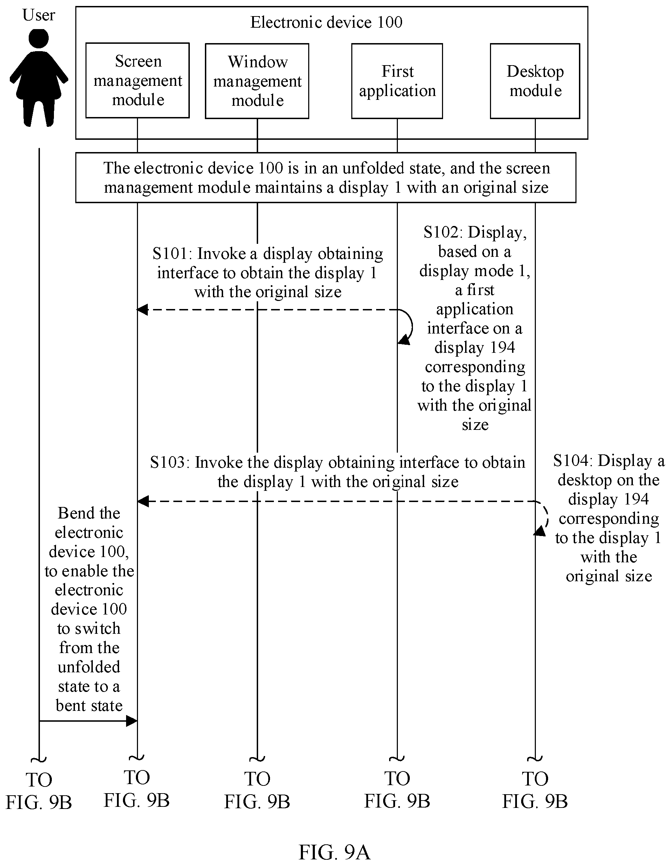

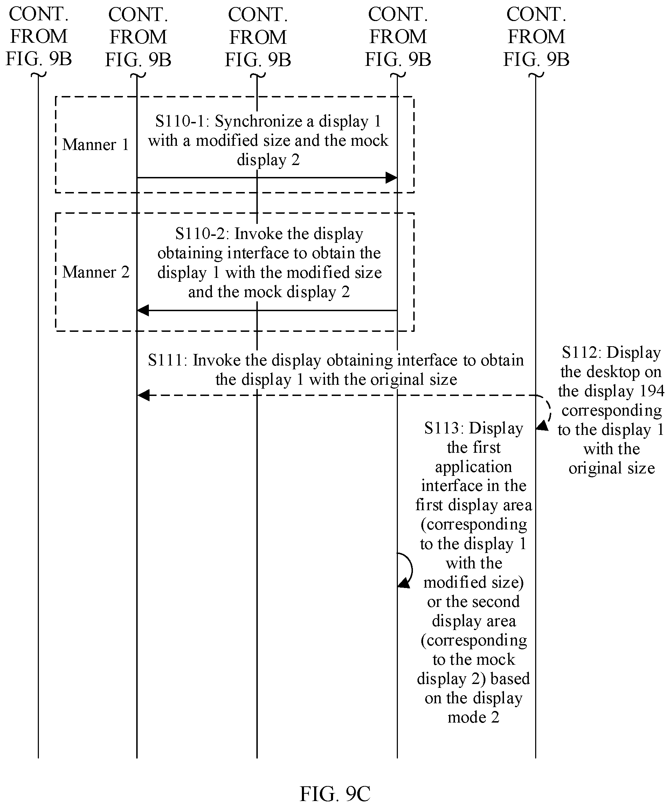

FIG. 9A to FIG. 9C are a schematic flowchart of a display method according to an embodiment of this application. The method may include but is not limited to the following steps.

S101: When an electronic device 100 is in an unfolded state, a first application of the electronic device 100 invokes a display obtaining interface to obtain a display 1 with an original size from a screen management module of the electronic device 100.

S102: When the electronic device 100 is in the unfolded state, the first application of the electronic device 100 displays, based on a display mode 1, a first application interface on a display 194 corresponding to the display 1 with the original size.

S103: When the electronic device 100 is in the unfolded state, a desktop module of the electronic device 100 invokes the display obtaining interface to obtain the display 1 with the original size from the screen management module of the electronic device 100.

S104: When the electronic device 100 is in the unfolded state, the desktop module of the electronic device 100 displays a desktop on the display 194 corresponding to the display 1 with the original size.

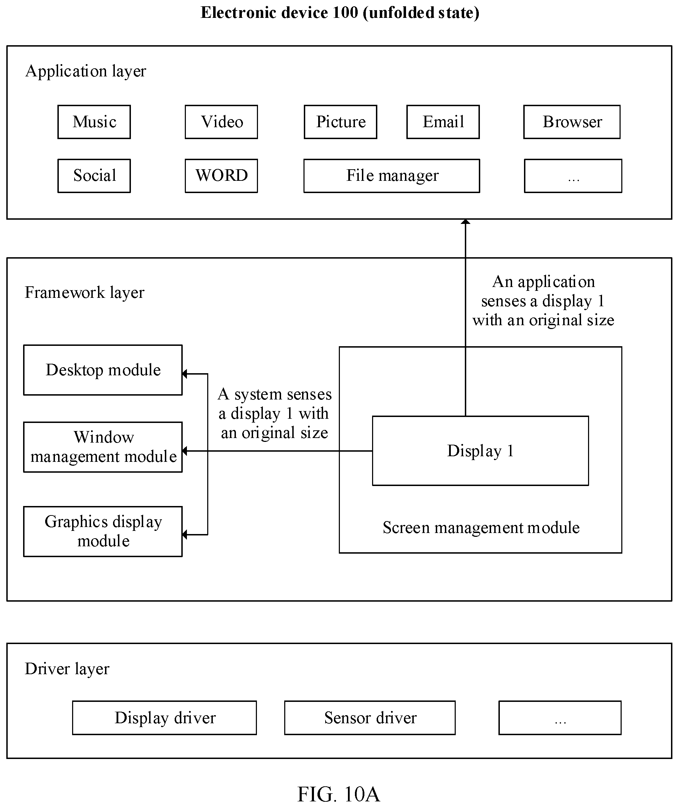

In an implementation, when the electronic device 100 is in the unfolded state, the screen management module of the electronic device 100 maintains the display 1 with the original size. The original size of the display 1 is the same as a size of the display 194 of the electronic device 100. A display area corresponding to the display 1 with the original size is all of display areas of the display 194. All of the display areas are, for example, the display area 201, the display area 202, and the display area 203 shown in FIG. 3A to FIG. 3E. For an example of a software architecture of the electronic device 100 in the unfolded state, refer to FIG. 10A. The software architecture shown in FIG. 10A is similar to the software architecture shown in FIG. 2. As shown in FIG. 10A, when the electronic device 100 is in the unfolded state, a system of the electronic device 100 may sense the display 1 with the original size from the screen management module. For example, the desktop module, a window management module, or a graphics display module at a framework layer may sense the display 1 with the original size from the screen management module at the framework layer. For an example sensing manner, refer to S101. Any application at an application layer of the electronic device 100 may sense the display 1 with the original size from the screen management module at the framework layer. For an example sensing manner, refer to S103.

The display obtaining interface in S101 and S103 is, for example, a display.getAllDisplay interface. S101 is an optional step. S103 is an optional step. In some examples, the first application and the desktop module may sense the display 1 with the original size by default, without invoking the display obtaining interface. In this case, S101 and S103 may not be performed.

S104 is an optional step.

The display mode 1 may include a display position 1 and a display size 1 of the first application interface.

In an implementation, the first application interface may be an application window displayed in a window form on the first application interface. In this case, the electronic device 100 may or may not display the desktop. For example, a size of the application window is less than the size of the display 1.

In another implementation, the first application interface may be a maximized application interface displayed in a maximized form on the first application interface. In this case, the electronic device 100 may not display the desktop. For example, a size of the maximized application interface may be less than or equal to the size of the display 1.

In another implementation, the first application interface is a first split-screen interface. In this case, the electronic device 100 may or may not display the desktop. The first split-screen interface includes a plurality of split-screen windows, and the plurality of split-screen windows include a split-screen window of the first application. In some examples, all of the plurality of split-screen windows are split-screen windows of the first application. In this case, the first application interface is displayed by the first application. In some other examples, the plurality of split-screen windows include a split-screen window of the first application and a split-screen window of another application. In this case, the first application interface is jointly displayed by the first application and the another application. For ease of description, FIG. 9A to FIG. 9C show only the first application. The plurality of split-screen windows on the first split-screen interface do not overlap. For example, a size of each split-screen window on the first split-screen interface is less than the size of the display 1. Optionally, a sum of sizes of the plurality of split-screen windows on the first split-screen interface (that is, a size of the split-screen interface) is less than or equal to the size of the display 1.

In an implementation, when the first application displays the first application interface in the display area corresponding to the display 1 with the original size (that is, all of the display areas of the display 194), the first application interface may be displayed across a central axis. For specific examples, refer to FIG. 5A, FIG. 5D, and FIG. 5G. In another implementation, the first application interface may alternatively not be displayed across the central axis. For specific examples, refer to FIG. 6A and FIG. 6C.

S105: When the electronic device 100 changes from the unfolded state to a bent state, the screen management module of the electronic device 100 reports, to the window management module, that the electronic device 100 is in the bent state (carrying a size of a bent display area on the display 194).

In an implementation, when a user bends the electronic device 100 to enable the electronic device 100 to change from the unfolded state to the bent state, a camera and/or a sensor (for example, an angle sensor, an acceleration sensor, or a gyroscope sensor) of the electronic device 100 may report a detection signal to the screen management module, and the screen management module may determine, based on the detection signal, that the electronic device 100 changes from the unfolded state to the bent state.

In an implementation, when the screen management module determines that the electronic device 100 changes from the unfolded state to the bent state, the screen management module may report, to the window management module, that the electronic device 100 is in the bent state, and may send, to the window management module, the size of the display 194 and the size of the bent display area on the display 194. The bent display area on the display 194 may be the display area 203 located in the bending part shown in FIG. 3A to FIG. 3E.

S106: The window management module of the electronic device 100 obtains sizes of a first display area and a second display area that are located on different sides of the central axis of the display 194.

In an implementation, after receiving the reporting, by the screen management module, that the electronic device 100 is in the bent state, the window management module may still maintain the display 1 with the original size, and determine the sizes of the first display area and the second display area based on the size of the display 194 and the size of the bent display area on the display 194 that are sent by the screen management module.

In an implementation, neither the first display area nor the second display area overlaps the bent display area. In another implementation, the first display area partially overlaps the bent display area, and the second display area partially overlaps the bent display area.

For example, the display 194 is the display 194 shown in FIG. 3A to FIG. 3E, and the bent display area on the display 194 is the display area 203 shown in FIG. 3A to FIG. 3E. In one case, neither the first display area nor the second display area overlaps the bent display area. The first display area may be the display area 201 shown in FIG. 3A to FIG. 3E. The second display area may be the display area 202 shown in FIG. 3A to FIG. 3E. In another case, the first display area partially overlaps the bent display area, and the second display area partially overlaps the bent display area. The first display area may be the display area 201 and the partial display area, located on the upper side of the central axis, of the display area 203 shown in FIG. 3A to FIG. 3E. The second display area may be the display area 202 and the partial display area, located on the lower side of the central axis, of the display area 203 shown in FIG. 3A to FIG. 3E.

S107: The window management module of the electronic device 100 determines a display mode 2 of the first application interface in the bent state.

In an implementation, when the electronic device 100 is in the unfolded state, the first application displays the first application interface in the display mode 1. After the electronic device 100 switches from the unfolded state to the bent state, the window management module may redetermine the display mode 2 of the first application interface in the bent state. The display mode 2 may include a display position 2 and a display size 2. In an implementation, the window management module may determine the display mode 2 based on at least one of the following: the display mode 1, a size of the first display area, a size of the second display area, and the size of the bent display area.

In an implementation, the display position 2 in the display mode 2 is in the first display area or the second display area. To be specific, when the electronic device 100 is in the bent state, the first application interface is displayed in the first display area or the second display area without crossing the central axis. In some examples, the window management module may preset a default display area in the bent state. The default display area is the first display area or the second display area. If the first application interface has a historical display area (the historical display area is the first display area or the second display area) in the bent state, it is determined that the display position 2 is in the historical display area. If the first application interface has no historical display area in the bent state, it is determined that the display position 2 is in the default display area. In addition, in some other examples, the window management module may recognize whether a title bar of a first application interface at the display position 1 is located in the first display area or the second display area. If the title bar is located in the first display area, it is determined that the display position 2 is in the first display area. If the title bar is located in the second display area, it is determined that the display position 2 is in the second display area. A manner of determining whether the display position 2 is in the first display area or the second display area is not limited in this embodiment of this application.

In an implementation, when neither the first display area nor the second display area overlaps the bent display area, a first application interface in the determined display mode 2 does not overlap the bent display area. In another implementation, when the first display area partially overlaps the bent display area and the second display area partially overlaps the bent display area, key content (for example, a title bar) of the first application interface in the determined display mode 2 does not overlap the bent display area.

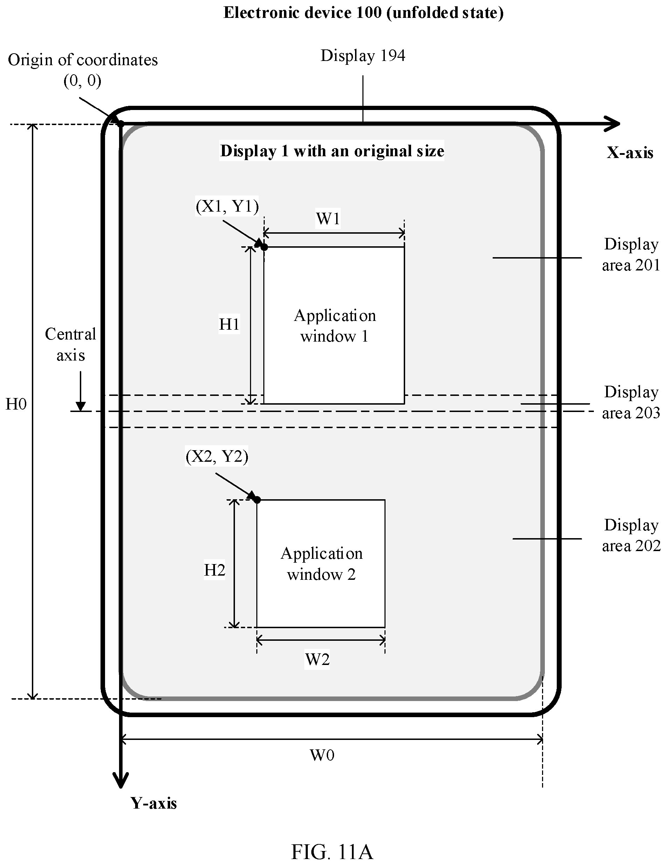

In an implementation, the display position 2 may include coordinates of the first application interface, for example, coordinates of a vertex in an upper left corner of the first application interface. In an implementation, the display size 2 includes, for example, a length and a width of the first application interface in a rectangular shape. In some examples, if a first application interface with the display size 1 may be displayed at the display position 2, without exceeding the first display area or the second display area in which the first application interface is currently located, and without overlapping between key content and the bent display area, it can be directly determined that the display size 2 is the display size 1. In another implementation, if a first application interface with the display size 1 is displayed at the display position 2, while exceeding the first display area or the second display area in which the first application interface is currently located, and/or causing overlapping between key content and the bent display area, the display size 1 may be reduced to obtain the display size 2. For example, a size of an excess part or an overlapping part is subtracted, or is reduced proportionally. A specific manner of reduction is not limited in this embodiment of this application. For an example of calculating the display position 2 and the display size 2, refer to FIG. 11A to FIG. 11D below. Details are not described herein.

S108: The window management module of the electronic device 100 sends the display mode 2 of the first application interface in the bent state to the first application.

In an implementation, the window management module may send the display mode 2 of the first application interface in the bent state to the first application through a window.onWindowRectChange callback method.

In FIG. 9A to FIG. 9C, an example in which the window management module actively sends the display mode 2 of the first application interface in the bent state to the first application is used for description. In some other embodiments, alternatively, the first application may actively invoke an interface of the window management module to obtain the display mode 2 of the first application interface in the bent state from the window management module.

In FIG. 9A to FIG. 9C, an example in which the display mode 2 is different from the display mode 1 is used for description. In some other embodiments, when the display mode 2 is the same as the display mode 1, S108 may not be performed.

It can be understood that, in FIG. 9A to FIG. 9C, the first application interface is used as an example for description. During specific implementation, there may be a plurality of application interfaces. In this case, in S107 and S108, the window management module may traverse the plurality of application interfaces, and determine a display mode of each application interface in the bent state. The window management module may send the determined display mode in the bent state to an application corresponding to each application interface.

In some embodiments, a display on which the first application interface in the display mode 2 is located is different from a display on which the first application interface in the display mode 1 is located. The window management module may not only send the display mode 2 of the first application interface in the bent state to the first application, but also send, to the first application, information about the display on which the first application interface in the display mode 2 is located (which may also be understood as a changed display), for example, send, to the first application through a display.onDisplayChange callback method, the information about the display on which the first application interface in the display mode 2 is located. When the first application interface in the display mode 2 is located in the first display area, the window management module may send, to the first application, information about a modified display 1 corresponding to the first display area. When the first application interface in the display mode 2 is located in the second display area, the window management module may send, to the first application, information about a display 2 corresponding to the second display area. Information about a display may include but is not limited to a name and/or an identifier (identity document, id) of the display and a size of the display.

S109: When the electronic device 100 is in the bent state, the screen management module of the electronic device 100 determines to maintain the display 1 and the mock display 2.

In an implementation, when the electronic device 100 is in the bent state, the screen management module may obtain a display 1 with a modified size, and create a mock display (mock display): the display 2. A sum of a size of the display 1 with the modified size and a size of the display 2 may be equal to the size of the display 1 with the original size. A display area corresponding to the display 1 with the modified size and a display area corresponding to the display 2 may be two display areas on different sides of the central axis of the display 194. For example, on the electronic device 100 shown in FIG. 3A to FIG. 3E, the display area corresponding to the display 1 with the original size is all display areas of the display 194. A display area corresponding to the display 1 with the modified size is a display area on the upper side of the central axis of the display 194, to be specific, the display area 201 and the partial display area, located on the upper side of the central axis, of the display area 203. A display area corresponding to the display 2 is a display area on the lower side of the central axis of the display 194, to be specific, the display area 202 and the partial display area, located in the lower side of the central axis, of the display area 203. The display 1 with the modified size and the display 2 are visible only to an application (for example, a third-party application), and are invisible to the system of the electronic device 100. The display 1 with the original size is visible to the system of the electronic device 100.

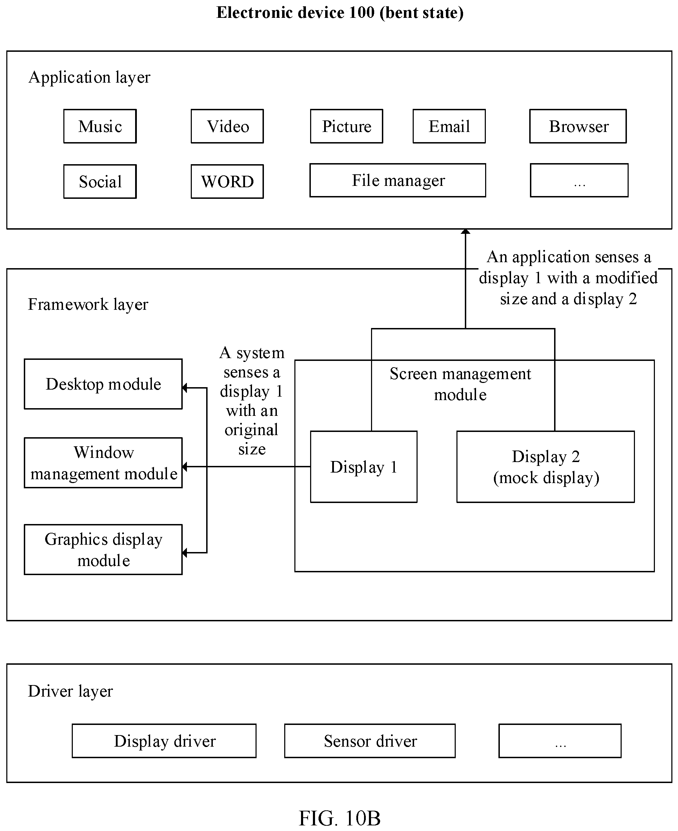

For an example of a software architecture of the electronic device 100 in the bent state, refer to FIG. 10B. The software architecture shown in FIG. 10B is similar to the software architecture shown in FIG. 2. As shown in FIG. 10B, when the electronic device 100 is in the bent state, the screen management module at the framework layer may maintain the display 1 and the display 2 (the display 2 is a mock display). The system of the electronic device 100 may sense the display 1 with the original size from the screen management module. For example, the desktop module, the window management module, or the graphics display module at the framework layer may sense the display 1 with the original size from the screen management module at the framework layer. For an example sensing manner, refer to S111. Any application at the application layer of the electronic device 100 may sense the display 1 with the modified size and the display 2 from the screen management module at the framework layer. For an example sensing manner, refer to S110-1 and S110-2. For examples of the display 1 with the original size, the display 1 with the modified size, and the display 2, refer to FIG. 11A to FIG. 11D. In FIG. 10B, the system of the electronic device 100 and an application sense different displays, and therefore use different display areas. In this way, "allocation" of display areas is implemented, to reduce an amount of application adaptation and achieve higher product availability.

When the electronic device 100 is in the bent state, a manner of sensing, by the first application of the electronic device 100, a display maintained by the screen management module may be a manner 1 shown in S110-1 or a manner 2 shown in S110-2.

S110-1: The screen management module of the electronic device 100 synchronizes the display 1 with the modified size and the mock display 2 to the first application.

In an implementation, the screen management module may notify the first application of size change information of the display 1 and the newly added display 2 through the display.onDisplayChange callback method.

S110-2: The first application of the electronic device 100 invokes the display obtaining interface to obtain the display 1 with the modified size and the mock display 2 from the screen management module of the electronic device 100.

In an implementation, the display obtaining interface is, for example, the display.getAllDisplay interface. When the electronic device 100 is in the bent state, the screen management module may determine whether a caller of the display obtaining interface is an application (for example, a third-party application) or a system module (for example, the desktop module). If the caller is an application, the screen management module returns the display 1 with the modified size and the mock display 2 to the caller, for example, as shown in S110-2. If the caller is a system module, the screen management module returns the display 1 with the original size to the caller, for example, as shown in S111.

S111: When the electronic device 100 is in the bent state, the desktop module of the electronic device 100 invokes the display obtaining interface to obtain the display 1 with the original size from the screen management module of the electronic device 100.

S112: When the electronic device 100 is in the bent state, the desktop module of the electronic device 100 displays the desktop on the display 194 corresponding to the display 1 with the original size.

S111 is an optional step, and S112 is an optional step.

S113: The first application of the electronic device 100 displays the first application interface in the first display area (corresponding to the display 1 with the modified size) or the second display area (corresponding to the mock display 2) based on the display mode 2.

A sequence of S109, S110-1/S110-2, and S113 is not limited.

In some embodiments, in S111, the screen management module may further send the size of the bent display area on the display 194 to the desktop module. In S112, the desktop module may not display an operable control on the desktop in the bent display area, for example, not display an icon of an application. In other words, when the electronic device 100 is in the bent state, an operable control on the desktop may not be displayed in the bent display area.

In addition to the embodiment shown in FIG. 9A to FIG. 9C, in some other embodiments, when the screen management module determines that the electronic device 100 changes from the unfolded state to the bent state, the screen management module may alternatively report, to the desktop module, that the electronic device 100 is in the bent state, and may also send, to the desktop module, the size of the bent display area on the display 194, so that an operable control on the desktop is not displayed in the bent display area.

It can be understood that, for an example application scenario of the process shown in FIG. 9A to FIG. 9C, reference may be made to FIG. 5A to FIG. 5I, and FIG. 6A to FIG. 6D.

FIG. 11A to FIG. 11D are diagrams of display modes of some application interfaces in different physical states according to an embodiment of this application. In FIG. 11A to FIG. 11D, an application window is used as an example for description.

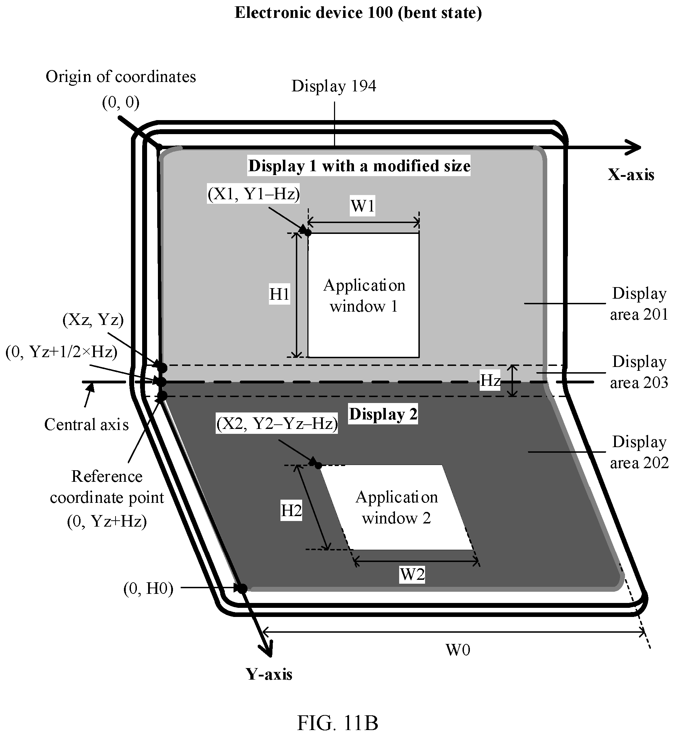

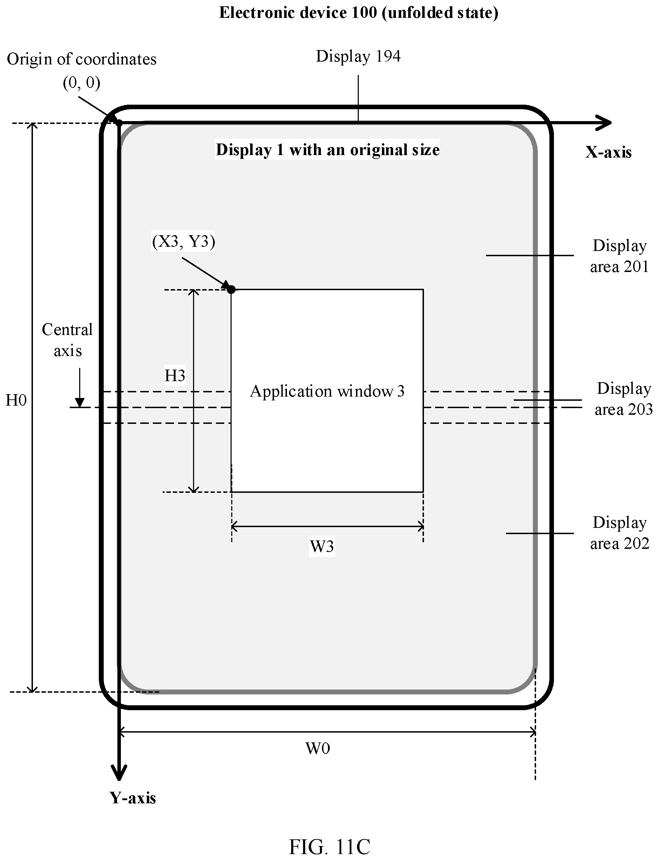

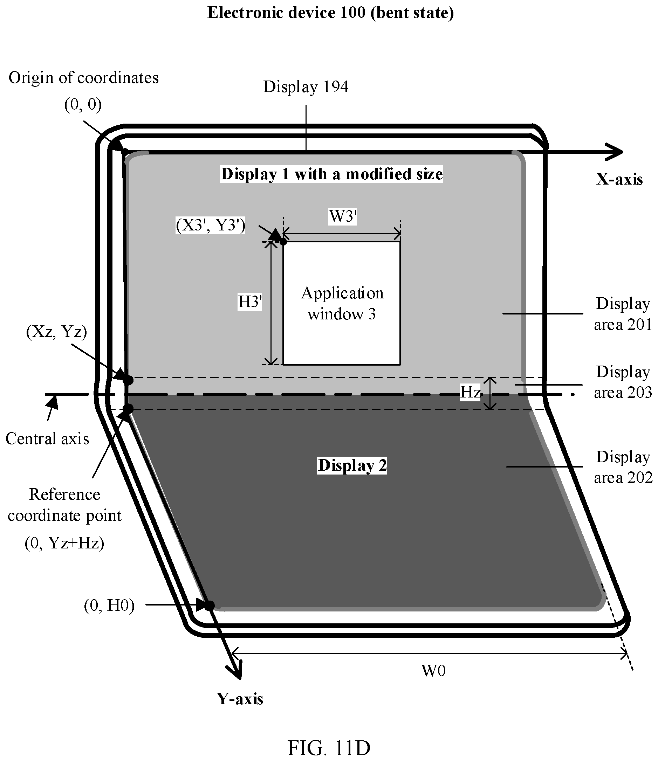

An electronic device 100 may change from an unfolded state shown in FIG. 11A to a bent state shown in FIG. 11B. The electronic device 100 may also change from an unfolded state shown in FIG. 11C to a bent state shown in FIG. 11D.

As shown in FIG. 11A and FIG. 11C, when the electronic device 100 is in the unfolded state, an application may sense a display 1 with an original size that is maintained by a screen management module, and display an application window in a display area (namely, a display 194) corresponding to the display 1 with the original size. In FIG. 11A, an example in which an application window 1 of an application 1 is located in a display area 201 and an application window 2 of an application 2 is located in a display area 202 is used for description. In FIG. 11C, an example in which an application window 3 of an application 3 is displayed in a display area 201, a display area 203, and a display area 202 across a central axis is used for description.

As shown in FIG. 11B and FIG. 11D, when the electronic device 100 is in the bent state, an application may sense a display 1 with a modified size and a display 2 that are maintained by a screen management module, and the application may sense whether a display on which an application window is located is the display 1 with the modified size or the display 2. In FIG. 11B, an example in which an application window 1 of an application 1 is located in a display area 201 and an application window 2 of an application 2 is located in a display area 202 is used for description. Therefore, the application 1 may sense that a display on which the application window 1 is located is the display 1 with the modified size, and the application 2 may sense that a display on which the application window 2 is located is the display 2. In FIG. 11D, an example in which an application window 3 of an application 3 is located in a display area 201 is used for description. Therefore, the application 3 may sense that a display on which the application window 3 is located is the display 1 with the modified size.

In FIG. 11A to FIG. 11D, an example in which an upper left corner of the display 194 is an origin of coordinates (0, 0), a short side of the display 194 is an X-axis, and a long side of the display 194 is a Y-axis is used for description. In the following descriptions, a size of a rectangle may be expressed as Rect(X0, Y0, width, height), where coordinates of an upper left corner of the rectangle are (X0, Y0), a width of the rectangle is width, and a height of the rectangle is height.

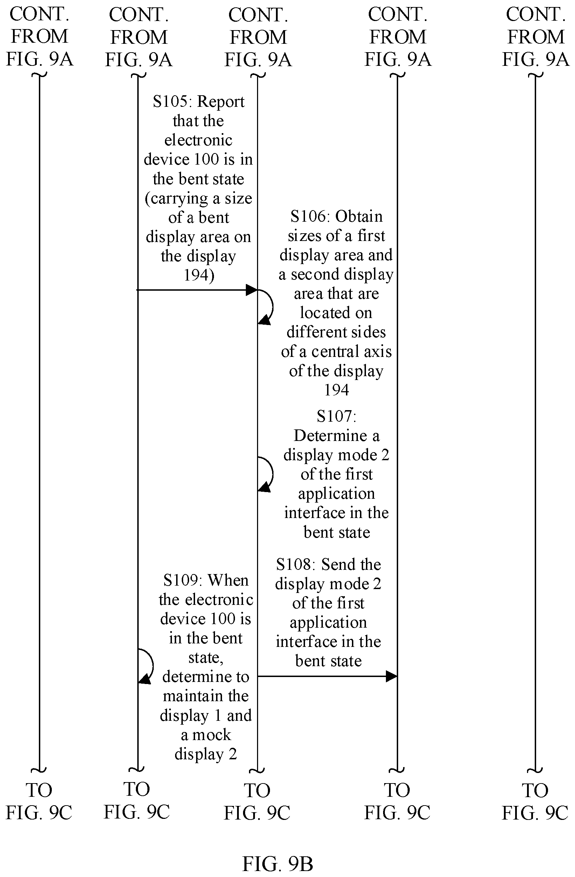

In S105 in FIG. 9B, the window management module may receive the size of the display 194 and the size of the bent display area on the display 194 that are sent by the screen management module. The size of the display 194 is the original size of the display 1. As shown in FIG. 11A and FIG. 11C, the size of the display 194 may be expressed as RectA(0, 0, WO, H0). As shown in FIG. 11B and FIG. 11D, the size of the bent display area (namely, the display area 203) on the display 194 may be expressed as RectZ(Xz, Yz, WO, Hz). A size of the display area 201 on the display 194 may be expressed as RectB(0, 0, WO, Yz). A size of the display area 202 on the display 194 may be expressed as RectC(0, Yz+Hz, WO, H0-Yz-Hz). A size of the display 1 with the modified size may be expressed as RectD(0, 0, WO, Yz+1/2×Hz). A size of the display 2 may be expressed as RectE(0, Yz+1/2×Hz, WO, H0-Yz-1/2×Hz).

In S106 in FIG. 9B, the window management module may determine the sizes of the first display area and the second display area based on the size of the display 194 and the size of the bent display area on the display 194 that are sent by the screen management module. In an implementation, neither the first display area nor the second display area overlaps the bent display area. The first display area is the display area 201 shown in FIG. 11A to FIG. 11D, and a size of the first display area is expressed as RectB(0, 0, WO, Yz). The second display area is the display area 202 shown in FIG. 11A to FIG. 11D, and a size of the second display area is expressed as RectC(0, Yz+Hz, WO, H0-Yz-Hz). In another implementation, the first display area partially overlaps the bent display area, and the second display area partially overlaps the bent display area. A size of the first display area is the size of the display 1 with the modified size shown in FIG. 11B and FIG. 11D, and is expressed as RectD(0, 0, WO, Yz+1/2×Hz). A size of the second display area is the size of the display 2 shown in FIG. 11B and FIG. 11D, and is expressed as RectE(0, Yz+1/2×Hz, WO, H0-Yz-1/2×Hz).

The following describes examples of determining the display mode 2 (including the display position 2 and the display size 2) in S108 in FIG. 9B. An example in which the first display area is the display area 201 and the second display area is the display area 202 is used below for description. Therefore, when the electronic device 100 is in the bent state, an application window is not displayed in the bendable display area 203.

Example 1: For the application window 1 of the application 1, as shown in FIG. 11A, when the electronic device 100 is in the unfolded state, a display on which the application window 1 is located is the display 1 with the original size, the application window 1 is displayed in the display area 201 and the display area 203 on an upper side of the central axis of the display 194, and a size of the application window 1 (namely, a display mode 1 of the application window 1) may be expressed as RectF(X1, Y1, W1, H1). As shown in FIG. 11B, when the electronic device 100 is in the bent state, a display on which the application window 1 is located is the display 1 with the modified size, the application window 1 is displayed in the display area 201 on an upper side of the central axis without overlapping the display area 203, and a size of the application window 1 (namely, a display mode 2 of the application window 1) may be expressed as RectF'(X1, Y1-Hz, W1, H1). A display size 1 (including the width W1 and the height H1) in the display mode 1 is small, and the application window 1 does not exceed the display area 201 when being displayed in the display area 201 based on the display size 1. Therefore, a display size 2 may be directly set to the display size 1. When the application window 1 is displayed at a display position 1 in the display mode 1, the application window 1 exceeds the display area 201. Therefore, the display position 1 may be moved toward the upper side of the central axis to obtain a display position 2. For example, as shown in FIG. 11B, the display position 1 includes coordinates (X1, Y1) of an upper left corner of the application window 1, the display position 2 includes coordinates (X1, Y1-Hz) of the upper left corner of the application window 1, and the display position 2 is at a distance of Hz above the display position 1. A reference coordinate point of the display 1 with the modified size is the origin of coordinates (0, 0). Therefore, coordinates do not need to be converted.

Example 2: For the application window 2 of the application 2, as shown in FIG. 11A, when the electronic device 100 is in the unfolded state, a display on which the application window 2 is located is the display 1 with the original size, the application window 2 is displayed in the display area 202 on a lower side of the central axis of the display 194, and a size of the application window 2 (namely, a display mode 1 of the application window 2) may be expressed as RectG(X2, Y2, W2, H2). As shown in FIG. 11B, when the electronic device 100 is in the bent state, a display on which the application window 2 is located is the display 2, the application window 2 is displayed in the display area 202 on a lower side of the central axis, and a size of the application window 2 (namely, a display mode 2 of the application window 2) may be expressed as RectG'(X2, Y2-Yz-Hz, W2, H2). A display size 1 (including the width W2 and the height H2) in the display mode 1 is small, and the application window 2 does not exceed the display area 202 when being displayed in the display area 202 based on the display size 1. Therefore, a display size 2 may be directly set to the display size 1. When the application window 2 is displayed at a display position 1 in the display mode 1, the application window 2 does not exceed the display area 202 and does not overlap the display area 203. Therefore, a display position 2 may be directly set to the display position 1. However, a reference coordinate point of the display 2 is not the origin of coordinates (0, 0), but is a point on the lower side of the central axis. It is assumed that the reference coordinate point is a vertex (0, Yz+Hz) in an upper left corner of the display area 202. Therefore, coordinates of the display position 2 need to be converted. The display position 1 includes coordinates (X2, Y2) of an upper left corner of the application window 2, and the display position 2 includes coordinates (X2, Y2-Yz-Hz) of the upper left corner of the application window 2 relative to the reference coordinate point (0, Yz+Hz).

Example 3: For the application window 3 of the application 3, as shown in FIG. 11C, when the electronic device 100 is in the unfolded state, a display on which the application window 3 is located is the display 1 with the original size, the application window 3 is displayed on the display 194 across the central axis, to be specific, is displayed in the display area 201, the display area 203, and the display area 202, and a size of the application window 3 (namely, a display mode 1 of the application window 3) may be expressed as RectH(X3, Y3, W3, H3). As shown in FIG. 11D, when the electronic device 100 is in the bent state, a display on which the application window 3 is located is the display 1 with the modified size, the application window 3 is displayed in the display area 201 on an upper side of the central axis, and a size of the application window 3 (namely, a display mode 2 of the application window 3) may be expressed as RectH(X3', Y3', W3', H3'). A display size 1 (including the width W3 and the height H3) in the display mode 1 is large, and the application window 3 exceeds the display area 201 when being displayed in the display area 201 based on the display size 1. Therefore, the display size 1 may be reduced to obtain a display size 2. For example, if the width W3 of the application window 3 exceeds a width of the display area 201 and the height H3 does not exceed a height of the display area 201, W3 is reduced to obtain W3', and H3' is set to H3. If the height H3 of the application window 3 exceeds a height of the display area 201 and the width W3 does not exceed a width of the display area 201, H3 is reduced to obtain H3', and W3' is set to W3. If the width W3 of the application window 3 exceeds a width of the display area 201 and the height H3 of the application window 3 exceeds a height of the display area 201, W3 is reduced to obtain W3', and H3 is reduced to obtain H3'. An application window 3 with the display size 1 at a display position 1 is displayed across the central axis, and an application window 3 with the display size 2 at a display position 2 is displayed in the display area 201 without crossing the central axis. Coordinates (X3, Y3) of an upper left corner of the application window 3 that are included in the display position 1 may be the same as or different from coordinates (X3', Y3') of the upper left corner of the application window 3 that are included in the display position 2. For example, the coordinates (X3', Y3') are above the coordinates (X3, Y3). A reference coordinate point of the display 1 with the modified size is the origin of coordinates (0, 0). Therefore, coordinates do not need to be converted. In addition, in some other examples, in the bent state, the application window 3 may alternatively be displayed on the display 2. In this case, coordinates need to be converted. Other descriptions are similar. Details are not described again.

It can be understood that the exceeding a display area means exceeding an operating area, in the display area, that can be used to display an application window. An operating area in a display area may be less than or equal to the display area.

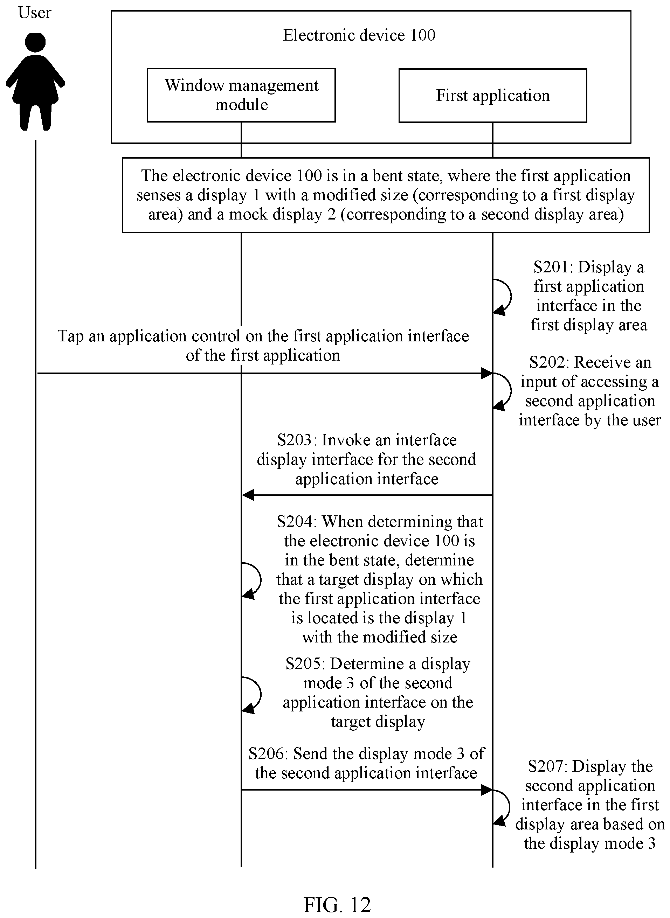

FIG. 12 is a schematic flowchart of another display method according to an embodiment of this application. The method may include but is not limited to the following steps.

S201: When an electronic device 100 is in a bent state, a first application of the electronic device 100 displays a first application interface in a first display area.

In an implementation, the electronic device 100 may change from an unfolded state to the bent state before S201, for example, perform the process shown in FIG. 9A to FIG. 9C before S201. When the electronic device 100 is in the bent state, the first application may sense, from a screen management module, a display 1 with a modified size (corresponding to the first display area) and a mock display 2 (corresponding to a second display area).

In FIG. 12, an example in which the first application displays the first application interface in the first display area is used for description. Therefore, the first application may sense the display 1 with the modified size on which the first application interface is located. For descriptions of the first application interface, refer to the descriptions of the first application interface in FIG. 9A to FIG. 9C.

S202: The first application of the electronic device 100 receives an input of accessing a second application interface by a user.

In an implementation, the first application may receive the input of accessing the second application interface of the first application by the user. For example, the user taps an application control on the first application interface of the first application, where the application control is used to access the second application interface of the first application.

S203: The first application of the electronic device 100 invokes an interface display interface for the second application interface.

In an implementation, in response to the input in S202, the first application may invoke, for the second application interface, the interface display interface provided by a window management module, to obtain a display mode of the second application interface.

S204: When determining that the electronic device 100 is in the bent state, the window management module of the electronic device 100 determines that a target display on which the first application interface is located is the display 1 with the modified size.

In an implementation, when the first application invokes the interface display interface provided by the window management module, the window management module may determine whether the electronic device 100 is currently in the bent state. If the electronic device 100 is in the bent state, the window management module may determine whether the target display on which the first application interface (to be specific, a trigger interface for accessing the second application interface) of the first application is located is the display 1 with the modified size or the display 2. In S201, the first application interface is located in the first display area. Therefore, the target display on which the first application interface is located is the display 1 with the modified size that corresponds to the first display area. The target display serves as a display on which the second application interface is located, and is used to determine the display mode of the second application interface.

In addition, in some other examples, if the electronic device 100 is in the unfolded state, the window management module may determine that a display on which the first application interface of the first application is located is a display 1 with an original size. Therefore, a display on which the second application interface is located is also the display 1 with the original size.

S205: The window management module of the electronic device 100 determines a display mode 3 of the second application interface on the target display.

In an implementation, the trigger interface for accessing the second application interface is the first application interface, and the first application to which the second application interface belongs also includes the first application interface. Therefore, the window management module may determine to display the second application interface on the target display of the first application interface, and determine the display mode 3 of the second application interface on the target display.

In an implementation, the display mode 3 includes a display position 3 and a display size 3. The display position 3 is in a display area corresponding to the target display, to be specific, the first display area corresponding to the display 1 with the modified size. Because the second application interface is displayed in the first display area, the display size 3 is less than or equal to a size of the first display area. The second application interface in the display mode 3 is not displayed beyond the first display area, and is not displayed across a central axis.

S206: The window management module of the electronic device 100 sends the display mode 3 of the second application interface to the first application.

S207: The first application of the electronic device 100 displays the second application interface in the first display area based on the display mode 3.

In an implementation, when displaying the second application interface, the first application may or may not display the first application interface. Descriptions of the second application interface are similar to the descriptions of the first application interface in FIG. 9A to FIG. 9C.

In addition to the embodiment shown in FIG. 12, in some other embodiments, alternatively, the window management module of the electronic device 100 may autonomously detect the input of accessing the second application interface of the first application by the user, and perform S204 to S206. In some examples, when the user taps the application control of the first application, the first application invokes the interface display interface of the window management module, to trigger the window management module to perform S204 to S206. When the user taps a system control, the window management module autonomously performs S204 to S206.

It can be understood that, for an example application scenario of the process shown in FIG. 12, reference may be made to FIG. 7 and related descriptions of FIG. 7.

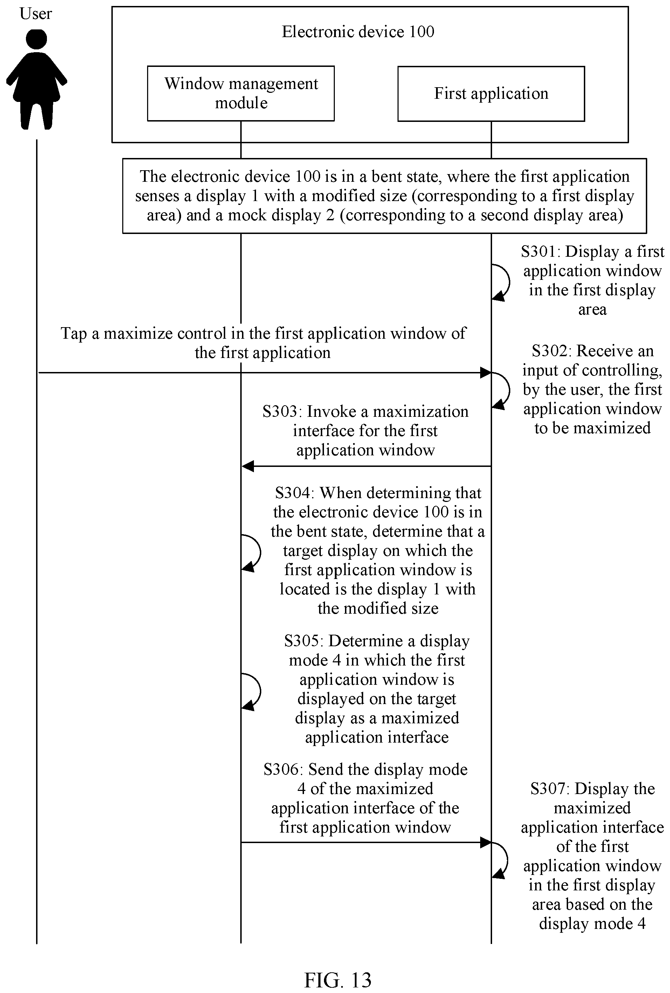

FIG. 13 is a schematic flowchart of another display method according to an embodiment of this application. The method may include but is not limited to the following steps.

S301: When an electronic device 100 is in a bent state, a first application of the electronic device 100 displays a first application window in a first display area.

In an implementation, the electronic device 100 may change from an unfolded state to the bent state before S301, for example, perform the process shown in FIG. 9A to FIG. 9C before S301. When the electronic device 100 is in the bent state, the first application may sense, from a screen management module, a display 1 with a modified size (corresponding to the first display area) and a mock display 2 (corresponding to a second display area).

In FIG. 13, an example in which the first application displays the first application window in the first display area is used for description. Therefore, the first application may sense the display 1 with the modified size on which the first application window is located.

S302: The first application of the electronic device 100 receives an input of controlling, by a user, the first application window to be maximized.

In an implementation, the first application may receive the input of controlling, by the user, the first application window to be maximized. For example, the user taps a maximize control in the first application window of the first application. The maximize control is used to control the first application window to be displayed in a maximized form.

S303: The first application of the electronic device 100 invokes a maximization interface for the first application window.

In an implementation, in response to the input in S302, the first application may invoke, for the first application window, the maximization interface provided by a window management module, to obtain a display mode in which the first application window is displayed in the maximized form. For example, the maximization interface is a window.Maximize interface.

S304: When determining that the electronic device 100 is in the bent state, the window management module of the electronic device 100 determines that a target display on which the first application window is located is the display 1 with the modified size.

In an implementation, when the first application invokes the maximization interface provided by the window management module, the window management module may determine whether the electronic device 100 is currently in the bent state. If the electronic device 100 is in the bent state, the window management module may determine whether the target display on which the first application window of the first application is located is the display 1 with the modified size or the display 2. In S301, the first application window is located in the first display area. Therefore, the target display on which the first application window is located is the display 1 with the modified size that corresponds to the first display area. The target display serves as a display on which the first application window is displayed in the maximized form, and is used to determine a display mode of a maximized application interface of the first application window.

In addition, in some other examples, if the electronic device 100 is in the unfolded state, the window management module may determine that a display on which the first application window of the first application is located is a display 1 with an original size. Therefore, a display on which the first application window is displayed in the maximized form is also the display 1 with the original size.

S305: The window management module of the electronic device 100 determines a display mode 4 in which the first application window is displayed on the target display as the maximized application interface.

In an implementation, the window management module may determine to display the maximized application interface of the first application window on the target display of the first application window, and determine the display mode 4 in which the first application window is displayed on the target display as the maximized application interface.

In an implementation, the display mode 4 includes a display position 4 and a display size 4. The display position 4 is in a display area corresponding to the target display, to be specific, the first display area corresponding to the display 1 with the modified size. The display size 4 is a size of the first application window displayed in the maximized form in the first display area, or may be understood as a maximum display size of the first application window in the first display area. Therefore, the display size 4 is less than or equal to a size of the first display area. The maximized application interface of the first application window in the display mode 4 is not displayed beyond the first display area, and is not displayed across a central axis.

S306: The window management module of the electronic device 100 sends the display mode 4 of the maximized application interface of the first application window to the first application.

S307: The first application of the electronic device 100 displays the maximized application interface of the first application window in the first display area based on the display mode 4.

In addition to the embodiment shown in FIG. 13, in some other embodiments, alternatively, the window management module of the electronic device 100 may autonomously detect the input of controlling, by the user, the first application window to be maximized, and perform S304 to S306. In some examples, when the maximize control tapped by the user is an application control of the first application, the first application invokes the maximization interface of the window management module, to trigger the window management module to perform S304 to S306. When the maximize control tapped by the user is a system control, the window management module autonomously performs S204 to S206.

For example, in an application scenario of the process shown in FIG. 13, for an example of S301, refer to FIG. 5B. The first display area is the display area 201 and the partial display area of the display area 203 that are on the upper side of the central axis of the display 194. The second display area is the display area 202 and the partial display area of the display area 203 that are on the lower side of the central axis of the display 194. The first application window is the application window 511 on the user interface 520. The input of controlling, by the user, the first application window to be maximized in S302 may be that the user taps the maximize control in the title bar 511A of the application window 511 shown in FIG. 5B. For an example of S307, refer to FIG. 5E. The maximized application interface of the first application window is the maximized application interface 551 on the user interface 550.

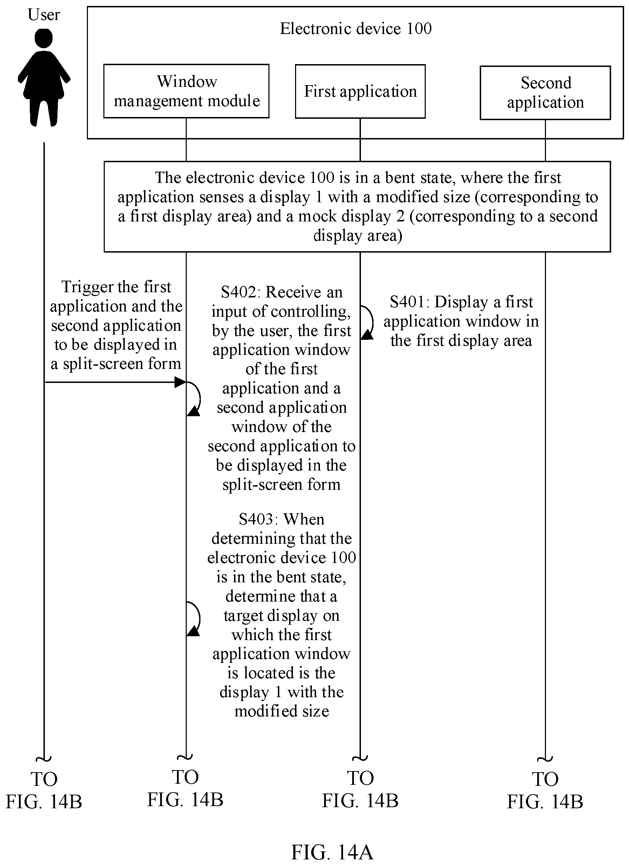

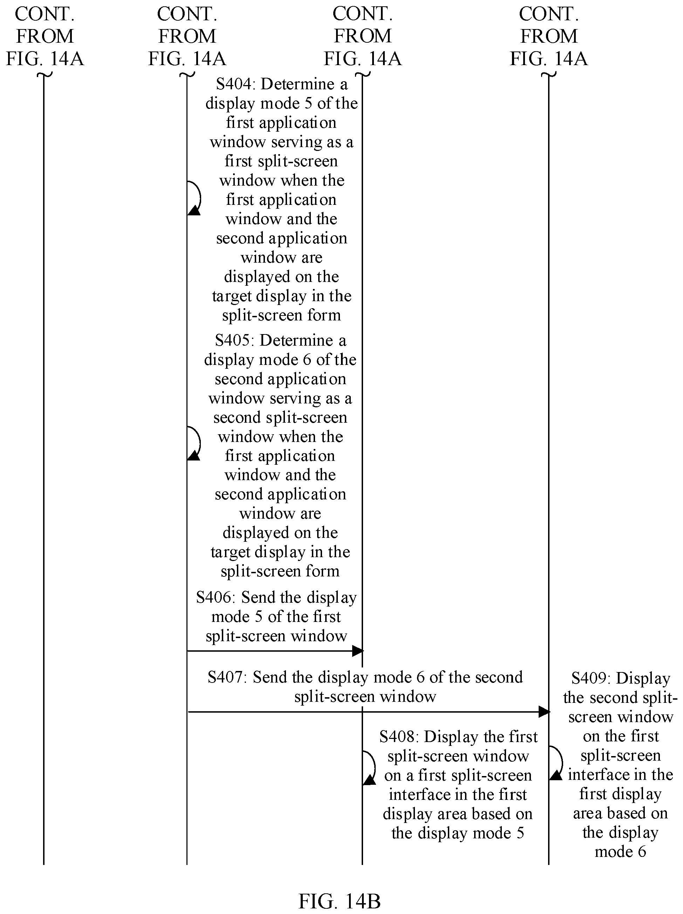

FIG. 14A and FIG. 14B are a schematic flowchart of another display method according to an embodiment of this application. The method may include but is not limited to the following steps.

S401: When an electronic device 100 is in a bent state, a first application of the electronic device 100 displays a first application window in a first display area.

In an implementation, the electronic device 100 may change from an unfolded state to the bent state before S401, for example, perform the process shown in FIG. 9A to FIG. 9C before S401. When the electronic device 100 is in the bent state, the first application may sense, from a screen management module, a display 1 with a modified size (corresponding to the first display area) and a mock display 2 (corresponding to a second display area).

In FIG. 14A and FIG. 14B, an example in which the first application displays the first application window in the first display area is used for description. Therefore, the first application may sense the display 1 with the modified size on which the first application window is located.

In an implementation, when the first application displays the first application window in the first display area, a second application may or may not display a second application window.

S402: A window management module of the electronic device 100 receives an input of controlling, by a user, the first application window of the first application and the second application window of the second application to be displayed in a split-screen form.

In an implementation, when the user triggers the first application and the second application to be displayed in the split-screen form, the window management module may receive the input of controlling, by the user, the first application window of the first application and the second application window of the second application to be displayed in the split-screen form. For example, when the electronic device 100 displays the first application window, the user may access the second application window, and tap a split-screen display control, to enable the first application window and the second application window to be displayed in the split-screen form.

S403: When determining that the electronic device 100 is in the bent state, the window management module of the electronic device 100 determines that a target display on which the first application window is located is the display 1 with the modified size.

In an implementation, when the window management module receives the input shown in S402, the window management module may determine whether the electronic device 100 is currently in the bent state. If the electronic device 100 is in the bent state, the window management module may determine whether the target display on which the first application window of the first application is located is the display 1 with the modified size or the display 2. In S401, the first application window is located in the first display area. Therefore, the target display on which the first application window is located is the display 1 with the modified size that corresponds to the first display area. The target display serves as a display on which the first application window and the second application window are displayed in the split-screen form, and is used to determine a display mode in which the first application window is displayed as a split-screen window, and a display mode in which the second application window is displayed as a split-screen window.

In addition, in some other examples, if the electronic device 100 is in the unfolded state, the window management module may determine that a display on which the first application window of the first application is located is a display 1 with an original size. Therefore, a display on which the first application window and the second application window are displayed in the split-screen form is also the display 1 with the original size.

S404: The window management module of the electronic device 100 determines a display mode 5 of the first application window serving as a first split-screen window when the first application window and the second application window are displayed on the target display in the split-screen form.

S405: The window management module of the electronic device 100 determines a display mode 6 of the second application window serving as a second split-screen window when the first application window and the second application window are displayed on the target display in the split-screen form.

A sequence of S404 and S405 is not limited.

In an implementation, the window management module may determine to display a split-screen interface of the first application window and the second application window on the target display of the first application window. The split-screen interface may include the first split-screen window and the second split-screen window. The first split-screen window is a split-screen window of the first application window, and the second split-screen window is a split-screen window of the second application window. The window management module may determine the display mode 5 of the first split-screen window and the display mode 6 of the second split-screen window.

In an implementation, the display mode 5 includes a display position 5 and a display size 5. The display mode 6 includes a display position 6 and a display size 6. The display position 5 and the display position 6 are in a display area corresponding to the target display, to be specific, the first display area corresponding to the display 1 with the modified size. Because the first split-screen window and the second split-screen window are displayed in the split-screen form in the first display area, a sum of the display size 5 and the display size 6 is less than or equal to a size of the first display area. The split-screen interface on which the first split-screen window in the display mode 5 and the second split-screen window in the display mode 6 are located is not displayed beyond the first display area, and is not displayed across a central axis. The first split-screen window in the display mode 5 and the second split-screen window in the display mode 6 do not overlap.

S406: The window management module of the electronic device 100 sends the display mode 5 of the first split-screen window to the first application.

S407: The window management module of the electronic device 100 sends the display mode 6 of the second split-screen window to the second application.

A sequence of S406 and S407 is not limited.

S408: The first application of the electronic device 100 displays the first split-screen window on a first split-screen interface in the first display area based on the display mode 5.

S409: The second application of the electronic device 100 displays the second split-screen window on the first split-screen interface in the first display area based on the display mode 6.

S408 and S409 may be simultaneously performed. The first application and the second application may jointly display the first split-screen interface in the first display area, where the first split-screen interface includes the first split-screen window in the display mode 5 and the second split-screen window in the display mode 6.

In addition to the embodiment shown in FIG. 14A and FIG. 14B, in some other embodiments, alternatively, the first application and/or the second application of the electronic device 100 may invoke a split-screen interface (for example, a window.Split interface) of the window management module, to trigger the window management module to perform S403 to S407. In some examples, when the user triggers screen splitting in an application, the first application and/or the second application invoke/invokes the split-screen interface of the window management module, to trigger the window management module to perform S403 to S407. When the user triggers screen splitting in a system, the window management module autonomously performs S403 to S407.

For example, in an application scenario of the process shown in FIG. 14A and FIG. 14B, for an example of S401, refer to FIG. 5B. The first display area is the display area 201 and the partial display area of the display area 203 that are on the upper side of the central axis of the display 194. The second display area is the display area 202 and the partial display area of the display area 203 that are on the lower side of the central axis of the display 194. The first application window is the application window 511 on the user interface 520. For an example of S409 to S409, refer to FIG. 5H. The first split-screen interface is the split-screen interface 581 on the user interface 580. The first split-screen window is the split-screen window 571 on the split-screen interface 581. The second split-screen window is the split-screen window 572 on the split-screen interface 581.

In FIG. 12 to FIG. 14B, when the electronic device 100 is in the bent state, the first application of the electronic device 100 senses the display 1 with the modified size and the display 2, and may sense the target display on which the first application interface or the first application window is located. The electronic device 100 accesses a new application interface based on the first application interface or the first application window, performs maximized display, and performs split-screen display based on a current target display, and does not perform display across a central axis. This improves display effect and facilitates a user operation, to further improve user experience, and further avoids damage to an area near the central axis, to improve product availability.

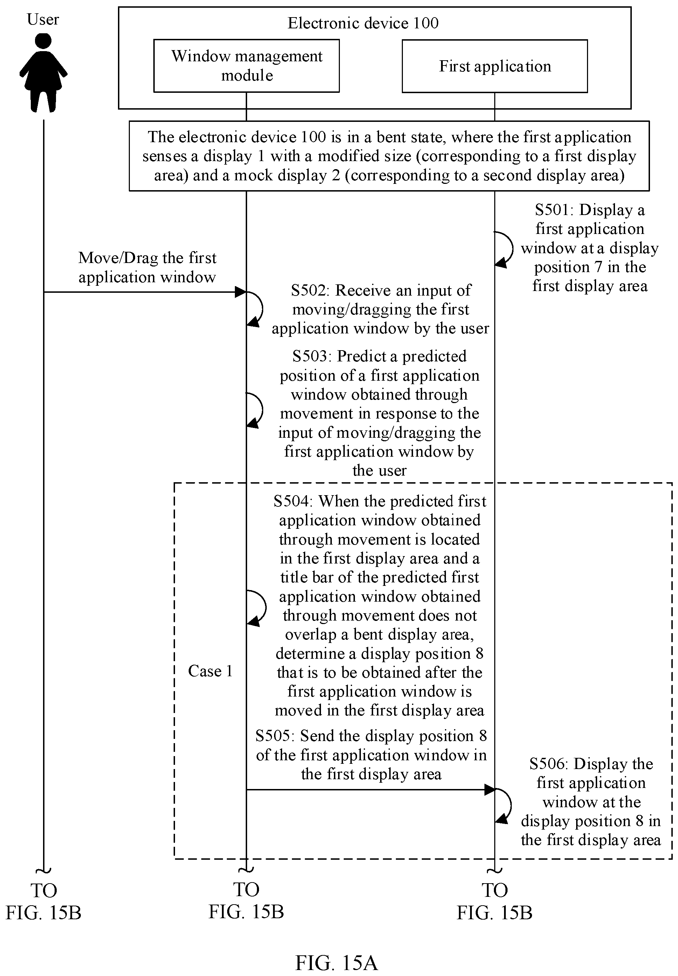

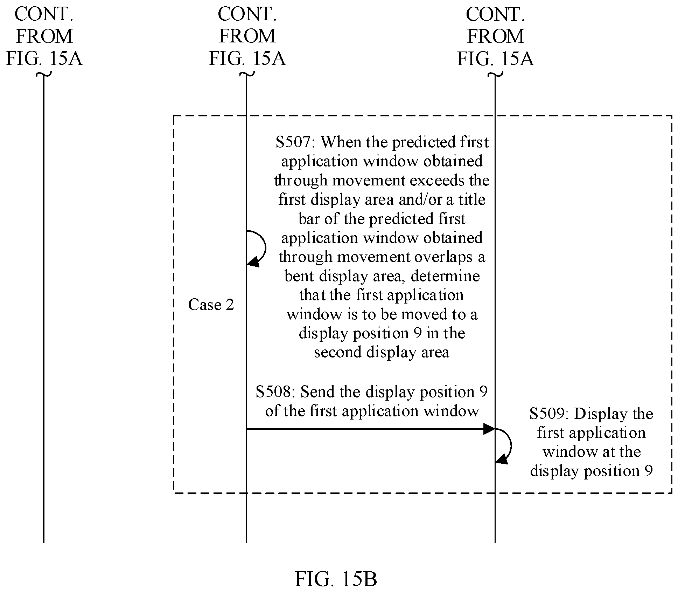

FIG. 15A and FIG. 15B are a schematic flowchart of another display method according to an embodiment of this application. In FIG. 15A and FIG. 15B, an example in which a first display area partially overlaps a bent display area and a second display area partially overlaps the bent display area is used for description. The method may include but is not limited to the following steps.

S501: When an electronic device 100 is in a bent state, a first application of the electronic device 100 displays a first application window at a display position 7 in the first display area.

In an implementation, the electronic device 100 may change from an unfolded state to the bent state before S501, for example, perform the process shown in FIG. 9A to FIG. 9C before S501. When the electronic device 100 is in the bent state, the first application may sense, from a screen management module, a display 1 with a modified size (corresponding to the first display area) and a mock display 2 (corresponding to the second display area).

In FIG. 15A and FIG. 15B, an example in which the first application displays the first application window at the display position 7 in the first display area is used for description. Therefore, the first application may sense the display 1 with the modified size on which the first application window is located.

S502: A window management module of the electronic device 100 receives an input of moving/drawing the first application window by a user.

In some examples, the window management module may receive the input of moving/dragging the first application window by the user, for example, receive a touch-and-slide operation performed on the first application window, where the touch-and-slide operation is used to move/drag the first application window.

S503: The window management module of the electronic device 100 predicts a predicted position of a first application window obtained through movement in response to the input of moving/dragging the first application window by the user.

In an implementation, the window management module may first predict a position of the first application window obtained through movement in response to the input shown in S502, where the position may be referred to as the predicted position. The window management module may determine whether all content of the first application window at the predicted position is located in the first display area, and whether a title bar of the first application window at the predicted position overlaps the bent display area; and choose, based on a determining result, whether to determine that a display position of the first application window obtained through movement is the predicted position. This may also be understood as determining whether to additionally modify the display position of the first application window obtained through movement. A specific determining result may include the following case 1 and case 2. The title bar is key content of the first application window.

The case 1 may include S504 to S506.

S504: When the predicted first application window obtained through movement is located in the first display area and the title bar of the predicted first application window obtained through movement does not overlap the bent display area, the window management module of the electronic device 100 determines a display position 8 that is to be obtained after the first application window is moved in the first display area.

In an implementation, when the predicted first application window obtained through movement is located in the first display area (in other words, all of the content of the first application window at the predicted position is located in the first display area) and the title bar of the predicted first application window obtained through movement does not overlap the bent display area (in other words, the title bar of the first application window at the predicted position does not overlap the bent display area), it is determined that the display position 8 of the first application window obtained through movement is the predicted position. This may be understood as that the display position obtained through movement is not additionally modified. That all of the content of the first application window at the predicted position is located in the first display area indicates that the first application window is to be moved in the first display area in response to the input shown in S502.

S505: The window management module of the electronic device 100 sends the display position 8 of the first application window in the first display area to the first application.

S506: The first application of the electronic device 100 displays the first application window at the display position 8 in the first display area.

In some examples, as shown in FIG. 8A, the first display area is the display area 201 and the partial display area of the display area 203 on the upper side of the central axis of the display 194, the second display area is the display area 202 and the partial display area of the display area 203 on the lower side of the central axis of the display 194, and the bent display area is the display area 203. The first application window is the application window 511. The display position 7 in S501 is the position 1 shown in FIG. 8A. The input in S502 includes moving/dragging the application window 511 toward the lower side of the central axis. The display position 8 in S504 is, for example, the position 2 shown in FIG. 8A. An application window 511 at the display position 8 is still displayed in the first display area without crossing the central axis. In addition, a title bar 511A of the application window 511 at the display position 8 is displayed in the display area 201 without overlapping the bent display area (namely, the display area 203).

In addition, in some other examples, in S501, the first application window may alternatively be displayed in the second display area, and the first display area in S501 to S506 may alternatively be replaced with the second display area. In this case, as shown in FIG. 8B, the display position 7 in S501 may alternatively be in the display area 202 in the second display area, and all content of an application window 511 at the display position 7 is located in the display area 202. The input in S502 includes moving/dragging the application window 511 toward the upper side of the central axis. The display position 8 in S504 is, for example, the position 3 shown in FIG. 8B. An application window 511 at the display position 8 is still displayed in the display area 202 in the second display area on the lower side of the central axis without crossing the central axis. In addition, a title bar 511A of the application window 511 at the display position 8 is displayed in the display area 202 without overlapping the bent display area (namely, the display area 203).

The case 2 may include S507 to S509.

S507: When the predicted first application window obtained through movement exceeds the first display area and/or the title bar of the predicted first application window obtained through movement overlaps the bent display area, the window management module of the electronic device 100 determines that the first application window is to be moved to a display position 9 in the second display area.

In an implementation, when the predicted first application window obtained through movement exceeds the first display area (in other words, the first application window at the predicted position exceeds the first display area) and/or the title bar of the predicted first application window obtained through movement overlaps the bent display area (in other words, the title bar of the first application window at the predicted position overlaps the bent display area), the display position 9 of the first application window obtained through movement is determined, where the display position 9 is not the predicted position. This may be understood as that the display position obtained through movement is additionally modified. In some examples, that the first application window at the predicted position exceeds the first display area may include: A part of content of the first application window at the predicted position is located in the first display area, and the other part of content is located in the second display area. In some other examples, that the first application window at the predicted position exceeds the first display area may include: All content of the first application window at the predicted position is located in the second display area.

In an implementation, all content of a first application window at the display position 9 is located in the second display area. A title bar of the first application window at the display position 9 does not overlap the bent display area.

S508: The window management module of the electronic device 100 sends the display position 9 of the first application window to the first application.

S509: The first application of the electronic device 100 displays the first application window at the display position 9.

In an implementation, in the case 2, a display area of the first application window changes, and therefore a display on which the first application window is located also changes. The window management module may not only send the position 9 of the first application window to the first application, but also send, to the first application, information about a display on which the first application window at the display position 9 is located (which may also be understood as a changed display), for example, send, to the first application through a display.onDisplayChange callback method, the information about the display on which the first application window at the display position 9 is located. Because the display position 9 is in the second display area, the window management module may send, to the first application, information about the display 2 corresponding to the second display area. Information about a display may include but is not limited to a name and/or an identifier (identity document, id) of the display and a size of the display. It can be understood that, when a display on which an application interface is located changes, the window management module of the electronic device 100 may return information about a changed display to an application in a timely manner, to ensure correctness and compatibility of a display sensed by the application.

In some examples, as shown in FIG. 8B, the first display area is the display area 201 and the partial display area of the display area 203 on the upper side of the central axis of the display 194, the second display area is the display area 202 and the partial display area of the display area 203 on the lower side of the central axis of the display 194, and the bent display area is the display area 203. The first application window is the application window 511. The display position 7 in S501 is the position 2 shown in FIG. 8B. The input in S502 includes moving/dragging the application window 511 toward the lower side of the central axis. It is assumed that, a part of content of an application window 511, at the predicted position, that is obtained through movement in response to the input in S502 exceeds the first display area, and is located in the second display area on the lower side of the central axis. A title bar 511A of the application window 511 at the predicted position does not overlap the bent area, and is still displayed in the display area 201. Therefore, the display position 9 in S504 is not the predicted position, and the display position 9 is the position 3 shown in FIG. 8B. All content of an application window 511 at the display position 9 is located in the display area 202 in the second display area, and a title bar 511A of the application window 511 at the display position 9 does not overlap the bent display area.

In addition, in some other examples, in S501, the first application window may alternatively be displayed in the second display area, and the first display area in S501 to S509 may alternatively be replaced with the second display area. In this case, as shown in FIG. 8B, the display position 7 in S501 may alternatively be the position 3 in the second display area, and all content of an application window 511 at the display position 3 is located in the display area 202. The input in S502 includes moving/dragging the application window 511 toward the upper side of the central axis. It is assumed that, a title bar 511A of an application window 511, at the predicted position, that is obtained through movement in response to the input in S502 overlaps the bent display area (namely, the display area 203), and a part or all of non-title-bar content of the application window 511 at the predicted position is located in the display area 202. A part of content of the application window 511 at the predicted position may exceed the second display area. For example, the title bar 511A overlaps the partial display area, located on the upper side of the central axis, of the display area 203. Alternatively, all content of the application window 511 at the predicted position may be located in the first display area. For example, the title bar 511A overlaps the partial display area, located on the lower side of the central axis, of the display area 203. Therefore, the display position 9 in S504 is not the predicted position, and the display position 9 is the position 2 shown in FIG. 8B. An application window 511 at the display position 8 is displayed in the first display area on the upper side of the central axis without crossing the central axis. In addition, a title bar 511A of the application window 511 at the display position 8 is displayed in the display area 201 in the first display area without overlapping the bent display area (namely, the display area 203).

In addition to the embodiment shown in FIG. 15A and FIG. 15B, in some other embodiments, the window management module may alternatively determine only whether a title bar of the first application window at the predicted position overlaps the bent display area; and choose, based on a determining result, whether to determine that a display position of the first application window obtained through movement is the predicted position. When the title bar of the predicted first application window obtained through movement does not overlap the bent display area, the window management module of the electronic device 100 may directly determine that the display position of the first application window obtained through movement is the predicted position. When the title bar of the predicted first application window obtained through movement overlaps the bent display area, the window management module of the electronic device 100 may determine that the first application window is to be moved to a display position 10 in the second display area. All content of a first application window at the display position 10 is located in the second display area, and a title bar of the first application window at the display position 10 does not overlap the bent display area.

In some examples, as shown in FIG. 8C, the first display area is the display area 201 and the partial display area of the display area 203 on the upper side of the central axis of the display 194, the second display area is the display area 202 and the partial display area of the display area 203 on the lower side of the central axis of the display 194, and the bent display area is the display area 203. The first application window is the application window 511. The application window 511 displayed before movement is at the position 2 shown in FIG. 8C. The window management module may receive an input of moving/dragging, by the user, the application window 511 toward the lower side of the central axis. If a predicted position of an application window 511 obtained through movement in response to the input is the position 4 shown in FIG. 8C, although the application window 511 at the position 4 exceeds the first display area and is located in the second display area, a title bar 511A of the application window 511 at the position 4 does not overlap the bent display area. Therefore, it can be directly determined that a display position of the application window 511 obtained through movement is the predicted position (namely, the position 4). If a title bar 511A of a predicted application window 511 obtained through movement in response to the input overlaps the bent display area, it is determined that a display position of an application window 511 obtained through movement is located in the display area 202 in the second display area, for example, at the position 3 shown in FIG. 8B.

In addition to the embodiment shown in FIG. 15A and FIG. 15B, in some other embodiments, the first display area does not overlap the bent display area, and the second display area does not overlap the bent display area. In this case, the window management module may determine only whether all content of the first application window at the predicted position is located in the first display area; and choose, based on a determining result, whether to determine that a display position of the first application window obtained through movement is the predicted position. When all of the content of the first application window at the predicted position is located in the first display area, the window management module may directly determine that the display position of the first application window obtained through movement is the predicted position. When a part or all of the content of the first application window at the predicted position exceeds the first display area, the window management module may determine that the first application window is to be moved to a display position 11 in the second display area. All content of a first application window at the display position 11 is located in the second display area.

In the foregoing embodiments, the title bar is used as an example for description. In some other embodiments, other key content on an application interface may alternatively be used. Key content on an application interface is not limited in embodiments of this application.

In addition to the embodiments shown in FIG. 12 to FIG. 15B, during specific implementation, when the electronic device 100 is in the bent state, the electronic device 100 may alternatively receive another user input related to the first display area, for example, a user input related to the first application interface displayed in the first display area, and perform a corresponding operation in the current first display area in response to the user input. Specific content of the operation performed in the current first display area is not limited in embodiments of this application.

It can be understood that, in embodiments of this application, when the electronic device 100 is in the bent state, display effect of displaying an application interface in a display area on one side of the central axis is provided for the user as much as possible. In this way, the user can experience the first display area and the second display area as two displays when using the electronic device 100 in the bent state. To be specific, the electronic device 100 with one display provides the user with experience of two displays, to provide brand new experience for the user.

An embodiment of this application provides an electronic device, including a transceiver, a processor, and a memory. The memory is configured to store a computer program. The processor invokes the computer program to perform the steps performed by the electronic device 100 in the foregoing method embodiments.

An embodiment of this application provides a computer storage medium. The computer storage medium stores a computer program. When the computer program is executed by a processor, the steps performed by the electronic device 100 in the foregoing method embodiments may be implemented.

An embodiment of this application provides a computer program product, including a computing program. When the computer program runs on a computer, the computer is enabled to implement the steps performed by the electronic device 100 in the foregoing method embodiments.

An embodiment of this application provides a chip system. The chip system includes a processing circuit and an interface circuit. The interface circuit is configured to receive code instructions and transmit the code instructions to the processing circuit. The processing circuit is configured to run the code instructions, to enable the chip system to perform the steps performed by the electronic device 100 in the foregoing method embodiments. The chip system may be a single chip or a chip module including a plurality of chips.

In conclusion, the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A display method, applied to an electronic device, wherein the electronic device comprises a foldable display, the display comprises a first display area and a second display area, the first display area and the second display area are respectively located on different sides of a central axis of the display, and the method comprises:
when the electronic device is in an unfolded state, displaying a first application interface in a third display area of the display, wherein the third display area comprises two display areas that are respectively located on different sides of the central axis; and
displaying the first application interface in the first display area or the second display area in response to the electronic device changing from the unfolded state to a bent state.

2. The method according to claim 1, wherein when the electronic device is in the unfolded state, the first display area and the second display area are on a same plane; when the electronic device is in the bent state, an angle between a plane on which the first display area is located and a plane on which the second display area is located is less than 180 degrees; and when the electronic device is in the bent state, an intersection line between the plane on which the first display area is located and the plane on which the second display area is located is the central axis, and the first display area does not overlap the second display area.

3. The method according to claim 1 or 2, wherein the first application interface is a first application window displayed in a window form in a first application; or
the first application interface is a maximized application interface displayed in a maximized form in the first application; or
the first application interface is a first split-screen interface, the first split-screen interface comprises a plurality of split-screen windows, and the plurality of split-screen windows on the first split-screen interface comprise a split-screen window of the first application.

4. The method according to any one of claims 1 to 3, wherein the display further comprises a fourth display area, the fourth display area is located in a bending part of the display, the fourth display area comprises a fifth display area and a sixth display area that are respectively located on different sides of the central axis, an intersection line between the fifth display area and the sixth display area is the central axis, the fourth display area does not overlap the first display area, and the fourth display area does not overlap the second display area.

5. The method according to any one of claims 1 to 3, wherein the display further comprises a fourth display area, the fourth display area is located in a bending part of the display, the fourth display area comprises a fifth display area and a sixth display area that are respectively located on different sides of the central axis, an intersection line of the fifth display area and the sixth display area is the central axis, the fifth display area partially overlaps the first display area, and the sixth display area partially overlaps the second display area.

6. The method according to claim 5, wherein displaying the first application interface in the first display area or the second display area comprises:
displaying the first application interface in the first display area, wherein the first display area comprises a seventh display area and an eighth display area, the seventh display area does not overlap the fifth display area, the eighth display area overlaps the fifth display area, and a title bar of the first application interface is displayed in the seventh display area.

7. The method according to claim 4, wherein the first application interface is the first application window displayed in the window form in the first application, and the method further comprises:
when the electronic device is in the bent state and displays the first application window in the first display area, receiving a first input of moving the first application window by a user; and
when all content of the predicted first application window obtained through movement in response to the first input is located in the first display area, displaying the first application window obtained through movement at a first display position in the first display area, wherein the first display position is a display position of the predicted first application window obtained through movement in response to the first input; or
when the predicted first application window obtained through movement in response to the first input exceeds the first display area, displaying the first application window obtained through movement in the second display area.

8. The method according to claim 5 or 6, wherein the first application interface is the first application window displayed in the window form in the first application, and the method further comprises:
when the electronic device is in the bent state and displays the first application window in the first display area, receiving a second input of moving the first application window by a user; and
when the predicted first application window obtained through movement in response to the second input is located in the first display area and a title bar of the predicted first application window obtained through movement in response to the second input does not overlap the fourth display area, displaying the first application window obtained through movement at a second display position in the first display area, wherein the second display position is a display position of the predicted first application window obtained through movement in response to the second input; or
when the predicted first application window obtained through movement in response to the second input exceeds the first display area and/or a title bar of the predicted first application window obtained through movement in response to the second input overlaps the fourth display area, displaying the first application window obtained through movement in the second display area.

9. The method according to claim 5 or 6, wherein the first application interface is the first application window displayed in the window form in the first application, and the method further comprises:
when the electronic device is in the bent state and displays the first application window in the first display area, receiving a third input of moving the first application window by a user; and
when a title bar of the predicted first application window obtained through movement in response to the third input does not overlap the fourth display area, displaying the first application window obtained through movement at a third display position in the first display area, wherein the third display position is a display position of the predicted first application window obtained through movement in response to the third input; or
when a title bar of the predicted first application window obtained through movement in response to the third input overlaps the fourth display area, displaying the first application window obtained through movement in the second display area.

10. The method according to any one of claims 2 to 9, wherein the method further comprises:
when the electronic device is in the bent state and displays the first application interface in the first display area, receiving a fourth input of accessing a second application interface by the user; and
displaying the second application interface in the first display area in response to the fourth input.

11. The method according to any one of claims 2 to 9, wherein the first application interface is the first application window displayed in the window form in the first application, or the first application interface is a first maximized application interface displayed in a maximized form in the first application, and the method further comprises:
when the electronic device is in the bent state and displays the first application interface in the first display area, receiving a fifth input of controlling, by the user, the first application interface to be displayed in a split-screen form; and
displaying a second split-screen interface in the first display area in response to the fifth input, wherein the second split-screen interface comprises a plurality of split-screen windows, and the plurality of split-screen windows on the second split-screen interface comprise a split-screen window obtained by displaying the first application interface in the split-screen form.

12. The method according to any one of claims 2 to 9, wherein the first application interface is the first application window displayed in the window form in the first application; or the first application interface is the first split-screen interface, the first split-screen interface comprises the plurality of split-screen windows, and the plurality of split-screen windows on the first split-screen interface comprise the split-screen window of the first application; and the method further comprises:
when the electronic device is in the bent state and displays the first application interface in the first display area, receiving a sixth input of controlling, by the user, the first application window or the split-screen window of the first application to be displayed in a maximized form; and
displaying a second maximized application interface of the first application in the first display area in response to the sixth input, wherein the second maximized application interface is obtained by displaying the first application window or the split-screen window of the first application in the maximized form.

13. The method according to any one of claims 1 to 12, wherein the method further comprises:
when the electronic device is in the bent state, displaying a desktop of the electronic device in the first display area and the second display area, wherein any control on the desktop is located in a display area on one side of the central axis.

14. The method according to any one of claims 1 to 13, wherein displaying the first application interface in the first display area or the second display area comprises:
when the first application interface has a historical display area in the bent state, displaying the first application interface in the historical display area, wherein the historical display area is the first display area or the second display area; or
when the first application interface has no historical display area in the bent state, displaying the first application interface in a preset default display area, wherein the default display area is the first display area or the second display area.

15. The method according to any one of claims 1 to 13, wherein displaying the first application interface in the third display area of the display comprises:
displaying the title bar of the first application interface in a ninth display area in the third display area; and
displaying the first application interface in the first display area or the second display area comprises:
when the ninth display area is located on a first side of the central axis, displaying the first application interface in the first display area on the first side of the central axis; or
when the ninth display area is located on a second side of the central axis, displaying the first application interface in the second display area on the second side of the central axis.

16. The method according to any one of claims 1 to 15, wherein when the electronic device is in the unfolded state, a first display maintained by the electronic device is used for the electronic device to display an application interface, a size of the first display is the same as a size of the display, and the first display is a software display corresponding to the display; and
when the electronic device is in the bent state, a second display and a third display that are maintained by the electronic device are used for the electronic device to display an application interface, a sum of a size of the second display and a size of the third display is less than or equal to a size of the display, the second display and the third display are software displays corresponding to the display, the second display corresponds to the first display area, and the third display corresponds to the second display area.

17. An electronic device, comprising a foldable display, a processor, and a memory, wherein the memory is configured to store a computer program, and the processor invokes the computer program to perform the method according to any one of claims 1 to 16.

18. A computer storage medium, wherein the computer storage medium stores a computer program, and when the computer program is executed by a processor, the method according to any one of claims 1 to 16 is implemented.

19. A computer program product, wherein when the computer program product runs on a processor, the method according to any one of claims 1 to 16 is implemented.

20. A chip system, comprising a processing circuit and an interface circuit, wherein the interface circuit is configured to receive code instructions and transmit the code instructions to the processing circuit, and the processing circuit is configured to run the code instructions to perform the method according to any one of claims 1 to 16.
